# EUROPÄISCHE PATENTSCHRIFT

(11) **EP 3 574 642 B1**
(45) Veröffentlichungstag und Bekanntmachung des Hinweises auf die Patenterteilung: **27.03.2024**
(21) Anmeldenummer: 18706192.4
(22) Anmeldetag: 29.01.2018
(51) Int. Cl.: H04N 23/51, H04N 23/54, H04N 23/55, H04N 23/68

(54) **MODULARES OPTISCHES AUFNAHMESYSTEM**
MODULAR OPTICAL RECORDING SYSTEM
SYSTÈME DE PRISE D'ENREGISTREMENT OPTIQUE MODULAIRE

(30) Priorität: 27.01.2017 DE 102017000889
(43) Veröffentlichungstag der Anmeldung: 04.12.2019
(73) Patentinhaber: Dream CHIP Technologies GmbH, 30827 Garbsen (DE)
(72) Erfinder: Overmann, Christian, 26123 Oldenburg (DE)
(74) Vertreter: Kröncke, Rolf
(86) Internationale Anmeldenummer: PCT/EP2018/052174
(87) Internationale Veröffentlichungsnummer: WO 2018/138364

(56) Entgegenhaltungen:
- EP-A1- 0 980 181
- EP-A1- 2 485 474
- JP-A- H01 258 565
- JP-A- 2011 004 139
- JP-B2- 3 222 174
- US-A- 5 005 948
- US-A1- 2009 303 379
- US-B1- 6 375 369

## Beschreibung

Die Erfindung betrifft einen Systemaufbau zur Bildaufnahme, -Stabilisierung und - korrektur, mit einem optischen Beobachtungsgerät, das im Bereich eines Gehäusekonzepts anzuordnen ist.

### Hintergrund der Erfindung

Seit der Markteinführung von Action-Cams und bedingt durch eine schnell voranschreitende Entwicklung digitaler Bildsensoren, führt der Wunsch nach qualitativ hochwertigeren Aufnahmen von bewegten Bildern aus immer neuen Blickwinkeln bei sehr eingeschränkten Platzverhältnissen und schnellen Bewegungsabläufen zu einem deutlichen Miniaturisierungsbedarf sowohl der Kamera- als auch der stabilisierenden mechanischen Systeme.

Darüber hinaus hat die stetig wachsende internationale Vernetzung und Kommunikation über soziale Medien und das Internet zur Folge, dass so aufgenommene Bilder und Videos zunehmend unbearbeitet weiterverwendet werden, wodurch die Nachfrage nach einer Aufbereitung der Bilddaten während der Aufnahme stark zunimmt. Da gering verwackelte Aufnahmen das Qualitätsempfinden stark negativ beeinträchtigen stabilisieren die meisten Kamerasysteme die aufgenommenen Bilddaten bereits im Rahmen dieser Aufbereitung intern vollelektronisch. Dies hat jedoch den Nachteil, dass ein Teil der maximal möglichen Auflösung nicht zur Ausgabe genutzt werden kann. Aus Platz- und Kostengründen findet zusätzlich eine interne Komprimierung der Bilddaten statt, bevor sie entweder ausgegeben oder gespeichert werden.

Dem gegenüber stehen mechanische Korrektursysteme, die zwar in der Lage sind die vollständig zur Verfügung stehende Oberfläche des Bildsensors auszunutzen, allerdings einerseits nur Verwackelungen resultierend aus einer Handbewegung ausgleichen oder andererseits nur Schräglagen stabilisiert werden können und zudem das Gesamtsystem bestehend aus Aufnahmegerät und Objektiv weder in ausreichendem Maße miniaturisierbar ist noch eine Stabilisierung in Echtzeit ermöglicht. In Bezug auf die zuvor beschriebenen neuen Anforderungen, insbesondere resultierend aus einem Betrieb in Outdoor-Umgebungen, müssen diese Ansätze jedoch als ungeeignet eingestuft werden, da gleichermaßen weder vollständige Rotationen noch große Schräglagen und Verwackelungen durch ein System stabilisiert werden können. Darüber hinaus sind insbesondere die Systeme zum Ausgleich von Schräglagen des gesamten Kamerasystems (sog. Steady-Cam Systeme) im Allgemeinen sehr groß ausgeführt und überdies unzureichend geschützt vor äußeren Einflüssen.

### Stand der Technik

Im Folgenden wird ein kurzer Überblick über den aktuellen Stand der Technik gegeben sowie die Nachteile technischer Lösungen und dazu eingereichter Patente und Offenlegungen in Bezug auf die anschließend beschriebene Erfindung erläutert.

Zusammenfassend kann gesagt werden, dass heutige Systeme zur Stabilisierung und Korrektur aufgenommener Foto und Videodaten allgemein in zwei Gruppen eingeteilt werden können.

Dabei gibt es Systeme, welche Verwackelungen und ungewünschte Rotationen mit einem digitalen Verfahren korrigieren. Dazu werden die jeweilige Schräglage und die Verwackelung des Gehäuses oder der bildgebenden Einheit mit Hilfe elektronischer Sensoren wie Gyros, Beschleunigungs- und Magnetsensoren, o.Ä. aufgezeichnet. Die so gewonnenen Sensordaten werden dann mit Hilfe einer zentralen Berechnungseinheit verarbeitet und eine stabilisierende, der Verwackelung und Schräglage entgegenwirkende, Korrektur bestimmt. Diese Korrektur wird dann auf die aufgenommenen Bild- und Videodaten digital angewandt, d.h. das Material wird intern gedreht, bewegt und ausgegeben ohne eine mechanische Korrektur vorzunehmen. Großer Nachteil dieses Verfahrens ist eine oft sehr starke Beschneidung der aufgezeichneten Bilddaten, was dazu führt, dass die im Verhältnis zur nutzbaren Sensorfläche ausgegebene Formatgröße stark eingeschränkt ist. Aus diesem Grund eignet sich dieses Verfahren nur für sehr geringe Korrekturen, wie Vibrationen und geringe Verwackelungen resultierend aus einer Handbedienung der Kamera. In Bezug auf die hiermit eingereichte Erfindung sind diese Systeme mit einer digitalen Korrektur jedoch nur der Vollständigkeit halber mit aufgeführt, da die Funktionsweise maßgeblich auf einem sensorgestützten mechanischen Korrekturverfahren basiert, wie im Folgenden näher betrachtet.

Unerwünschte Rotationen und Verwackelungen können außerdem korrigiert werden, indem mit Hilfe eines elektromechanischen Systems dafür gesorgt wird, dass die Seitenränder der bildgebenden Einheit jeweils parallel, im theoretischen Idealfall kongruent mit den entsprechenden Rändern des projizierten bzw. aufgenommenen Bildes sind und dadurch vollständig beleuchtet werden.

Im Rahmen der Recherche zum Stand der Technik wurden folgende Veröffentlichungen als relevant analysiert:
1 .US20050001906A1 , 2.US20060098967A1 , 3.US20140347506A1 , 4.US20060098967A1 , 5.WO2009060624, 6.US4615590A, 7. US20120218428A1 , 8.US5825545A, 9.JP2004295027A, 10.JP2004226956A, 1 1 .US20100215353A1 , 12.WO2012153281 A1 , 13.JPS6399680A, 14.JP2013009107A, 15.JPH09261524A, 16.JPH0630327A, 17.US20090245774A1 , 18.JP2010128386A, 19.JP2008065163A, 20.JP2007241254A, 21 .US20020080242A1 , 2.DE102004045430A1 , 23.US20060284495A1 , 24.US20090251551 A1 , 25.DE19942900A1 , 26.US20150036047A1 , 27.JP2006337680A, 28.US20050276589A1 , 29.US2012024981 A1 , 30.US2003067544A1 , 31 . US20120249814A1 , 32.US201 1050921 A1 , 33.US2006067660A1 , 34.US20060064884A1 , 35.US20050270379A1 , 36.JP20081 16836A, 37.US2010309323A1 , 38.US220100157074A1 , 39.US2003076421 A1 , 40.JP2007096493A, 41 .JP20071 10449A, 42.JP200900301 OA, 43.US20030077082A1 , 44.US20060104633A1 , 45.DE102013004849A1 , 46.US20160028844A1 , 47.JP57099874A, 48.JP2012103376A, 49.JP2012103373A, 50.WO2010044197A1 , 51 JP20081 16836A, 52.JP20101 14874A

Wie in den Offenlegungen 1-10 beschrieben kann eine elektromechanische Korrektur von Rotationen und Verwackelungen erreicht werden, indem durch bewegte Linsen(gruppen), Prismen oder Spiegel eine Veränderung des Strahlengangs herbeigeführt und so die Schräglage oder Verwackelung ausgeglichen wird. In einigen Fällen wird (zusätzlich) auch die bildaufnehmende Einheit selbst bewegt (vgl. Offenlegungen Nr. 9, 1 1 -36, 46, 48 und 51).

Die meisten Kameras mit diesen Korrektursystemen verwenden zur Bewegung der optischen Elemente oder des Bildsensors Spulen in Kombination mit Permanentmagneten oder Piezoaktoren, wie in den Offenlegungen Nr. 16-19, 22, 27-30, 32, 37, 46, 48-50 und 52 exemplarisch beschrieben. Der Einsatz solcher Aktoren erlaubt insbesondere eine präzise translatorische Ausrichtung von Elementen in einer Ebene, wenngleich auch nur in sehr begrenztem Umfang. Darüber hinaus kann die Kombination von reinen axialen Translationen, unter Voraussetzung einer exakten Steuerung und Synchronisation sowie spielfreier Lagerung, präzise ebene Rotationen durchführen. Da die geometrische Ausprägung und Platzierung der Bewegung induzierenden Spulen in den meisten Fällen ebenfalls in einer Ebene erfolgt, können hiermit auch nur planare Translationen und Rotationen mit begrenztem Weg von deutlich unter 360° durchgeführt werden.

Ein alternativer Ansatz zur Bewegung der optischen Elemente oder des Bildsensors wird in den Offenlegungen Nr.26 und 47 beschrieben. Hierbei wird die Korrekturrotation über ein Getriebe von einem Motor ausgeführt. Dieser Aufbau ist nachteilig, weil durch die Verwendung eines Getriebes zur Übertragung der Rotation des Motors auf den Bildsensor zusätzliches Spiel ins kinematische System gebracht wird. Ein Getriebe ist aufgrund des zugrundeliegenden physikalischen Wirkprinzips grundsätzlich spielbehaftet und daher als unpräzise und anfällig gegen Vibrationen und Erschütterungen einzustufen. Dies führt dazu, dass die ermittelte und angefahrene Position des Bildsensors nach einer Korrektur selbst im Stillstand noch immer Spiel aufweist und somit beweglich ist. Weder elektronisch noch sensorisch kann hier Abhilfe geschafft werden, da das Spiel zu einem dauerhaften Ausgleichversuch der Elektronik führt, was sowohl ein erhöhtes Grundrauschen der Positionssensordaten bedeutet und zusätzlich einen steigenden Stromverbrauch zur Folge hat. Es kann keine exakte Position dauerhaft gehalten werden. Dies ist der Grund für mögliche Unscharfe und schlechte Abbildungsqualität, insbesondere in vibrationsbehafteten Umgebungen. Darüber hinaus ist im Betrieb mit Verzögerungen bei einem Richtungswechsel zu rechnen, da zunächst das Spiel bis zum Kontakt der gegenüberliegenden Gewindeflanken überwunden werden muss, bevor das Getriebe die Bewegung in die entgegengesetzte Richtung übertragen kann. Aufgrund der reibungsbehafteten Funktionsweise eines Getriebes ist hier zusätzlich mit Abnutzung in Form von Abrasion zu rechnen, so dass eine Zunahme der Probleme zu erwarten ist. Zuletzt bedeutet der beschriebene mechanische Aufbau eine Vergrößerung der gesamten Systemgröße.

Darüber hinaus weisen viele Systeme keine exakte oder langlebige Mechanik auf. Stellvertretend hierfür können die Offenlegungen Nr. 14, 20, 27, 36, 37 und 49-51 herangezogen werden. Dabei wird eine im optischen Strahlengang liegende Baugruppe über starre Gleitflächen gegen einen festen Anschlag bzw. das Gehäuse gelagert. Da eine Gleitlagerung jedoch aufgrund des physikalischen Wirkprinzips grundsätzlich ebenfalls spielbehaftet ist, können Bewegungen nicht exakt geführt werden. Dieses Spiel führt bereits bei geringen Vibrationen zu einem steigenden Präzisionsverlust durch erhöhten Verschleiß und Abrasion. Zusammengefasst kann gesagt werden, dass eine Gleitlagerung, trotz präziser Mechanik, eine ungenaue Basis mit großer Vibrationsanfälligkeit darstellt, so dass mit einer dauerhaften Kompensationsarbeit der Sensorik und Mechanik zu rechnen ist, was sowohl einen Präzisionsverlust als auch erhöhten Stromverbrauch zur Folge hat.

Um dem entgegenzuwirken, werden verschiedene Ansätze verfolgt. Eine der theoretisch besten Lösungen stellt die Vorspannung des mechanischen Aufbaus in Kombination mit der Verwendung von Wälzlagern dar. Aufgrund der immer weiter voranschreitenden Miniaturisierung von Kamerasystemen wird in der Praxis jedoch auf die Verwendung dieser Elemente in den weitaus häufigsten Fällen verzichtet, wie in den Offenlegungen Nr. 1 1 -16, 18, 20-27, 31 , 39 und 46-52 auffällt. Wenige Erfindungen haben dieses Problem erkannt und Elemente zur Vorspannung integriert, jedoch so stark verkleinert oder lokal begrenzt ausgeführt, dass eine optimale technische Wirkung nicht erzielt wird. Für das kinematische bzw. mechanische System ist dies als nachteilig anzusehen.

Exemplarisch für eine solche Vorspannung über einzelne punktuell wirkende Federn können dazu die Offenlegungen Nr. 29, 32 und 38 herangezogen werden. Diese technischen Umsetzungen führen dazu, dass die Sensorebene nicht gleichmäßig vorgespannt wird, was durch Fertigungstoleranzen zusätzlich verstärkt wird. Darüber hinaus verwenden die in den Offenlegungen Nr. 23, 29 und 31 beschriebenen Erfindungen wenige einzelne Wälzkörper, die jeweils gegen eine lokal begrenzte Laufbahn gelagert sind. Sowohl Werkstoff und Geometrie als auch die geringe Anzahl der Wälzkörperlagersitze führen, neben einem sehr begrenzten Bewegungsbereich, ebenfalls zu einer ungleichmäßigen Lagerung der Bildsensorebene. Im Falle auftretender Vibrationen und Stößen kann es nun durch die oben genannten Ausführungen zu einer schlechten Abbildungsqualität und Unschärfe kommen. Die Ursache hierfür liegt in einer Verkippung und/oder Verschiebung der Sensorebene relativ zum abbildenden Linsensystem aufgrund einer schwachen, ungleichmäßigen Vorspannung und Lagerung.

Darüber hinaus gibt es technische Lösungen (vgl. Offenlegung Nr. 19 und 28), welche Federn zur Vorspannung der bildgebenden Einheit an einer Struktur abstützen, die ein Teil des äußeren Gehäuses ist oder mit ihm starr verbunden ist. Dies hat den Nachteil, dass (richtungsabhängig) den Korrekturbewegungen der Sensorfläche eine Federkraft entgegenwirkt, die überwunden werden muss. Dies macht einerseits größer dimensionierte Aktoren notwendig und führt überdies zu einem höheren Stromverbrauch während des Betriebs. Um Rotationen von mehr als 360° zu ermöglichen, muss außerdem hierfür die Feder ab einem gewissen Punkt mitgedreht werden, da zusätzlich die Reibung zwischen Feder und abstützender Struktur überwunden werden muss, um die gewünschte Bewegung durchzuführen. In jedem Fall kann bei diesen Systemen die Rotationsbewegung als beeinträchtigt eingestuft werden, da sie zu jeder Zeit behindert oder durch einen ungünstigen mechanischen Aufbau ausgeschlossen wird. Zusätzlich entsteht durch die hervorgerufene Reibung zwischen Feder und Federanschlagsfläche eine Abrasion der Anschlagsfläche.

Systeme, welche vollständige Rotationen von min. 360° erlauben, sind exemplarisch in den Offenlegungen. Nr. 1 1 -16 und 47 beschrieben. Insbesondere die ungünstige kinematische und mechanische Struktur sowie das Fehlen von spielkompensierenden Komponenten sind, wie zuvor beschrieben, hier ebenso als nachteilig hervorzuheben.

Es muss hinzugefügt werden, dass alle untersuchten und beschriebenen Systeme, welche Korrektureinheiten zum Ausgleich von Vibrationen und Schrägstellungen beinhalten, nicht in der Lage sind, den Abstand von der bildgebenden Oberfläche zum abbildenden optischen System (Linsen usw.) oder der Auflagefläche des Objektives nachträglich einzustellen. Dadurch können weder Setzerscheinungen, Fertigungstoleranzen und Abnutzung ausgeglichen werden noch kann das Auflagemaß präzise (nach-) justiert werden. Das Resultat ist eine zunehmende Unscharfe der aufgenommenen Bilder. Es werden stattdessen viele Maßnahmen entwickelt, um eine solche Justage zu umgehen. Diese können zwei grundlegenden Ansätzen zugeordnet werden: Starre Systeme mit fixierten optischen Elementen und damit fester Brennweite und Schärfe und Systeme, welche die Veränderung von optischen Elementen zur Einstellung von Zoom und Schärfe erlauben.

Exemplarisch für den ersten Ansatz können hierzu die sehr grundlegenden Ausführungen in den Offenlegungen Nr. 11-13, 15, und 30 herangezogen werden. Dabei wird das abbildende System aus Linsen am Gehäuse in einem festen Abstand zum Bildsensor befestigt, so dass nur eine einmalige Kalibrierung (bei der Erstmontage) möglich ist. Somit kann die Position der optischen Elemente relativ zueinander nicht verändert werden, was eine feste Brennweite und Schärfe zur Folge hat. Eine Adaption an äußere Umgebungen, z.B. durch Wechselobjektive ist damit nicht möglich.

Neben der Bewegung des Bildsensors über Spulen und Permanentmagnete oder Piezoaktoren findet insbesondere ein weiterer kinematischer und mechanischer Aufbau Anwendung. Dieser ist exemplarisch in den Offenlegungen Nr.13 und 15 beschrieben. Eine den Bildsensor tragende Struktur des mechanischen Systems wird dabei über Kugellager direkt am Linsen beinhaltenden Tubus oder dem Gehäuse abgestützt und gelagert, so dass der Bildsensor an einer radial fixierten Position hinter dem abbildenden optischen System zur Korrektur frei bewegt werden kann. Das Fehlen einer mechanischen Vorspannung führt jedoch zu Lagerspiel in axialer Richtung zum abbildenden Linsensystem. Während einer Korrekturbewegung kann sich der Abstand vom Bildsensor zum optischen System verändern, was neben einem unruhigen Lauf wechselnde Unscharfe zur Folge hat, die unter Einfluss äußerer Vibrationen und Stößen an Intensität zunehmen kann.

Um die zuvor beschriebene Unschärfe infolge von Lagerspiel auszuschließen, wird in vielen Erfindungen die bildgebende Einheit mit dem abbildenden optischen System fest verbunden und einheitlich mechanisch gelagert. Dieser Ansatz findet exemplarisch Umsetzung in den Offenlegungen 14, 18-20, 26, 39 und 51. Das impliziert jedoch, dass das Abbildungssystem, welches nun den vollständigen optischen Weg beinhaltet, zur Korrektur bewegt werden muss. Dies stellt einen großen Nachteil dar, da zum einen die Massenträgheit dieses Abbildungssystems deutlich größere Aktoren erfordert als Systeme, die nur die bildgebende Einheit bewegen müssen. Zum anderen ist dieser Aufbau insbesondere bei schnellen Korrekturen mit großen Wegen und Rotationen als träge einzustufen, was einen Ausgleich von Vibrationen und Schrägstellungen in Echtzeit unmöglich macht. Darüber hinaus müssten Funktionsbaugruppen, die Elemente (wie z.B. Linsen, Linsengruppen usw.) im optischen Strahlengang verstellen können, zusätzlich auf dem Abbildungssystem befestigt werden. Die Folge wäre eine weitere Steigerung des bei einer Korrektur zu bewegenden Gesamtgewichtes. Neben einer Vergrößerung der äußeren Abmessungen des Gesamtsystems würden hieraus eine zunehmende Trägheit der Korrekturbewegung und die Notwendigkeit von noch größeren Aktoren resultieren. Abschließend verhindert die feste, nicht lösbare Verbindung von abbildendem optischem System mit dem Bildsensor das modulare Anpassen der optischen Elemente an unterschiedliche Lichtverhältnisse und Anforderungen. Es ist nicht möglich, weitere Objektive über eine Schnittstelle (Bajonett) zu befestigen.

Um eine solche modulare Anpassbarkeit des Kamerasystems zu ermöglichen, werden bei einigen Entwicklungen (vgl. Offenlegung 31) dazu mechanische Schnittstellen integriert. Da dieses Bajonett in der Regel vor einem beweglichen Bildsensor mechanisch mit dem Gehäuse fest verbunden ist, besteht hier die Möglichkeit, Wechselobjektive zu montieren, ohne die Korrekturmechanik des Bildsensors zu beeinflussen. Jedoch weisen alle diese Systeme, die mit einem Bajonett ausgestattet sind und zusätzlich elektromechanische Einheiten zum Ausgleich von Vibrationen und Schrägstellungen beinhalten, keine vorgespannte Lagerung auf, die überdies nicht in der Lage ist, vollständige Rotationen zu korrigieren. Außerdem ermöglicht keines dieser Systeme die (nachträgliche) präzise Einstellung des Auflagemaßes zwischen Bildsensoroberfläche und Bajonettanschlussflansch. Insbesondere Kamerasysteme auf Basis sog. Starrflex-Platinen weisen alle keine integrierte und nach geltender Norm anerkannte gegen Losdrehen gesicherte präzise Mechanik zur (nachträglichen) Einstellung und Fixierung des Auflagemaßes auf.

Systeme, bei denen die bildgebende Einheit fest mit einem Bajonett verbunden und einheitlich mechanisch gelagert ist, unterliegen vergleichbaren Problemen und Nachteilen wie zuvor beschrieben. Hierbei kann es außerdem vorkommen, dass große und schwere Objektive eingesetzt werden müssen. Diese sind nach ihrer Montage Bestandteil des Abbildungssystems und müssen bei einer Korrektur ebenso mitbewegt werden. Auch müssten Funktionsbaugruppen zur Verstellung des Zooms und der Schärfe zusätzlich extern am gesamten Abbildungssystem befestigt werden, was dazu führen kann, dass der interne Korrekturantrieb zu schwach dimensioniert ist, um eine vollständige Korrekturbewegung (in Echtzeit) des gesamten Abbildungssystems auszuführen. Um die Orientierung und Position der gesamten Kamera bei auftretenden großen Bewegungen im Raum zu stabilisieren und auszugleichen werden externe Manipulationssysteme eingesetzt. Diese Systeme werden Steady-Cam Systeme genannt und bestehen im Wesentlichen, neben einer Positionssensorik zur Bestimmung der aktuellen Orientierung im Raum, aus drei Aktorbaugruppen -je eine pro räumliche Bewegungsachse. Dabei kann jede dieser Baugruppen einen auf die zugeordnete Achse begrenzten Lageausgleich durch Rotation ausführen. Durch die Superposition dieser einzelnen Korrekturrotationen um die Längsachse (Rollen), Querachse (Nicken) und Hochachse (Gieren) kann dabei jede Bewegung im Raum so ausgeglichen werden, dass das Kameragehäuse parallel zum Horizont ausgerichtet ist. Unter Voraussetzung einer bekannten Beziehung zwischen der Orientierung des Bildsensors relativ zum Kameragehäuse kann somit der Horizont des aufgenommenen Bildes im Idealfall senkrecht zur Gravitationsrichtung ausgerichtet werden.

Die Recherche zum Stand der Technik hierzu hat ergeben, dass solche Systeme (vgl. Offenlegungen Nr.40-44) bisweilen sehr groß und klobig ausgeführt sind. Es muss außerdem hinzugefügt werden, dass die wenigen Systeme, die in der Lage sind vollständige Rotationen des Kameragehäuses um die optische Achse (Roll-Achse) auszugleichen keine vollständig gekapselte, gegen äußere Einflüsse geschützte Struktur aufweisen. Exemplarisch kann hierfür die Offenlegung Nr. 45 betrachtet werden. Hierbei besteht kein Schutz der bewegten Elemente (z.B. der Kameraplattform bzw. des Kamerakopfes), so dass Beeinträchtigungen der freien Korrekturbewegung durch äußere Einflüsse nicht verhindert werden können, was zur vollständigen Blockade führen kann.

In Bezug auf die hier eingereichte Erfindung kann zusammengefasst werden, dass zur Stabilisierung optischer Elemente oder Beobachtungsgeräte unterschiedliche Lösungen bekannt sind. Diese vorbeschriebenen bekannten Konstruktionen erscheinen jedoch nur für die jeweilige angestrebte Anwendung geeignet. Alle Systeme mit einem integrierten elektromechanischen Korrektursystem, die einen Ausgleich von mindestens einer vollständigen Rotation ermöglichen, weisen eine ungünstige kinematische und mechanische Struktur sowie das Fehlen von spielkompensierenden Komponenten auf. Insbesondere der Verzicht einer vorgespannten Lagerung führt in Kombination mit einer spielbehafteten Mechanik dazu, dass weder eine definierte Lage des Bildsensors garantiert werden kann, noch Fertigungstoleranzen, Setzerscheinungen und Abnutzung ausgeglichen werden können, was sowohl einen unruhigen Lauf, als auch zunehmende Unschärfe der aufgenommenen Bilder zur Folge hat. Darüber hinaus ist der äußerst begrenzte Bewegungsbereich der weitaus meisten Korrektursysteme auf den Einsatz von lokalen Spulen in Kombination mit Permanentmagneten, Piezoaktoren oder lokal bewegungsbegrenzter Lagerung zurückzuführen, so dass diese veröffentlichten Kamerasysteme mit Korrekturmechaniken keine vollständige Rotation ermöglichen. Die Verwendung von reibungsbehafteter und teilweise ungleichmäßiger Lagerung optischer Bauteile verstärkt diese Probleme durch die Neigung zu erhöhtem Verschleiß und zusätzlichem Spiel weiter. Nicht zuletzt verhindert der Mangel an Elementen, mit dem der Abstand vom Bildsensor zum abbildenden Linsensystem kalibriert und nachjustiert werden kann, insbesondere bei Systemen, die über ein Bajonett die Verwendung von Wechselobjektiven ermöglichen, die präzise Einstellung des Auflagemaßes und somit der Schärfe der aufgenommenen Bilder. Abschließend ist festzustellen, dass es aktuell kein miniaturisierbares Kamerasystem gibt, das eine Systemstruktur enthält, welche die flexible Kombination der internen Funktionsmodule ermöglicht, derart, dass so auf die geplante Verwendung und den gewünschten Funktionsumfang spezialisierte, abgestimmte und umbaubare Kamerasysteme erreicht werden können.

US 5 005 948 A beschreibt eine Kamera, bei der ein Konsolenelement mit einem optischer Sensor mit zwei Federn drehfest an einem rechteckigem Trägergestell angebracht und nur axial entlang der optischen Achse verschiebbar ist. Vorsprünge des Konsolenelementes tauchen in zwei Ausnehmungen einer rechteckigen Frontkappe eines Linsenhalters ein, um an den Wänden dieser beiden Ausnehmungen linear geführt zu werden.

JP 3 222174 B2 offenbart ein Kamerasystem, bei dem eine Beobachtungstechnik mit einem bildaufnehmenden Sensor auf zwei Führungsstangen linear entlang der optischen Ache verschieblich, aber nicht um die optische Achse rotierbar angeordnet ist. Die Beobachtungstechnik ist hierfür als rechteckförmiges Bauteil ausgeführt und bis auf die Führungsstangen nicht weiter geführt.

JP 2011 004139 A offenbart eine Kamera mit einer Beobachtungstechnik mit quadratischen oder rechteckförmigen Querschnitt, die über zwei Führungsstangen entlang der optischen Achse verschieblich, aber nicht um die optische Achse drehbar gelagert ist. Die Beobachtungstechnik ist mit den Führungsstangen drehfest im Raum des Kameragehäuses angeordnet und über die Führungsstangen hinaus nicht weiter geführt.

EP 2 485 474 A1 beschreibt eine Digitalkamera mit einem einstellbaren Bildsensor, der auf einer Sensorscheibe aufgebracht ist. Die Sensorscheibe ist um ihre Achse verdrehbar, um die Position des Bildsensors zu verändern.

US 6 375 369 B1 zeigt eine Überwachungskamera mit einem zylinderförmigen Gehäuse, in das ein Kameraschlitten eingebracht ist. An dem Kameraschlitten ist eine Kamera fest angebaut. Der Kameraschlitten hat einen kreisförmigen Umfang und kann um die optische Ache herum in dem Kameragehäuse verdreht werden, um die horizontale Ausrichtung eines Bildsensors der Kamera bedarfsgerecht auszurichten.

### Aufgabenstellung

Der Erfindung liegt die Aufgabe zugrunde, einen kompakten Systemaufbau zur Bildaufnahme, -stabilisierung und -korrektur mit einem optischen Beobachtungsgerät bereitzustellen, das bei hoher Präzision möglichst vielfältig einsetzbar und bei Bedarf an diverse Objektive anpassbar ist, wobei ein ruhiger Lauf von Korrekturbewegungen und auch unter Einfluss äußerer Vibration und/oder Erschütterungen ein ruhiger Lauf der Korrektur sowie eine gleichbleibende Bildschärfe sichergestellt werden soll.

### Allgemeine Beschreibung der Erfindung

Diese Aufgabe wird erfindungsgemäß durch einen Gegenstand mit den Merkmalen des Anspruchs 1 gelöst.

Der Systemaufbau zur Bildaufnahme, -Stabilisierung und -korrektur, mit einem optischen Beobachtungsgerät, das im Bereich eines Gehäusekonzepts anzuordnen ist, hat eine Beobachtungstechnik mit einer eine bildgebende Oberfläche umfassenden bildaufnehmenden Einheit. Die bildaufnehmende Einheit ist dabei entlang einer optischen Achse verschieblich und unter Wirkung einer von einem Federelement induzierten mechanischen Vorspannung spielfrei gelagert. Die Beobachtungstechnik wirkt ferner mit zumindest einer Funktionseinheit zur Einstellung des Auflagemaßes zusammen, derart, dass durch eine axiale Verschiebung der bildaufnehmenden Einheit entlang der optischen Achse eine stufenlose Einstellbarkeit des Auflagemaßes erreichbar ist bzw. erreicht wird.

Das Auflagemaß, welches gewöhnlich den Abstand von der bildgebenden Oberfläche der bildaufnehmenden Einheit bzw. des Bildsensors zum abbildenden optischen System (Linsen usw.) oder der Auflagefläche des Objektives (sog. Objektivmontagefläche oder Objektivauflagefläche) beschreibt, kann somit präzise justiert werden. Die Justierung des Auflagemaßes kann auch nach der Montage eines beliebig ausgeführten Objektivs ausgeführt werden. Die Objektivmontagefläche ist vorzugsweise im Bereich eines äußeren Strukturmoduls oder eines anderen zumindest einen Teil eines Gehäuses ausbildenden Bauteils angeordnet.

Durch die stufenlose Einstellung des Auflagemaßes kann im Gegensatz zur herkömmlichen Verwendung von Zwischenringen oder anderen "diskreten" Abstandselementen eine auf ein jeweiliges Objektiv oder anderes optisches Element angepasste, optimale Bildschärfe eingestellt werden.

Die durch das Federelement induzierte mechanische Vorspannung sorgt für eine spielfreie Lagerung zumindest der bildaufnehmenden Einheit. Dadurch ist eine exakte axiale Positionierung der bildaufnehmenden Einheit - insbesondere auch bei Bewegungen und/oder Erschütterungen des Systemaufbaus - gegeben, so dass eine optimale Einstellung der Bildschärfe gewährleistet ist.

Die optische Achse verläuft zentral durch die bildaufnehmende Einheit und insbesondere zentral durch eine Licht auf die bildaufnehmende Einheit durchlassende Augenöffnung des Systemaufbaus.

Die im Folgenden mit "optische Achse der bildgebenden Einheit" und mit "optische Achse des Objektivanschlussflansches" beschriebenen Achsen sind bezogen auf die hier beschriebenen und gezeigten Ausführungsbeispiele und -formen identisch mit der zuvor beschriebenen optischen Achse. Ferner ist die optische Achse identisch mit der "Z-Achse". Die Ausdrücke "in Z-Richtung" und "entlang der optischen Achse" werden im Folgenden synonym verwendet.

Ferner beschreibt "Lage" eine Ausrichtung der bildaufnehmenden Einheit und/oder des Gesamtsystems und/oder von Teilen davon, die durch Drehung um eine, insbesondere mit der optischen Achse deckungsgleichen, Roll-Achse variierbar ist. Diese wird im Folgenden auch "Z-Achse" genannt. Dagegen ist mit "Orientierung" die dreidimensionale räumliche Ausrichtung der bildaufnehmenden Einheit und/oder des Gesamtsystems und/oder Teilen davon im Raum gemeint, die durch Drehung um die Roll-, Nick- und/oder Gier-Achse variierbar ist.

Vorzugsweise umfasst der Systemaufbau einen digitalen Fotoapparat und/oder eine digitale Kamera als Beobachtungsgerät.

Die bildaufnehmende Einheit bzw. der Bildsensor ist um die optische Achse drehbar sowie unter Wirkung einer von einem Federelement induzierten, mechanischen Vorspannung spielfrei gelagert. Dabei wirkt die Beobachtungstechnik mit einem Stellorgan oder einer Stelleinheit zusammen, derart, dass die bildaufnehmende Einheit bei in beliebiger Lage gehaltenem Gesamtsystem durch Rotation um die optische Achse auf eine jeweilige - beispielsweise horizontale - Aufnahmeposition ausrichtbar ist bzw. ausgerichtet wird. Das Stellorgan kann hierbei einen Schwenkwinkel von mehr als ± 360° ausgleichen. Dadurch kann eine dauerhafte, insbesondere horizontale, Aufnahmeposition der bildaufnehmenden Einheit gewährleistet werden, so dass sowohl Schräglagen als auch vollständige und darüber hinausgehende Rotationen in Echtzeit ausgeglichen werden können und das System in der Lage ist, die vollständig zur Verfügung stehende bildaufnehmende Oberfläche der bildaufnehmenden Einheit auszunutzen.

Als horizontale Referenzebene ist dabei eine zur Gravitationsrichtung senkrecht verlaufende Ebene heranzuziehen. Die Ausrichtung der bildaufnehmenden Einheit auf eine vorbestimmte Aufnahmeposition kann insbesondere unabhängig von der Orientierung des Gesamtsystems erfolgen.

Die mechanische Vorspannung verhindert, dass sich während der Dreh-Korrekturbewegung der Abstand der bildgebenden Oberfläche zur Objektivmontagefläche verändert. Somit sind ein ruhiger Lauf der Korrekturbewegung sowie eine gleichbleibende Bildschärfe, insbesondere unter Einfluss äußerer Vibrationen und/oder Erschütterungen, gewährleistet.

In einer weiteren bevorzugten Ausgestaltung der Erfindung sind Funktionsflächen der Funktionseinheit zur Einstellung des Auflagemaßes derart ausgebildet, dass eine gegen das Verstellen gesicherte Einstellbarkeit des Auflagemaßes erreichbar ist bzw. erreicht wird. Dabei ist vorgesehen, zur Fixierung des eingestellten Auflagemaßes eine kraft- und/oder formschlüssige Verbindung eines Antriebselements und einer Stelleinheit der Funktionseinheit zur Einstellung des Auflagemaßes derart auszuführen, dass zumindest eine inhärente Selbsthemmung erreicht wird. Dadurch wird eine noch sichere Positionierung der bildaufnehmenden Einheit erreicht. Vorzugsweise ist die Funktionseinheit zur Einstellung des Auflagemaßes dabei aus in definiertem Abstand kraft- und/oder formschlüssig wirkenden Stellelementen - beispielsweise basierend auf einer Verzahnung - ausgeführt. Insbesondere umfasst die Funktionseinheit zur Einstellung des Auflagemaßes hierbei zumindest ein selbsthemmendes Schneckengetriebe.

In der Erfindung umfasst die Beobachtungstechnik eine mechanische Basis sowie eine die bildaufnehmende Einheit aufnehmende Beobachtungseinheit. Die Beobachtungseinheit ist dabei relativ zur mechanischen Basis entlang der optischen Achse verschieblich und unter Wirkung der von dem Federelement induzierten mechanischen Vorspannung spielfrei gelagert. Dadurch muss zur Einstellung des Auflagemaßes nur ein relativ kleiner Teil des Systemaufbaus bewegt werden, wodurch diese präziser durchgeführt werden kann. Insbesondere ist es nicht notwendig, die gesamte Beobachtungstechnik axial mitzubewegen, so dass diese über die mechanische Basis in Relation zur Objektivmontagefläche festlegt werden kann.

In einer weiteren bevorzugten Ausgestaltung der Erfindung ist die Funktionseinheit zur Einstellung des Auflagemaßes in die Beobachtungstechnik integriert und zumindest teilweise relativ zur mechanischen Basis festgelegt. Dadurch kann eine kompakte Bauweise erreicht werden. Ferner erfolgt die Kraftübertragung einer vom Benutzer oder von einem integrierten Motor eingebrachten insbesondere rotatorischen Justagebewegung auf möglichst kleinem Raum, wodurch die Präzision der Einstellung des Auflagemaßes positiv beeinflusst wird. Darunter, dass die Funktionseinheit zur Einstellung des Auflagemaßes zumindest teilweise relativ zur mechanischen Basis festgelegt ist, ist zu verstehen, dass sie bis auf wenigstens ein parallel zur optischen Achse verschiebliches Stellglied relativ zur mechanischen Basis festgelegt ist.

Vorzugsweise umfasst die Funktionseinheit zur Einstellung des Auflagemaßes hierbei ein - bevorzugt selbsthemmendes - Schneckengetriebe, das relativ zur mechanischen Basis festgelegt ist und mit einem verschieblichen Stellglied - insbesondere einem Gewinde - zusammenwirkt.

In einer weiteren besonders bevorzugten Ausgestaltung der Erfindung ist die Funktionseinheit zur Einstellung des Auflagemaßes derart ausgebildet, dass eine vom Benutzer eingebrachte - beispielsweise rotatorische - Justagebewegung in eine translatorische Verschiebung der bildaufnehmenden Einheit (bzw. der die bildaufnehmende Einheit aufnehmenden Beobachtungseinheit) entlang der optischen Achse transformiert wird und somit eine Kalibrierung des Auflagemaßes erreicht werden kann. Vorzugsweise überträgt dabei eine Zahngeometrie eine insbesondere vom Benutzer aufgeprägte Rotation auf eine weitgehend konform ausgeführte Gegenzahngeometrie, welche wiederum mittels einer weiteren kraft- und/oder formschlüssigen Verbindung - wie beispielsweise eines Gewindes - eine Verschiebung der bildgebenden Oberfläche der bildaufnehmenden Einheit auf der optischen Achse induziert. Die Einstellung des Auflagemaßes kann somit durch eine einzige vom Benutzer eingebrachte Justagebewegung bequem und präzise eingestellt werden. Vorzugsweise verläuft die Flächennormale der bildgebenden Oberfläche der bildaufnehmenden Einheit in jeder Einstellungsposition parallel zur Bewegungsachse der translatorischen Verschiebung (hier parallel zur optischen Achse). Hierdurch wird insbesondere eine aufwändige Einstellung des Auflagemaßes über eine insbesondere nacheinander durchzuführende Einstellung mehrerer Stellglieder vermieden.

In einer weiteren vorteilhaften Ausführungsform ist erfindungsgemäß vorgesehen, dass das die zur spielfreien drehbaren Lagerung der bildaufnehmenden Einheit benötigte mechanische Vorspannung induzierende Federelement sich um die optische Achse in Umfangsrichtung vollumfänglich erstreckend ausgebildet ist. Dadurch wird erreicht, dass die bildgebende Oberfläche der bildaufnehmenden Einheit gleichmäßig vorgespannt wird, wodurch auch während der Dreh-Korrekturbewegung eine präzise Lagerung und somit optimale Bildschärfe ermöglicht wird.

Gemäß einer weiteren vorteilhaften Ausführungsform der Erfindung umfasst der Systemaufbau ein einziges Federelement, das eine mechanische Vorspannung zur spielfreien Lagerung der bildaufnehmenden Einheit sowohl bezüglich ihrer Verschieblichkeit entlang der optischen Achse als auch bezüglich ihrer Drehbarkeit um die optische Achse induziert. Das Federelement ermöglicht eine spielfreie Lagerung entlang der optischen Achse, wobei sowohl eine Translation der bildaufnehmenden Einheit entlang der optischen Achse als auch eine Rotation der bildaufnehmenden Einheit um die optische Achse möglich bleibt. Damit ist ein Systemaufbau mit wenigen Bauteilen realisierbar, wobei sowohl ein präzise einstellbares Auflagemaß als auch eine präzise Korrektur von Schräglagen und vollständigen Rotationen bereitstellt wird. Der Systemaufbau ist somit weniger störungsanfällig.

Mit Vorteil ist ein derartiger Systemaufbau zur Bildaufnahme, -Stabilisierung und - korrektur, mit einem optischen Beobachtungsgerät, das im Bereich eines vorzugsweise zylinderförmigen Gehäusekonzepts anzuordnen ist, derart ausgebildet, dass das Gesamtsystem eine Funktionseinheit bildet, die aus mehreren im Benutzungszustand durch mechanische Vorspannung spielfrei verbundenen sowie auf vorbestimmbare Aufnahmepositionen ausrichtbaren Funktionsmodulen mit integrierter Beobachtungstechnik besteht. Dabei ist die bildaufnehmende Einheit in einem zentralen Modul der Funktionseinheit steuerbar gelagert und in Relation zu einer systemfest im Bereich eines äußeren Strukturmoduls vorgesehenen Objektivmontagefläche zumindest axial einstellbar, derart, dass unabhängig von der in Betriebsstellung gebrachten Funktionseinheit die bildaufnehmende Einheit in ihrer jeweiligen Lage auf die jeweilige Aufnahmeposition ausrichtbar ist.

Während die Systemstruktur dabei durch eine flexible Kombination der internen Funktionseinheiten den Aufbau intelligenter, auf die jeweilige Anwendung und den gewünschten Funktionsumfang spezialisierter Beobachtungssysteme ermöglicht, sind die einzelnen Bedienfunktionen des Systems sowohl automatisch als auch manuell steuerbar. Dabei werden ebenso Mittel zur präzisen Korrektur von Verwackelungen, Schräglagen und vollständigen Rotationen integriert wie eine präzise, zuverlässige und gesicherte Einstellbarkeit der technischen und geometrischen Parameter, wie z.B. des Auflagema-βes, und eine native Interoperabilität mit weitgehend beliebigen Objektiv- und Bildverarbeitungssystemen erreicht. Die systeminterne Adaption auf veränderte Einsatzbedingungen ist dabei durch ein Hinzufügen oder Verändern der Modulauswahl und -position im Gesamtsystem ebenso einfach durchführbar wie vorgesehen. Unter Vermeidung bzw. Reduktion der Nachteile bekannter Umsetzungen werden dabei im Folgenden verschiedene Ausführungen exemplarisch erläutert.

Ausgehend davon ist die Vorrichtung dieser Erfindung als ein System aus spezialisierten Modulen ausgebildet, das zumindest eine Beobachtungstechnik aufnehmen kann, mindestens eine Steuerbaugruppe enthält und dessen funktionale Einheiten optional durch zumindest ein Stellorgan bewegt werden können.

Insbesondere ist vorgesehen, dass die die Funktionseinheit bildenden Baugruppen mit einem digitalen Fotoapparat und/oder einer digitalen Kamera als jeweiliges Beobachtungsgerät versehen sind.

Das Konzept der "automatischen" Bedienmöglichkeit des Beobachtungssystems sieht vor, dass mittels des Ausgangssignals zumindest eines integrierten Sensors die Lage der bildaufnehmenden Einheit unmittelbar bedient bzw. gesteuert werden kann. Insbesondere ist denkbar, dass entsprechende Zwischenglieder zur Positionierung und/oder Einstellung der Beobachtungtechnik an dieser weitere Stellmöglichkeiten eröffnen, die weitgehend unabhängig von der Einbaulage des Gesamtsystems sind.

Dazu kann das Beobachtungsgerät insbesondere in eine mit einem Stellorgan zusammenwirkende und um zumindest eine Achse drehbar gelagerte Baugruppe eingesetzt werden, so dass mindestens eine Schwenkbewegung von 360° möglich ist. Dieser Teil der zentralen Funktionseinheit sieht darüber hinaus eine auf engem Raum optimal kompakte Anordnung der funktionalen Einheiten zueinander vor, dessen Gesamtschwerpunkt vorzugsweise auf der mit der optischen Achse deckungsgleichen Bewegungsachse liegt.

Im Zusammenhang damit muss die vorgespannte Lagerung der mechanischen Funktionseinheiten als gleichermaßen wesentlich betrachtet werden, wodurch einerseits eine Einstellung des Abstandes von der bildgebenden Oberfläche der Beobachtungstechnik zur Objektivmontagefläche ermöglicht und andererseits eine hochpräzise spielfreie Lagerung erreicht wird. Eine zuverlässige automatische Kompensation von Ungenauigkeiten, Setzerscheinungen, Wärmedehnungen o. dgl. wird hierdurch ebenso wie eine Kongruenz der optischen Achsen von bildaufnehmender Einheit und Objektivanschlussflansch bzw. einer optionalen Bewegungsachse sichergestellt.

Zur weiteren Steigerung der Präzision und Abbildungsgenauigkeit ist insbesondere vorgesehen, dass eine Funktionseinheit zur Kalibrierung des axialen Abstandes der Montageoberfläche des Objektivbajonetts zur bildgebenden Oberfläche der Beobachtungstechnik (sog. Auflagemaß) integrierbar bzw. integriert ist. Die hierfür entscheidenden Funktionsflächen können dabei so ausgeführt sein, dass eine durch den Nutzer aufgeprägte Justagebewegung eine axiale Verstellung des sicher arretierbaren Abstandes der Objektivauflagefläche zur bildaufnehmenden Einheit induziert. Neben einer hochpräzisen Einstellung der Schärfe der aufgenommenen Bilder wird so außerdem der Ausgleich von Ungenauigkeiten externer optischer Abbildungssysteme ermöglicht.

Die zumindest bereichsweise gehäuseförmige Hüllstruktur der Vorrichtung ist dabei vorzugsweise so ausgeführt, dass im Bereich der bildaufnehmenden Einheit der Beobachtungstechnik eine Augenöffnung - beispielsweise mit entsprechend anpassbarem bzw. angepasstem Anschlussflansch - freigegeben ist, so dass ein Objektiv in Gebrauchslage fixiert werden kann und mit zumindest einem zugeordneten Steuersystem bedienbar ist, insbesondere derart, dass eine gleichermaßen vollautomatische wie manuelle Bedienung aller Stellorgane ebenso von motorisierten wie, in Kombination mit zusätzlich festlegbaren bzw. festgelegten Stellmodulen, unmotorisierten Objektiven möglich ist. So kann sowohl eine minimale Baugröße erreicht werden als auch gewährleistet werden, dass Objektive und Stellsysteme optimal zugänglich montiert und bedient werden und mit weiteren Baugruppen ideal zusammenwirken können ohne andere Funktionen zu beeinflussen.

Als praktisch wesentlich hat sich insbesondere herausgestellt, dass neben der (modularen, flexiblen Kombination von Funktionseinheiten und der permanenten Einstellbarkeit der geometrischen und technischen Parameter des Gesamtsystems zumindest das Beobachtungsgerät wahlweise mittels einer Stelleinheit so positioniert werden kann, dass unabhängig von der räumlichen Orientierung der Vorrichtung eine (vor)bestimmbare bzw. (vor)bestimmte Lage zum Horizont erreichbar ist bzw. erreicht wird.

Insbesondere ist vorgesehen, dass das Beobachtungsgerät mittels des in das innere Modul bzw. der Funktionseinheit integrierten Sensors und des von zumindest einem Stellmotor gebildeten Stellorgans eine permanente Ausrichtung zu einer vorbestimmten Lage aufweist.

Diese Ausrichtung kann dabei durch mehrere Funktionseinheiten ausgeführt werden, so dass die gesamte, weitgehend automatisch erfolgende Stabilisierung aus superponierten, auf die zu korrigierende Bewegung spezialisierten Einzelkorrekturbewegungen besteht. Damit können sowohl große Bewegungen als auch Verwackelungen und Vibrationen von Bewegungsabläufen und Bedienaktionen - insbesondere in permanenter Beziehung zu einer vorbestimmten Lage und der optischen Achse - synchronisiert korrigiert und stabilisiert werden. Damit werden übliche Steady-Cam Systeme o. dgl. zur Korrektur von Bewegungen der Kamera abgelöst und durch ein automatisierbares bzw. automatisiertes integriertes System ersetzt.

Darüber hinaus ist vorzugsweise denkbar, mit Hilfe eines weiteren Funktionsmoduls zusätzlich Verkippungen und/oder Deviationen zumindest zwischen den optischen Achsen der bildaufnehmendem Einheit und des Objektivanschlussflansches - beispielsweise aufgrund von Fertigungs- und/oder Montagetoleranzen, Vibrationen, einer Handbedienung usw. - systemweit synchronisiert zu korrigieren.

Es versteht sich, dass die Steuerbaugruppe auch mit einem aktivierbaren Steuerprogramm versehen sein kann, so dass sowohl zumindest die automatische Aufnahme einer Beobachtungssituation bedarfsgerecht zu- bzw. abgeschaltet werden kann als auch Aufnahmeparameter - zumindest betreffend den Bildausschnitt, die Helligkeit und Bildschärfe - gesteuert und eingestellt werden können. Ebenso ist denkbar, dass aus einer externen Signalübertragung entsprechende Zusatzprogramme gestartet und damit zusätzliche Steuer- und Stellfunktionen im Bereich des Beobachtungssystems ausgelöst werden können.

Es versteht sich, dass die Vorrichtung insbesondere optimal so dimensioniert ist, dass zusätzlich zu den vorbeschriebenen Bauteilen auch eine Stromversorgung - insbesondere eine Batterie oder ein Akku - in die Gehäusestruktur integrierbar bzw. integriert ist und/oder die Vorrichtung außerdem an eine externe Stromversorgung angeschlossen werden kann. Ebenso ist hervorzuheben, dass alle zum Betrieb notwendigen Signalleitungen - beispielsweise über Steckverbinder oder drahtlos - jederzeit unabhängig von der aktuellen Lage und Orientierung der internen, beweglichen Funktionseinheiten angesprochen werden können.

Für den Einsatz in rauen und insbesondere vibrationsbehafteten Umgebungen ist es darüber hinaus insbesondere wesentlich, dass alle zentralen Bauteile einer Funktionseinheit konstruktiv gegen Lockern bzw. selbstständiges oder unbeabsichtigtes Verstellen gesichert sind und die Vorrichtung zumindest im Bereich der gehäuseförmigen Baugruppen und Steckverbinder ein derart abgedichtetes System bildet, dass zumindest das Eindringen von Wasser und Wasserdampf sowie Festkörpern oder anderen festen, flüssigen oder gasförmigen Medien in den Bereich der beweglichen und elektronischen Baugruppen sowie des optischen Strahlengangs auch unter hohem Außendruck sicher vermieden wird. Die bevorzugt zumindest bereichsweise geschlossene Form des Stützgehäuses ermöglicht außerdem die Montage weiterer Geräte sowie eine optimale Fixierung und räumlich unabhängig orientierte Montage der Vorrichtung an frei festlegbaren Strukturen durch beliebig positionierbare Trageinrichtungen.

Vorzugsweise ist zum Schutz des Gesamtsystems vor äußeren Einflüssen und Medien zumindest im Bereich der gehäuseförmigen Baugruppen zumindest ein Dichtelement vorgesehen, das insbesondere einerseits gegen entsprechend ausgebildete Nuten eines inneren Moduls und/oder einer zentralen Funktionseinheit und andererseits gegen innere Kontaktflächen zumindest eines gegen äußere Einwirkungen schützenden und austauschbaren Hüllelements bzw. einer Hüllstruktur wirken.

Gemäß einer weiteren vorteilhaften Ausgestaltung der Erfindung ist vorgesehen, dass das Beobachtungsgerät mittels zumindest je eines Stellorgans bzw. je einer Stelleinheit im Bereich des inneren Moduls bzw. der zentralen Funktionseinheit sowohl in seiner Lage zum Horizont als auch seinen jeweiligen Aufnahmeparametern (bspw. Bildausschnitt, Helligkeit und/oder Bildschärfe) einstellbar ist. Dabei ist insbesondere pro Aufnahmeparameter zumindest ein Stellorgan bzw. eine Stelleinheit vorgesehen.

Gemäß einer weiteren bevorzugten Ausführungsform der Erfindung ist vorgesehen, dass der Systemaufbau zumindest einen mit dem Stellorgan oder mit der Stelleinheit verbindbaren bzw. verbundenen, integrierten Sensor zur Ausrichtung der Lage der bildaufnehmenden Einheit umfasst, wobei mittels eines Ausgangssignals des zumindest einen Sensors die Lage der bildaufnehmenden Einheit unmittelbar bedient bzw. gesteuert werden kann.

Dabei kann mittels eines von zumindest einem integrierten Sensor erzeugten Ausgangssignals, insbesondere basierend auf der Erfassung der räumlichen Lage und Orientierung des Gesamtsystems, von zumindest einer Systemelektronik ein Stellorgan aktiviert, zur Bewegung interner Funktionseinheiten genutzt und so eine weitgehend automatische Bedienung ermöglicht werden.

Gemäß einer weiteren vorteilhaften Ausführungsform der Erfindung ist vorgesehen, dass die Beobachtungstechnik zumindest über eine mechanische Aufnahme bzw. Befestigungsaufnahme mit dem Stellorgan oder mit der Stelleinheit zusammenwirkt, derart, dass das die bildaufnehmende Einheit als resultierende Funktionseinheit enthaltende Modul einen um zumindest die optische Achse schwenkbaren und von der Objektivmontagefläche zumindest hinsichtlich der Lage unabhängigen Teil des Gesamtsystems bildet.

Gemäß der Lehre der vorliegenden Erfindung umfasst der Systemaufbau zumindest ein adaptierbares Schnittstellenelement zur Montage eines Abbildungsgerätes, das die Beobachtungstechnik umfangseitig vollständig umgibt und in welchem die Beobachtungstechnik geführt gelagert ist, wobei Beobachtungstechnik und Schnittstellenelement ein System mit vollem Funktionsumfang eines Beobachtungsgerätes ausbilden.

Dabei ist vorgesehen, dass das Schnittstellenelement über eine innere Geometrie verfügt, die den äußeren Führungs- und Montageflächen der Beobachtungstechnik entsprechend ausgebildet ist und sowohl eine präzise ausgerichtete und zentrierte Montage im Bereich der mechanischen Basis, als auch die mechanische Führung und justierende, translatorische Verschiebung der Beobachtungseinheit auf der optischen Achse ermöglicht.

Es versteht sich, dass bedingt durch eine in das Gesamtsystem strukturtief integrierte und zumindest an unterschiedliche bildtechnische Systeme und Objektive anpassbare Ausführung des Schnittstellenelements eine sichere und leicht durchführbare Adaption des Beobachtungssystems an jeweilige Anwendungen ermöglicht wird. Erfindungsgemäß ist dabei vorgesehen, das Objektiv an einer Montagefläche im Bereich einer Augenöffnung des Schnittstellenelements zuverlässig festzulegen.

Gemäß einer weiteren vorteilhaften Ausführungsform der Erfindung ist vorgesehen, dass die Beobachtungstechnik mit dem zumindest einen adaptierbaren Schnittstellenelement und einer äußeren Hüllstruktur eine als vollständiges Beobachtungssystem ausgebildete Funktionseinheit ausbildet.

Vorzugsweise kann über die Festlegung einer weitgehend beliebigen Hüllstruktur ein bedarfsweise zusätzlicher Schutz des Gesamtsystems gegen äußere Einflüsse erreicht werden. Dazu ist vorgesehen, dass insbesondere zumindest eine innere Geometrie der Hüllstruktur derart ausgeführt ist, dass sowohl die Führungs- und Montageflächen der Beobachtungstechnik als auch die äußere Form des Schnittstellenelements zumindest gleichsinnig koaxial ausgerichtet und zentriert sind und so eine zusätzliche Optimierung der Rigidität und Führungspräzision erreicht wird. Darüber hinaus kann hierdurch ein zusätzlicher Schutz des durch eine entsprechend ausgeführte Öffnung freigegebenen Manipulators eines Antriebselements der Funktionseinrichtung zur Einstellung des Auflagemaßes zur Kalibrierung des Auflagemaßes vor unbeabsichtigter Verstellung erreicht werden.

Darüber hinaus ist insbesondere denkbar, dass der Manipulator Funktionsflächen aufweist, die durch entsprechende Öffnungen der umgebenden Bauteile freigegeben werden und ggf. mit Hilfe entsprechender Bedienwerkzeuge eine Rotation des Manipulators ermöglichen.

Der Aufbau der zumindest mechanischen Strukturen im gehäuseförmigen Bereich ist insbesondere zusätzlich derart ausgeführt, dass einerseits zur Befestigung des Gesamtsystems an einem Trägersystem in einer weitgehend beliebigen Orientierung und andererseits zur Verbindung externer Bauteile, Geräte, Sensoren o. dgl. Anbauteile beispielsweise Montagegeometrien vorgesehen sind. Denkbar ist außerdem, dass diese vorzugsweise alternativ als Bajonett, Gewinde- oder Steckfläche ausgeführt werden können. Eine Montage des Gesamtsystems an einem Trägersystem in beliebiger Orientierung kann außerdem über an der äußeren Hüllgeometrie kraft- und/oder formschlüssig angreifende Tragelemente erreicht werden.

Im Rahmen der erfindungsgemäßen modularen Systemstruktur ist zudem insbesondere als wesentlich vorgesehen, die Beobachtungstechnik zur Integration in das Gesamtsystem mit einer Schnittstelle rigide zu einer zentralen Funktionseinheit zu verbinden. Hierzu ist denkbar, dass die Schnittstelle zumindest eine der als Führungs- und Montagefläche ausgeführten äußeren Kontur der mechanischen Basis weitgehend konforme umgebende Geometrie aufweist, die sowohl zur Unterstützung der mechanischen Führung und Justagebewegung der Beobachtungseinheit auf der optischen Achse dient, als auch eine präzise ausgerichtete und zentrierte Montage ermöglicht.

Darüber hinaus ist vorzugsweise vorgesehen, dass im Bereich der äußeren Wandung der Schnittstelle zumindest eine Funktionsfläche festgelegt werden kann, die mit Hilfe eines entsprechenden Sicherungselements - wie beispielsweise einer Schraube - über eine Öffnung zur bedarfsweisen permanenten Arretierung gegen umgebende Strukturen verwendet werden kann.

Dabei ist insbesondere denkbar, die funktionalen Eigenschaften der Schnittstelle durch entsprechende inhärente Gestaltcharakteristika der äußeren Geometrie der Beobachtungstechnik und/oder weiterer zumindest teilweise umgebender Hüllstrukturen und - module zu substituieren, so dass die Beobachtungstechnik ohne zusätzliche Adapter- oder Schnittstellenelemente sowohl vorteilhaft geführt aufnehmbar bzw. aufgenommen als auch spielfrei und rigide mit zumindest einem schwenkbaren durch ein Stellorgan angetriebenen Teil des Gesamtsystems festlegbar bzw. festgelegt ist.

Gemäß einer weiteren bevorzugten Ausführungsform der Erfindung ist vorgesehen, dass die die bildaufnehmende Einheit enthaltende Beobachtungstechnik über zumindest ein entsprechendes Federelement gegen zumindest die Objektivmontagefläche spielfrei gelagert ist.

Die Beobachtungstechnik ist dabei insbesondere mit zumindest einer Druckfläche über eine vorzugsweise entsprechend konform ausgeführte Gegendruckfläche eines Anschlags eines die Beobachtungstechnik zumindest teilweise umgebenden Moduls und zumindest einem Lagerelement gegen einen Anschlussflansch des umgebenden Moduls vorgespannt. Insbesondere wirkt die Beobachtungstechnik zudem über zumindest eine mechanisch rigide Verbindung mit dem Stellorgan zusammen und bildet so in Form der zentralen Funktionseinheit einen um zumindest die Z-Achse bzw. optische Achse schwenkbaren, exakt zentrierten und spielfrei geführten Teil des Gesamtsystems. Die Druckfläche kann dabei durch eine Schnittstelle bereitgestellt werden, die mit der Beobachtungseinheit rigide verbunden ist.

In einer weiteren vorteilhaften Ausgestaltung der Erfindung ist der Aufbau der elektronischen Komponenten der Funktionseinheit aus einer zumindest singulären gefalteten Systemplatine mit bereichsweise flexiblen Verbindungen ausführbar.

Dabei ist insbesondere vorgesehen, dass die bildgebende Oberfläche der auf zumindest einer der Objektiv-Montagefläche zugewandten Seite eines starren Platinenelements befindlichen bildaufnehmenden Einheit relativ zu zumindest einem weiteren im Bereich der mechanischen Basis festgelegten starren Platinenelement und der mechanischen Basis 20 bewegt werden kann. Auf diese Weise können sowohl die Vorteile einer singulären, gefalteten Systemplatine mit flexiblen Verbindungen und starren Bereichen ausgenutzt als auch eine universelle mechanische Einstellbarkeit des Auflagema-βes erreicht werden.

Dabei ist insbesondere vorgesehen, ein zumindest ein starres Platinenelement umfassendes gefaltetes Platinenpaket vorteilhaft mit wärmeleitenden Distanzelementen in einer zumindest teilweise umgebenden Hüllgeometrie präzise orientiert zu führen und vorzugsweise mittels einer Druckplatte sicher zu einer rigiden Beobachtungseinheit festzulegen, dessen Führungsflächen zumindest mit der mechanischen Basis vorteilhaft zusammenwirken, so dass die Führungs- bzw. Bewegungsachse der Beobachtungseinheit mit der optischen Achse der bildaufnehmenden Einheit exakt kongruent verläuft. Die optionale Befestigung von optischen Elementen - wie beispielsweise Filtern - ist ebenso vorgesehen wie eine optionale, sicher gegen schädliche Knickung geschützte Arretierung zumindest einer flexiblen Verbindung des Platinenpakets mit hinteren Elementen der gefalteten Systemplatine.

Es versteht sich, dass die Funktionseinheit zur Einstellung des Auflagemaßes frei wählbar positioniert auf zumindest jeden starren Bereich weitgehend beliebig gefalteter Platinenpakete wirken und somit durch eine systemweite Integrierbarkeit die maximale Flexibilität und Modularität in der Gestaltung des Gesamtsystems erreicht werden kann. Darüber hinaus ist ebenso verständlich, dass die Funktionseinheit zur Einstellung des Auflagemaßes auch bei Ausführungen zumindest elektronischer Systemkomponenten ohne flexible Verbindungen optimal integrier- und eingesetzt werden kann.

Gemäß einer weiteren bevorzugten Ausführungsform der Erfindung ist vorgesehen, dass die Lagerung der bildaufnehmenden Einheit mit einer Funktionseinheit zur Korrektur von Verkippungen relativ zur optischen Achse erweiterbar bzw. erweitert ist.

Bevorzugt ist ein auf einer parallelkinematischen Mechanik basierender Aufbau vorgesehen, wodurch insbesondere eine gleichermaßen hochpräzise dreidimensionale Rotation der bildaufnehmenden Einheit um das Zentrum der bildgebenden Oberfläche realisiert wird. Vorzugsweise wird ferner durch die Funktionseinheit zur Korrektur von Verkippungen auch eine Translation der bildaufnehmenden Einheit relativ zur Objektivmontagefläche ermöglicht.

Insbesondere weist die Funktionseinheit zur Korrektur von Verkippungen zumindest drei Stellelemente auf, wobei über axiale Längenänderung auf jeweiligen Bewegungsachsen der Stellelemente eine weitgehend beliebige Manipulation der räumlichen Orientierung der bildaufnehmenden Einheit erreicht wird.

Die Stellelemente sind dabei vorzugsweise so zueinander angeordnet und gelagert, dass durch die beschriebene dreidimensionale Bewegung der bildaufnehmenden Einheit, insbesondere einer die bildaufnehmende Einheit aufnehmenden Kopfbaugruppe, die von Sensoren überwachten relativen Differenzen der Abstände einer Referenzebene zueinander minimiert werden bzw. im exakt korrigierten Zustand gleich Null sind und so hochfrequente Verkippungen zuverlässig kompensiert werden können.

Die exakte Einstellung des Auflagemaßes wird hierbei insbesondere über eine aus weitgehend gleichmäßiger und vorteilhaft synchronisierter Aktivierung der Stellelemente resultierende Translation der bildgebenden Oberfläche erreicht. In vorteilhafter Ausführung ist dazu ebenfalls denkbar, dass zum Erreichen sowohl einer optimalen Positionierungsgenauigkeit als auch Steuergeschwindigkeit entsprechende Aktoren - beispielsweise auf Basis der Ausnutzung des piezoelektrischen Effektes - Verwendung finden.

Vorzugsweise werden zur Festlegung der Stellelemente in vorteilhafter spielfreier Gestaltung Kardangelenke und/oder Festkörpergelenke verwendet.

Neben den zuvor beschriebenen Stellorganen sind alternative Funktionseinheiten zum Antrieb bzw. der Steuerung der zumindest beweglich gelagerten Baugruppen denkbar, die als ein die anzutreibende Baugruppe zumindest teilweise umgebendes, auf der optischen Achse weitgehend beliebig festlegbares bzw. festgelegtes, Systemmodul ausgebildet sein kann. Neben einer (elektro-) magnetisch aufgeprägten Bewegung ist hierbei insbesondere die vorteilhafte Ausnutzung des sog. piezoelektrischen Wirkprinzips denkbar.

Vorzugsweise umfasst der Systemaufbau eine insbesondere im Wesentlichen ringförmige, piezoelektrische Funktionseinheit mit integrierten piezoelektrischen Aktorelementen, wobei basierend auf einer intelligenten synchronisierten Anregung dieser piezoelektrischen Aktorelemente eine auf dem Umfang wandernde Wellenform erzeugt wird, welche über die vom Federelement wirkende Vorspannung eine Rotationsbewegung beispielsweise auf ein Rotorelement überträgt. Auf diese Weise kann eine optimale Leistungsdichte bei minimalem räumlichem Platzbedarf und gleichzeitig eine exakt steuerbare und wartungsfreie Stellbewegung erreicht werden.

Gemäß einer weiteren bevorzugten Ausführungsform der Erfindung ist vorgesehen, dass das Beobachtungsgerät über eine aufnehmende weitgehend konforme Geometrie abdeckbar bzw. abgedeckt ist, insbesondere derart, dass die insgesamt gehäuseförmige Hüllstruktur im Bereich einer der bildaufnehmenden Einheit zugeordneten Augenöffnung die Festlegung eines Objektivs erlaubt. Vorzugsweise ermöglicht die gehäuseförmige Hüllstruktur die Festlegung zumindest einer Funktionseinheit zur Steuerung weitgehend beliebiger Objektive. Insbesondere ist die gehäuseförmige Hüllstruktur an weitgehend beliebige Objektivanschluss- bzw. Auflagemaßstandards anpassbar bzw. angepasst.

Bevorzugt ist vorgesehen, dass die Beobachtungstechnik unter Wahrung des vollen Funktionsumfangs und der Einstellbarkeit der elektronischen und mechanischen Parameter in weitgehend beliebigen Haltegeometrien festlegbar bzw. festgelegt ist. Insbesondere kann hierbei ein Objektiv in Gebrauchslage fixiert und vorzugsweise mit zumindest einem zugeordneten Steuersystem bedient werden. Dabei ist eine gleichermaßen vollautomatische wie manuelle Bedienung aller Stellorgane ebenso von motorisierten wie, in Kombination mit zusätzlich festlegbaren bzw. festgelegten Stellmodulen, unmotorisierten Objektiven möglich. So kann sowohl eine minimale Baugröße erreicht werden, als auch gewährleistet werden, dass Objektive und Stellsysteme optimal zugänglich montiert und bedient werden und mit weiteren Baugruppen ideal zusammenwirken können ohne andere Funktionen zu beeinflussen.

Gemäß einer weiteren vorteilhaften Ausgestaltung der Erfindung ist zur Beleuchtung des aufzunehmenden Motivs an der gehäuseförmigen Hüllstruktur zumindest eine das Objektiv zumindest bereichsweise umgebende Funktionseinheit zur Beleuchtung vorgesehen. Dabei kann insbesondere sowohl die Intensität und Farbe als auch die Art der Beleuchtung zumindest eines Leuchtelements eingestellt und eine optimale Ausleuchtung des aufzunehmenden Objektes erreicht werden, so dass zusätzliche (teilweise komplexe) Beleuchtungssysteme ersetzt werden können. Darüber hinaus kann so eine Beleuchtung von Anwendungsumgebungen erreicht werden, in denen aktuelle Beleuchtungssysteme - beispielsweise aus Platzgründen - nicht eingesetzt werden können.

Insbesondere weist die Funktionseinheit eine Empfangs- und/oder Sendeeinheit auf. So kann in einer weiteren Ausgestaltung der Erfindung in die Funktionseinheit eine ein Sender-Empfänger-System bildende Funksteuerung integriert sein, mittels der das Beobachtungsgerät und/oder weitere funktionale Einheiten bedienbar ist/sind bzw. bedient wird/werden. Vorzugsweise ist die Funktionseinheit mit zumindest einem über Funk aktivierbaren Steuerprogramm versehen.

In einer weiteren bevorzugten Ausgestaltung der Erfindung umfasst der Systemaufbau ein elektromechanisches Bauteil zur rotatorischen Signalübertragung, das derart ausgebildet ist, dass sämtliche Ein- und Ausgangssignale auch bei einem Schwenkwinkel von insbesondere mehr als ±360° uneingeschränkt abruf- und bedienbar sind. Vorzugsweise ist das elektromechanische Bauteil derart ausgebildet, dass sich die bildgebende Oberfläche der bildaufnehmenden Einheit, unabhängig von Umgebungstemperatur, Fertigungstoleranzen oder äußeren Einflüssen zu jeder Zeit in einem präzise einstellbaren konstanten Abstand zur Objektiv-Montagefläche befindet.

Vorzugsweise ist vorgesehen, dass die Funktionseinheit zumindest im Bereich der als gehäuseförmige Baugruppen ausgebildeten Module einen zumindest bereichsweise fluiddichten Verbindungsaufbau bildet. Dadurch bildet die Vorrichtung zumindest im Bereich der gehäuseförmigen Baugruppen und insbesondere Steckverbinder ein derart abgedichtetes System, dass zumindest das Eindringen von Wasser und Wasserdampf sowie Festkörpern oder anderen festen, flüssigen oder gasförmigen Medien in den Bereich der beweglichen und elektronischen Baugruppen sowie des optischen Strahlengangs auch unter hohem Außendruck sicher vermieden wird.

Die zumindest bereichsweise geschlossene Form des Stützgehäuses ermöglicht dabei außerdem die Montage weiterer Geräte sowie eine optimale Fixierung und räumlich unabhängig orientierte Montage der Vorrichtung an frei festlegbaren bzw. festgelegten Strukturen durch beliebig positionierbare bzw. positionierte Trageinrichtungen.

Gemäß einer weiteren bevorzugten Ausführungsform der Erfindung ist vorgesehen, dass die Sendeeinheit eine Verbindungsleitung zu zumindest vorzugsweise im Bereich der zentralen Funktionseinheit angeordneten Speicherteilen aufweist, derart, dass auch bei unbegrenzten Rotationsbewegungen von mehr als 360° der bildaufnehmenden Einheit eine Informationsübertragung durchführbar ist. Die Verbindungsleitung kann dabei sowohl als eine draht- oder fasergebundene als auch als eine drahtlose Verbindung, beispielsweise eine Funkverbindung, ausgeführt sein.

Vorzugsweise wird zur Signalübertragung eine koaxiale Signalleitung verwendet. Dadurch kann ein insbesondere miniaturisierter Schleifring als Verbindungsleitung verwendet werden, der bei aktuell üblichen Videoübertragungsraten nahezu verlustfrei arbeitet. Ferner kann die Verbindungsleitung durch ein Signalübertragungselement ausgebildet werden, das sowohl konventionelle elektrische "Bürstenkontakte" (z.B. für die Stromversorgung) als auch optische und/oder magnetische Kontakte (z.B. für das Videosignal) verwendet.

Insbesondere ist vorgesehen, dass die Informationsübertragung zu zumindest einem im Bereich der zentralen Funktionseinheit vorgesehenen Speicherteil und/oder zu einem austauschbaren Speicherteil hin erfolgt.

Vorzugsweise sieht das erfindungsgemäße Konzept zur Informationsverarbeitung und/oder -Übertragung zumindest eine entsprechende Systemelektronik vor, welche im Wesentlichen als eine die internen und externen Systemkomponenten steuernde Funktionseinheit ausgeführt sein kann, wobei insbesondere mindestens Steuereinheiten zur jeweiligen Steuerung eines Stellorgans der Bildhelligkeit, der Bildschärfe, des Bildausschnitts und eines Beleuchtungsmoduls vorgesehen sind und zusätzlich zumindest ein in das System integriertes Steuerprogramm aktivierbar ist.

Dabei ist insbesondere außerdem vorgesehen nach der Montage eines weitgehend beliebigen Objektivs eine automatische Initialisierung bzw. Abfrage und Erkennung der mechanischen und elektronischen Parameter durchzuführen. Im Rahmen dessen ist, neben einer manuellen Eingabe des Stellbereichs, insbesondere zumindest eine automatische Bestimmung der den Bewegungsbereich begrenzenden Endanschläge des jeweiligen Blendenantriebs vorgesehen, derart dass die Stelleinheit des Objektivs zur Blendenöffnung von einer entsprechend zugeordneten Funktionseinheit automatisiert bewegt wird bis der durch die synchronisiert aufgezeichneten Positionen der mechanischen Endanschläge bestimmte Stellbereich ermittelt ist. Zur Gewährleistung einer zuverlässigen und präzisen Bestimmung des Stellbereichs ist außerdem denkbar zusätzlich den zumindest sensorbasiert gemessenen Helligkeitswert, beispielsweise von der bildaufnehmenden Einheit, bei der Bestimmung der Endanschläge zu berücksichtigen, derart, dass im einfachsten Fall Endanschläge jeweils durch das Minimum (erste auftretende Stellposition ohne Lichteinfall bzw. Sensormessung) und das Maximum (erste auftretende Stellposition mit maximaler Helligkeit) des Helligkeitswertes festgelegt werden können. Eine exakte Zuordnung von Blendenwert bzw. mechanischer Stellposition zur Blendenöffnung ist damit unter Verwendung des jeweils bekannten Aperturbereiches präzise berechen- bzw. interpolierbar. Neben einer vorteilhaften manuellen Einstellung eines exakten Aperturwertes kann, in Kombination mit einer automatisierbaren Steuerung der elektronischen Bildparameter, eine präzise automatische Steuerung weitgehend beliebiger Objektive im Allgemeinen und zumindest der Blendenöffnung im Besonderen erreicht werden. Analog ist dieses Verfahren für alle weiteren Stellorgane eines montierten Objektivs vorgesehen.

Es ist insbesondere vorgesehen, dass die zentrale Systemelektronik aus mehreren einzelnen beliebig im gesamten Systembereich festlegbaren Funktionseinheiten aufgebaut werden kann. Vorzugsweise kann die elektromechanische Einheit zur zumindest rotatorischen Verbindung der zentralen Steuereinheit mit mindestens einem Schnittstellenmodul ebenso beliebig im gesamten Systembereich festgelegt werden.

Vorzugsweise bildet die Funktionseinheit durch die Verbindung externer Steuerorgane mit der integrierten Systemelektronik über weitgehend beliebige jedoch zumindest gegen äußere Medien gedichtete Schnittstellen ein zumindest vollständig dreidimensional schwenkbares und in Lage und Orientierung steuerbares Beobachtungssystem.

Es ist insbesondere denkbar, dass auf diese Weise eine intelligente Kommunikation mit weiteren Systemen erreicht werden kann. Unter Berücksichtigung der zuvor beschriebenen vorteilhaft einstellbaren und skalierbaren mechanischen und systematischen Ausführung des Gesamtsystems kann - beispielsweise durch eine Synchronisation mit zumindest einem weiteren (Kamera-) System - ein Multikamerasystem erreicht werden, derart, dass beispielsweise eine aus zwei in einem zumindest stufenlos einstellbaren Abstand zueinander positionierten Gesamtsystemen ausgebildete Funktionseinheit erreicht werden kann, die in der Lage ist, intelligente, der realen Wahrnehmung äußerst präzise entsprechende dreidimensionale Aufnahmen zu machen. Infolge der systeminhärenten flexiblen Skalierbarkeit kann außerdem über zumindest eine geometrische Vergrößerung wie auch Verkleinerung des Gesamtsystems der minimal und maximal erreichbare Abstand der einzelnen synchronisierten (Kamera-) Systeme verringert bzw. vergrößert werden.

Außerdem kann zumindest ein im Bereich der zentralen Funktionseinheit vorgesehenes zusätzliches Speicherteil und/oder ein bedarfsweise austauschbares Speicherteil zur Aufzeichnung und späteren Auswertung von Aufnahmen genutzt werden. Auf diese Weise wird erreicht, dass das Gesamtsystem sowohl nahtlos in bestehende Systeme integriert werden kann als auch mit weitgehend beliebigen Geräten erweitert und gesteuert werden kann. Außerdem ist vorgesehen, dass beispielweise mittels ausgegebener sensorbasierter Steuersignale für zusätzliche auf die X- und Y-Achse wirkende Aktoren entsprechende Stellorgane verbunden und aktiviert werden können, derart, dass eine vollständige Orientierungskorrektur des Bildsensors und des Gesamtsystems im dreidimensionalen Raum erreicht werden kann.

Insbesondere ist vorgesehen, dass im Bereich eines das Beobachtungsgerät aufnehmenden Stützgehäuses jeweilige Funktionsflächen und -elemente vorgesehen sind, derart, dass an jeweiligen Verbindungspunkten des Stützgehäuses externe Bauteile, Geräte, Sensoren o.dgl. Anbauteile festlegbar sind bzw. festgelegt werden.

Es versteht sich, dass nicht näher dargestellte Bauteile einer Stromversorgung für die Steuerung des Systems vorgesehen sein können, insbesondere Batterien oder Akkus. Vorzugsweise ist vorgesehen, dass in dem Bereich des Stützgehäuses eine Stromversorgung, insbesondere in Form einer Batterie oder eines Akkus, integrierbar bzw. integriert ist. Ebenso ist denkbar, dass das Gesamtsystem an eine externe Stromversorgung anschließbar bzw. angeschlossen ist.

Es versteht sich, dass weitgehend frei wählbare äußere Systemgeometrien denkbar sind. So kann eine Adaption an beliebige Strukturen ermöglicht und das Gesamtsystem für einen Einbau in weitere Funktionseinheiten, Module oder Systeme erreicht werden.

Neben der Bewegungserzeugung auf Basis eines (elektro-) magnetischen oder piezoelektrischen Wirkprinzips sind optional weitere Aktoren - beispielsweise fluid- oder druckluftgetriebene und konventionelle (wellen-) bzw. getriebebasierte (Schritt-)Motoren - ebenso denkbar wie eine Erweiterung weitgehend beliebiger funktionaler Einheiten zur Bewegungserzeugung mit entsprechenden elektronischen und/oder mechanischen Funktionseinheiten (z.B. Encoder) zur exakten Reproduktion von Stellbewegungen und/oder dem sicheren Anfahren von diskreten (gespeicherten) Positionen und Orientierungen. Zusätzlich ist denkbar, dass mit Hilfe einer Referenzsensorik - beispielsweise über einen zusätzlichen Sensor zum Orientierungssensor - die Steuerungspräzision der jeweils korrelierenden Aktorik steigerbar ist.

Es versteht sich, dass zum Aufbau einer vorgespannten Mechanik neben den beschriebenen Ausführungen sowohl alternative Federelemente wie beispielsweise Spiralfedern, Wellenfedern, Tellerfedern, Festkörperfedern oder Wasser-, Luft- und Öldruck-aktivierte o.dgl. Vorspannung induzierende Funktionseinheiten - als auch Lagerungselemente - wie beispielsweise Wälzlager, magnetische Lager, Festkörperlagerungen o.dgl. Lager - denkbar sind.

Außerdem ist insbesondere denkbar die funktionseinheit- und modulgrenzenübergreifenden (rotatorischen) Signalleitungen sowohl des Gesamtsystems nach Außen als auch alternativ zur beschriebenen internen Übertragung mittels beschriebenem elektromechanischen Bauteil entsprechend berührungslos, optisch, magnetisch oder funkgestützt - beispielsweise über eine entsprechende (Signalleitungs-)Funktionseinheit - auszuführen.

Ebenso versteht es sich, dass ein vollständig gegen äußere Einflüsse und Medien geschützter Systemaufbau sowohl elastomer- bzw. polymerbasiert als auch über metallische Dichtflächen erreicht werden kann. Entsprechende Dichtelemente können dabei ebenso mehrteilig ausgeführt sein. Darüber hinaus ist, z.B. zur Gewichtsreduktion, denkbar das Gesamtsystem zumindest bereichsweise ohne Dichtelemente auszuführen und die mechanische Struktur hierzu als eine rigide zumindest die innenliegenden Module und Funktionselemente teilweise umgebende Einheit vorzusehen. Insbesondere kann dabei die äußere Struktur beispielsweise sowohl die Steuerorgane eines angeschlossenen Objektivs über entsprechend ausgeführte Öffnungen freigeben und so eine manuelle Bedienung derer ermöglichen als auch einen Schutz der umgebenden Funktionselemente und Module vor äußeren Einflüssen und ungewollter Verstellung gewährleisten.

### Kurzbeschreibung der Figuren

Weitere Einzelheiten und Vorteile der Erfindung sind den nachfolgend beschriebenen, schematisch dargestellten Ausführungsbeispielen zu entnehmen; es zeigen:
- Fig. 1: ein Systemdiagramm,
- Fig. 2: eine isometrische Vorderansicht des Gesamtsystems gemäß einer ersten Ausführung im Betriebszustand,
- Fig. 3: eine isometrische Rückansicht des Gesamtsystems gemäß einer ersten Ausführung im Betriebszustand,
- Fig. 4: eine Explosivdarstellung der Systemstruktur gemäß einer ersten Ausführung,
- Fig. 5: eine Explosivdarstellung der zentralen Funktionseinheit gemäß einer ersten Ausführung,
- Fig. 6: eine Explosivdarstellung des inneren Strukturmoduls mit Funktionssystem zur Korrektur von Schräglagen gemäß einer ersten Ausführung,
- Fig. 7: eine isometrische partiell geschnittene Darstellung des äußeren Strukturmoduls gemäß einer ersten Ausführung,
- Fig. 8: eine isometrische Ansicht des Gesamtsystems gemäß einer ersten Ausführung im Betriebszustand mit partiell geschnittenen Funktionseinheiten und Moduldetails,
- Fig. 9: eine isometrische partiell geschnittene Darstellung der zentralen Funktionseinheit mit System zur Einstellung des Auflagemaßes gemäß einer ersten Ausführung,
- Fig. 10: eine Explosivdarstellung einer alternativen Auswahl und Zusammensetzung von Funktionsmodulen zu einem neuen Beobachtungssystem ohne Korrektur von Schräglagen,
- Fig. 11: eine isometrische Ansicht des alternativen Beobachtungssystems im Betriebszustand mit partiell geschnittenen Funktionseinheiten und Moduldetails,
- Fig. 12: eine isometrische Vorderansicht des Gesamtsystems gemäß einer zweiten Ausführung im Betriebszustand,
- Fig. 13: eine isometrische Rückansicht des Gesamtsystems gemäß einer zweiten Ausführung im Betriebszustand,
- Fig. 14: eine Explosivdarstellung der Systemstruktur gemäß einer zweiten Ausführung,
- Fig. 15: eine Explosivdarstellung der zentralen Funktionseinheit gemäß einer zweiten Ausführung,
- Fig. 16: eine isometrische partiell geschnittene Darstellung der zentralen Funktionseinheit gemäß einer zweiten Ausführung,
- Fig. 17: eine isometrische Ansicht des Gesamtsystems gemäß einer zweiten Ausführung im Betriebszustand mit partiell geschnittenen Funktionseinheiten und Moduldetails,
- Fig. 18: eine Explosivdarstellung des Schnittstellenmoduls gemäß einer zweiten Ausführung,
- Fig. 19: eine Explosivdarstellung des äußeren Strukturmoduls gemäß einer zweiten Ausführung,
- Fig. 20: eine Explosivdarstellung der Struktur eines möglichen Stellmoduls zur Steuerung eines Objektivs,
- Fig. 21: eine isometrische partiell geschnittene Darstellung des Stellmoduls zur Steuerung des Objektivs gemäß Fig. 20,
- Fig. 22: eine Explosivdarstellung der Struktur eines Beleuchtungsmoduls,
- Fig. 23: eine isometrische partiell geschnittene Darstellung einer alternativen Ausführung des Gesamtsystems mit einer denkbaren alternativen Stelleinheit,
- Fig. 24: eine isometrische partiell geschnittene Darstellung der alternativen Stelleinheit gemäß Fig. 23,
- Fig. 25: eine isometrische partiell geschnittene Darstellung einer alternativen Lagerung, Vorspannung und Funktionseinheit zur Einstellung des Auflagemaβes im Betriebszustand,
- Fig. 26: eine isometrische partiell geschnittene Ausschnittsdarstellung einer alternativen Vorspannung gemäß Fig. 25,
- Fig. 27: eine isometrische partiell geschnittene Ausschnittsdarstellung einer alternativen Funktionseinheit zur Einstellung Auflagemaßes gemäß Fig. 25,
- Fig. 28: eine isometrische partiell geschnittene Darstellung einer alternativen Funktionseinheit zur Einstellung Auflagemaßes im Betriebszustand,
- Fig. 29: eine isometrische partiell geschnittene Detaildarstellung der alternativen Funktionseinheit zur Einstellung des Auflagemaßes gemäß Fig. 28,
- Fig. 30: eine isometrische partiell geschnittene Darstellung einer angepassten Funktionseinheit zur Korrektur von hochfrequenten Verkippungen und Vibrationen im Betriebszustand,
- Fig. 31: eine isometrische Detaildarstellung der angepassten Funktionseinheit zur Korrektur von Verkippungen und Vibrationen aus Fig. 30,
- Fig. 32: eine isometrische Darstellung eines denkbaren Einbaus in eine weitgehend beliebige Geometrie am Beispiel einer dünnwandigen Struktur und
- Fig. 33: eine isometrische partiell geschnittene Detaildarstellung des mechanischen Aufbaus des Manipulatorbereichs zur Einstellung des Auflagemaßes nach Fig. 9.

### Detaillierte Beschreibung der Erfindung

Nachfolgend werden gleichwirkende Elemente der Erfindung mit einer einheitlichen Bezugsziffer versehen, sofern dies sinnvoll ist.

Die im Folgenden mit "optische Achse der bildgebenden Einheit" und mit "optische Achse des Objektivanschlussflansches" beschriebenen Achsen sind bezogen auf die hier beschriebenen und gezeigten Ausführungsbeispiele und -formen identisch mit der zuvor beschriebenen optischen Achse und werden mit den Bezugszeichen OA bzw. OA' bezeichnet. Ferner ist die optische Achse identisch mit der "Z-Achse", die mit dem Bezugszeichen Z versehen ist. Die Ausdrücke "in Z-Richtung" und "entlang der optischen Achse" werden im Folgenden synonym verwendet. In den folgenden Figuren entspricht die X-Achse der Nick-Achse, die Y-Achse der Gier-Achse und die Z-Achse der Roll-Achse.

### Erstes Ausführungsbeispiel

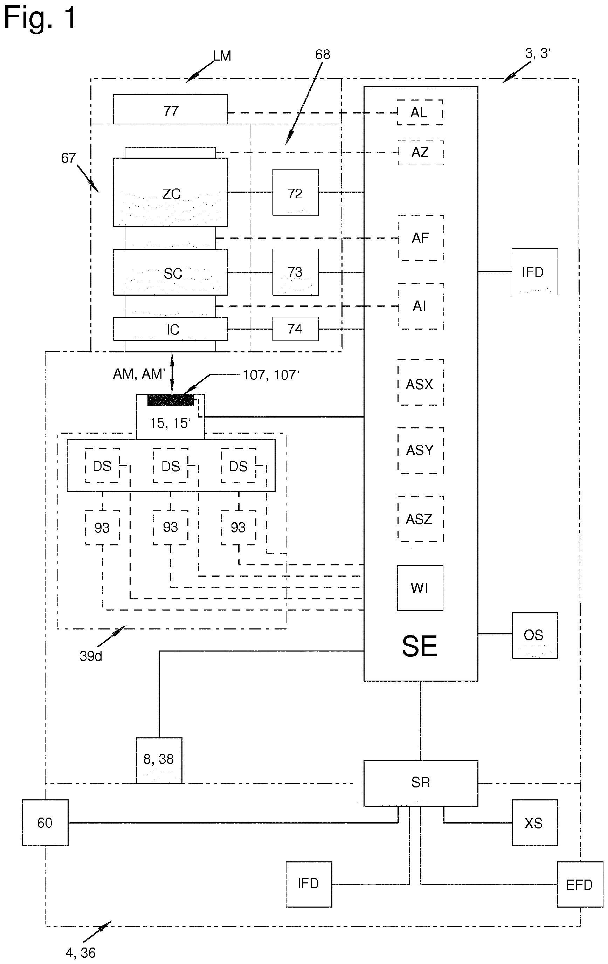

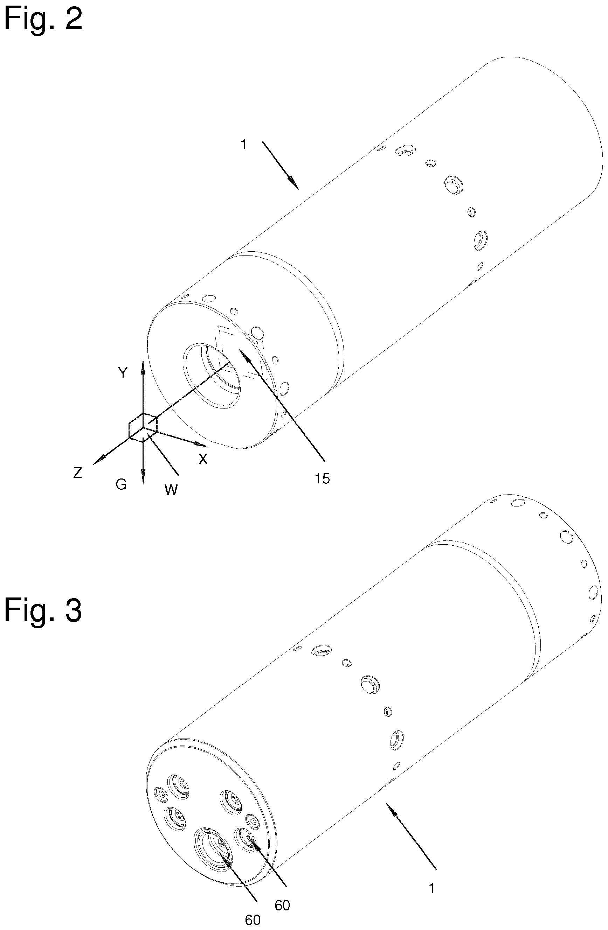

In Kombination mit der Funktionsstruktur gemäß Fig. 1 stellen die Perspektivdarstellungen entsprechend Fig. 2 und Fig. 3 eine mögliche erste Ausführung des Konzeptes der Erfindung in Form einer jeweils isometrischen Vorder- und Rückansicht des Gesamtsystems 1 dar.

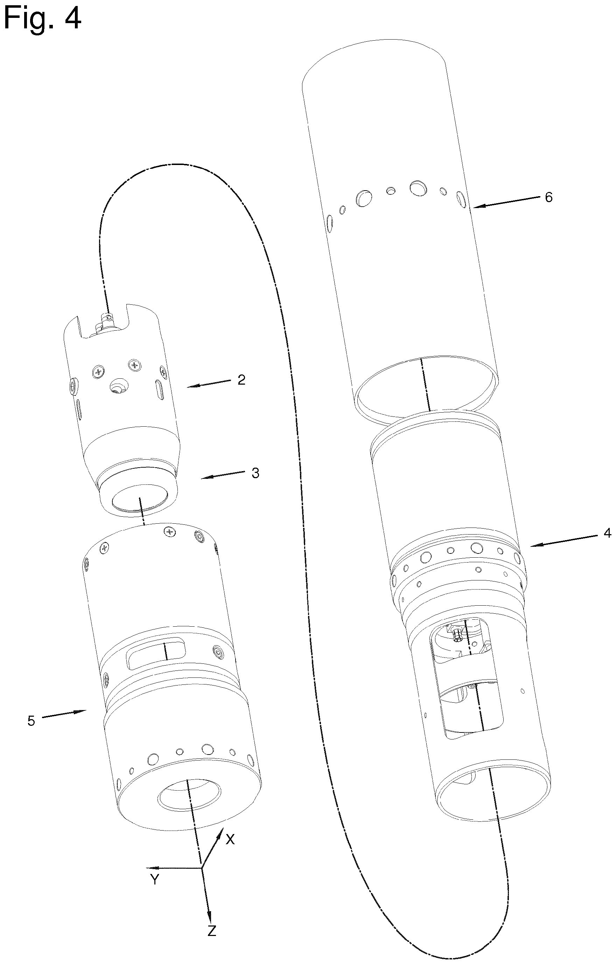

Das erfindungsgemäße Konzept sieht vor, dass das Gesamtsystem 1 nunmehr als eine mit Blick auf unterschiedliche Anwendungsfälle optimierbare Funktionseinheit ausgebildet ist. Diese funktionale Einheit weist dabei eine modulare Systemstruktur nach Fig. 4 auf, derart, dass ausgehend von einer zentralen Funktionseinheit 2 zumindest eine Beobachtungstechnik 3 festgelegt werden kann, welche von Modulen - wie beispielsweise zumindest einem inneren 4 und einem äußeren 5 - aufgenommen und durch eine gehäuseförmige Einheit 6 gegen äußere Einflüsse kapselbar ist. Diese Modulkombination ist außerdem so ausgebildet, dass die Beobachtungstechnik 3, bei in beliebiger Lage und/oder Orientierung gehaltenem Gesamtsystem, auf eine jeweilige (vor-) bestimmbare - beispielsweise horizontale - Aufnahmeposition ausrichtbar ist. Als horizontale Referenzebene ist dabei die mit der Gravitationsrichtung G (Fig. 2) kongruenten Flächennormalenrichtung, durch die jeweiligen Einheitsvektoren der Koordinatenachsen X und Z (Fig. 2) aufgespannte Ebene W heranzuziehen.

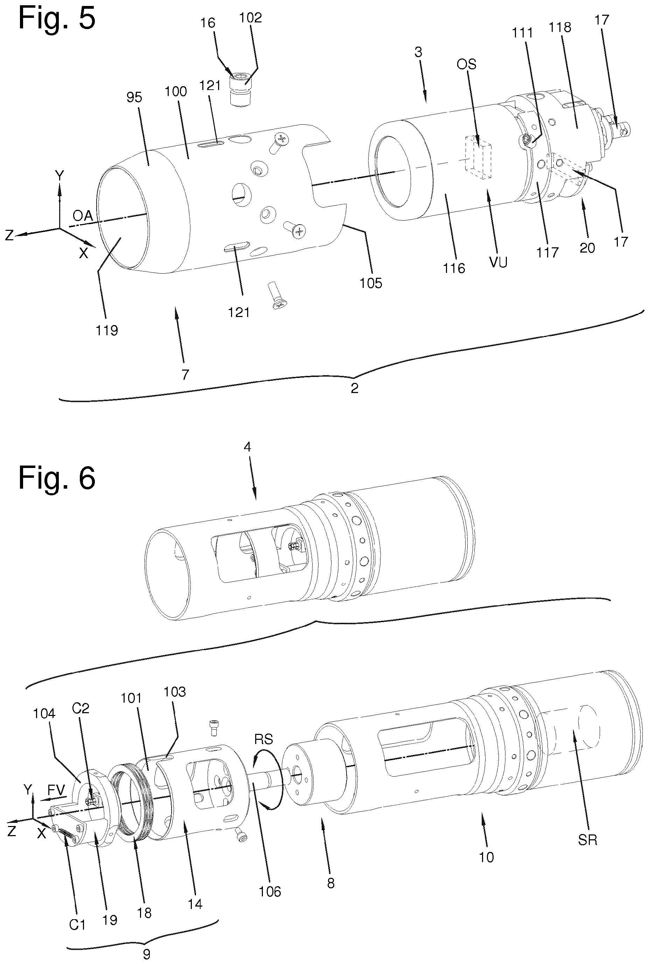

Die Explosivdarstellung gemäß Fig. 5 macht deutlich, dass eine weitere Aufteilung der zentralen Funktionseinheit 2 in weitere Module - wie zumindest die Beobachtungstechnik 3 und bedarfsweise zumindest eine Schnittstelle 7 - vorgesehen ist. Mittels eines von zumindest einem integrierten Sensor OS erzeugten Ausgangssignals kann, basierend auf der Erfassung der räumlichen Lage und Orientierung des Gesamtsystems 1, von zumindest einer Systemelektronik SE (Fig. 1) ein allgemein mit 8 (Fig.6) bezeichnetes Stellorgan aktiviert, zur Bewegung interner Funktionseinheiten genutzt und so eine weitgehend automatische Bedienung ermöglicht werden.

Wie die Explosivdarstellung des Moduls 4 in Fig. 6 darstellt, ist vorgesehen, dass das auf eine an die aufzunehmende Beobachtungstechnik 3 anpassbare mechanisch vorspannbare Aufnahme 9 wirkende Stellorgan 8 im Bereich der inneren Struktur 10 festlegbar ist.

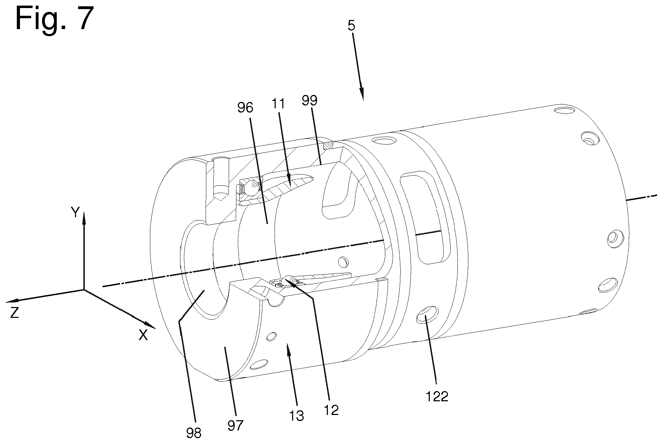

Über eine entsprechend vorteilhafte Kombination mit zumindest einem äußeren Modul 5 gemäß der partiell geschnittenen Darstellung in Fig. 7 kann erreicht werden, dass die Beobachtungstechnik 3 einerseits über zumindest eine mechanisch rigide Verbindung mit dem Stellorgan 8 zusammenwirkt und andererseits mit zumindest einer Druckfläche 95 der Schnittstelle 7 (Fig. 5) über eine entsprechend konform ausgeführte Gegendruckfläche 96 eines Anschlags 1 1 und zumindest eine Lagerelement 12 gegen den Anschlussflansch 13 des zumindest teilweise umgebenden Moduls 5 vorgespannt und so in Form der zentralen Funktionseinheit 2 einen um zumindest die Z-Achse bzw. optische Achse schwenkbaren, exakt zentrierten und spielfrei geführten Teil des Gesamtsystems bildet.

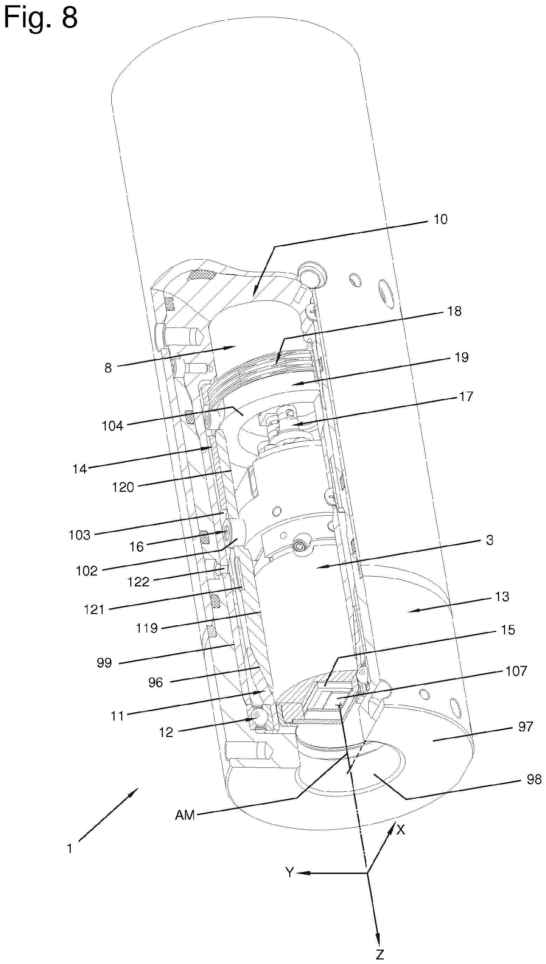

Das hieraus resultierende, sich im Betriebszustand befindende Gesamtsystem 1, ist in einer isometrischen partiell geschnittenen Ansicht in Fig. 8 dargestellt. Weitere wesentliche erfindungsgemäße Charakteristika sind zum Erreichen eines hochpräzisen und zuverlässigen Betriebs sowie der Aufnahme von optimalen Bilddaten vorgesehen und im Folgenden detailliert beschrieben.

Ausschlaggebend dabei ist neben zumindest der exakten Einstellbarkeit des Auflagemaßes die präzise und rigide Befestigung eines abbildenden optischen Systems - wie beispielsweise eines Objektivs - welches erfindungsgemäß an einer Montagefläche 97 im Bereich einer Augenöffnung 98 festgelegt werden kann. Die Form des Anschlussflansches 13 ist dazu als eine zumindest einteilige, die zentrale Funktionseinheit 2 teilweise umgebende Hüllstruktur vorgesehen, derart, dass eine durch eine vorteilig ausgeführte Kontaktfläche 99 ideale koaxiale Führung und Befestigung mit zumindest gehäuseförmigen Strukturmodulen - wie beispielsweise dem inneren Modul 4 - erreicht werden kann. Es versteht sich, dass die Ausgestaltung des Anschlussflansches 13 an unterschiedliche bildtechnische Systeme und/oder Objektive anpassbar ist.

Es ist vorgesehen, dass die zentrale Funktionseinheit 2 gemäß Fig. 5 über eine vorteilhaft ausgeführte Kontaktfläche 100 der Schnittstelle 7 in einer entsprechend ausgeprägten Gegenfläche 101 (Fig. 6) eines Trägers 14 der mechanischen Aufnahme 9 ebenso präzise zentriert wie passgenau geführt aufnehmbar ist. Eine sichere und spielfreie Übertragung der vom Stellorgan 8 ausgeführten Korrekturbewegung auf die bildaufnehmende Einheit 15 der Beobachtungstechnik 3 wird dabei über eine mit einer der Kontaktfläche 102 eines definiert festlegbaren Führungselements 16 zusammenwirkenden, weitgehend konform ausgeführten Gleitfläche 103 (Fig. 6) des Trägers 14, erreicht. Gleichzeitig wird eine sichere und gegen Fehlkontaktierung geschützte Verbindung der an der Beobachtungstechnik 3 über entsprechende Steckverbinder 17 (Fig. 5) ausgebbaren Signalleitungen mit entsprechend konform ausgeführten und positionierten Kontaktelementen C1 bzw. C2 der mechanischen Aufnahme 9 zur weiteren Ein- bzw. Ausgabe hergestellt. Dabei ist ebenso denkbar, die Verbindung der Signalleitungen drahtlos aufzubauen.

Zusätzlich ist die von einem Federelement 18 induzierte Vorspannung FV (Fig. 6) zwischen der gehäuseartigen inneren Struktur 10 und der entsprechend der Druckfläche 95 weitgehend konform ausgeführten Gegendruckfläche 96 der zumindest teilweise umgebenden Strukturen als ebenso wesentlich im Hinblick auf eine präzise und spielfrei korrigierende Stellbewegung anzusehen. Dabei ist vorgesehen, diese Vorspannung einerseits von dem Träger 14 über ein Stellorgan 8 auf die eine zumindest gehäuseartige Struktur 10 und andererseits über eine Druckfläche 104 des elektro-mechanischen Adapters 19 und eine entsprechend ausgeführte Druckfläche 105 (Fig. 5) der Schnittstelle 7 auf die Gegendruckfläche 96 des Anschlags 11 derart aufzubauen, dass die resultierende Einheit aus zumindest der mechanischen Aufnahme 9 und einem Anschlag 11 einen ebenso präzise einstellbaren wie gegen Verstellen sicher fixierten und spielfrei gelagerten, um zumindest die Z-Achse bzw. optische Achse schwenkbaren Teil des Gesamtsystems bildet. (variabler Schwenkwinkel, gemäß Pfeil RS, Fig. 6).

Durch die mit einem vorzugsweise elektro-mechanischen Bauteil SR zur rotatorischen Signalübertragung zusammenwirkende Antriebsfläche 106 des Trägers 14 kann zudem einerseits erreicht werden, dass sämtliche Ein- und Ausgangssignale auch bei einem Schwenkwinkel RS von insbesondere mehr als ±360° uneingeschränkt abruf- und bedienbar sind und andererseits sich die bildgebende Oberfläche 107 der bildaufnehmenden Einheit 15 (Fig. 8) unabhängig von Umgebungstemperatur, Fertigungstoleranzen oder äußeren Einflüssen zu jeder Zeit in einem präzise einstellbaren konstanten Abstand AM zur Objektiv-Montagefläche 97 befindet.

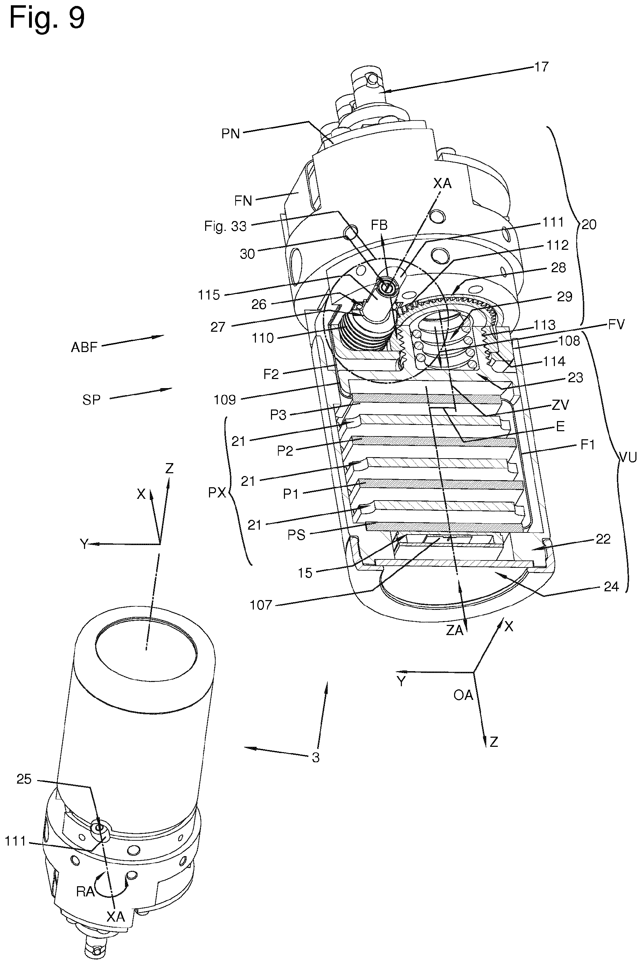

Die partiell geschnittene perspektivische Darstellung nach Fig. 9 verdeutlicht, dass die Beobachtungstechnik 3 mit zumindest einer Funktionseinheit ABF zur Einstellung dieses Abstandes AM versehen werden kann, derart, dass die bildgebende Oberfläche 107 der auf zumindest einer der Objektiv-Montagefläche 97 zugewandten Seite eines starren Platinenelements PS befindlichen bildaufnehmenden Einheit 15 relativ zu zumindest einem weiteren im Bereich der mechanischen Basis 20 festgelegten starren Platinenelement PN und der mechanischen Basis 20 bewegt werden kann. Auf diese Weise können sowohl die Vorteile einer singulären gefalteten Systemplatine mit flexiblen Verbindungen F1 bis FN und starren Bereichen P1 bis PN ausgenutzt, als auch eine universelle mechanische Einstellbarkeit des Auflagemaßes AM erreicht werden.

Dabei ist vorgesehen, das die starren Platinenelemente PS, P1 , P2 und P3 umfassende gefaltete Platinenpaket PX vorteilhaft mit wärmeleitenden Distanzelementen 21 in einer zumindest teilweise umgebenden Hüllgeometrie 22 präzise orientiert zu führen und mittels einer Druckplatte 23 sicher zu einer rigiden Beobachtungseinheit VU festzulegen, dessen mit der optischen Achse OA der bildaufnehmenden Einheit 15 exakt kongruente Führungs- bzw. Bewegungsachse Z über entsprechend ausgeführte Führungsflächen 108 zumindest mit der mechanischen Basis 20 vorteilhaft zusammenwirkt. Die Befestigung von optischen Elementen 24 - wie beispielsweise Filtern - ist ebenso vorgesehen wie eine sichere gegen schädliche Knickung geschützte Arretierung 109 zumindest einer flexiblen Verbindung F2 des Platinenpakets PX mit hinteren Elementen FN, PN der gefalteten Systemplatine SP.

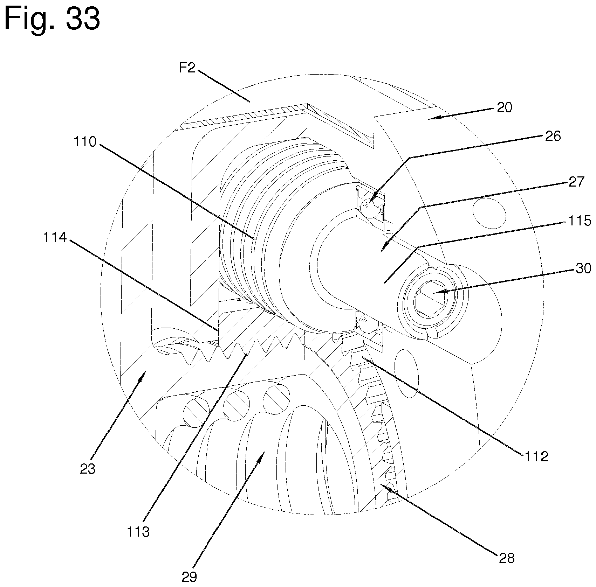

Es ist beabsichtigt, dass eine vom Benutzer eingebrachte - beispielsweise rotatorische - Justagebewegung RA mittels der Funktionseinheit ABF zur Einstellung des Auflagemaßes in eine translatorische Verschiebung ZA der Beobachtungseinheit VU transformiert wird und somit eine Kalibrierung des Auflagemaßes AM erreicht werden kann. Dabei ist denkbar, die funktionale Einheit aus in definiertem Abstand kraft- und/oder formschlüssig wirkenden Stellelementen - beispielsweise basierend auf einer Verzahnung - auszuführen, derart, dass eine Zahngeometrie 110 (s. insbesondere Fig. 33) eine mit der vom Benutzer auf den über eine entsprechend ausgeführte Öffnung 111 freigegebenen Manipulator 25 aufgeprägten mit der Achse XA koaxialen Rotation RA des über Lagerelemente 26 gehaltenen Antriebselementes 27 auf eine weitgehend konform ausgeführte Gegenzahngeometrie 1 12 der in der mechanischen Basis 20 gelagerten Stelleinheit 28 übertragen wird und mittels einer weiteren kraft- und/oder formschlüssigen Verbindung - wie beispielsweise eines Gewindes 113 - auf die Druckplatte 23 der Beobachtungseinheit VU wirkt und so eine Verschiebung der bildgebenden Oberfläche 107 auf der optischen Achse OA induziert. Hierbei ist ebenso denkbar, die Justagebewegung RA über einen in das Antriebselement 27 integrierten Motor auszuführen und sowohl eine automatisierbare als auch vorteilhafte Steuerung in schlecht zugänglichen Einbausituationen zu ermöglichen.

Neben einer Einschränkung der Bewegungsfreiheit der Beobachtungseinheit VU auf zumindest eine Translation in Z-Richtung bzw. entlang der optischen Achse, beispielsweise durch einen räumlich parallelen Versatz E der Bewegungsachse ZV des Gewindes 1 13 relativ zur Z-Achse bzw. optischen Achse, ist die durch das Federelement 29 mit der Kraft FV vorgespannte Lagerung der Druckplatte 23 über die Stelleinheit 28 gegen einen entsprechend ausgeführten Anschlag 114 der mechanischen Basis 20 zur Kompensation von Toleranzen, Vibrationen, Wärmedehnungen o. dgl. als ebenso wesentlich vorgesehen.

Zur Fixierung des eingestellten Abstandes AM ist vorgesehen, die kraft- und/oder formschlüssige Verbindung des Antriebselements 27 und der Stelleinheit 28 vorteilhaft derart auszuführen, dass zumindest eine inhärente Selbsthemmung erreicht wird. Darüber hinaus kann eine zusätzliche Arretierung der Funktionseinheit ABF zur Einstellung des Auflagemaßes über eine entsprechende geometrische Ausprägung erreicht werden, die in der einfachsten Ausführung eine geschlitzte die freigebende Öffnung 111 zumindest teilweise konform berührende Form 115 aufweist, welche durch das Eintreiben eines Sicherungselementes 30 aufgeweitet wird und somit radial blockierende Kräfte FB auf die als Gegendruckfläche wirkende Öffnung 111 ausübt.

Im Rahmen der modularen Systemstruktur ist zudem als wesentlich vorgesehen, die Beobachtungstechnik 3 zur Integration in das Gesamtsystem mit der Schnittstelle 7 rigide zu einer zentralen Funktionseinheit 2 zu verbinden, wie in der Explosivdarstellung gemäß Fig. 5 dargestellt. Hierzu ist denkbar, dass die Schnittstelle 7 zumindest eine entsprechend der als Führungs- und Montagefläche ausgeführten äußeren Kontur 116 bis 118 der Basis 20 weitgehend konform umgebende Geometrie 119 bzw. 120 (Fig. 5 bzw. Fig. 8) aufweist, die sowohl zur Unterstützung der mechanischen Führung und Justagebewegung der Beobachtungseinheit VU auf der optischen Achse OA dient, als auch eine präzise ausgerichtete und zentrierte Montage ermöglicht. Darüber hinaus ist vorgesehen, dass im Bereich der äußeren Wandung der Schnittstelle 7 zumindest eine Funktionsfläche 121 festgelegt werden kann, die mit Hilfe eines entsprechenden Sicherungselements - wie beispielsweise einer Schraube (nicht dargestellt) - über eine Öffnung 122 (Fig. 8) zur bedarfsweisen permanenten Arretierung gegen umgebende Strukturen verwendet werden kann.

Dabei ist denkbar die funktionalen Eigenschaften der Schnittstelle 7 durch entsprechende inhärente Gestaltcharakteristika der äußeren Geometrie der Beobachtungstechnik 3 und / oder weiterer zumindest teilweise umgebender Hüllstrukturen und -module zu substituieren, so dass die Beobachtungstechnik ohne zusätzliche Adapter- oder Schnittstellenelemente sowohl vorteilhaft geführt aufnehmbar als auch spielfrei und rigide mit zumindest einem schwenkbaren durch ein Stellorgan 8 angetriebenen Teil des Gesamtsystems festlegbar ist.

Es versteht sich, dass die Funktionseinheit ABF zur Einstellung des Auflagemaßes frei wählbar positioniert auf zumindest jeden starren Bereich PS bis PN weitgehend beliebig gefalteter Platinenpakete wirken und somit durch eine systemweite Integrierbarkeit die maximale Flexibilität und Modularität in der Gestaltung des Gesamtsystems erreicht werden kann. Darüber hinaus ist ebenso verständlich, dass die Funktionseinheit ABF zur Einstellung des Auflagemaßes auch bei Ausführungen zumindest elektronischer Systemkomponenten ohne flexible Verbindungen F1 bis FN optimal integrier- und einsetzbar ist.

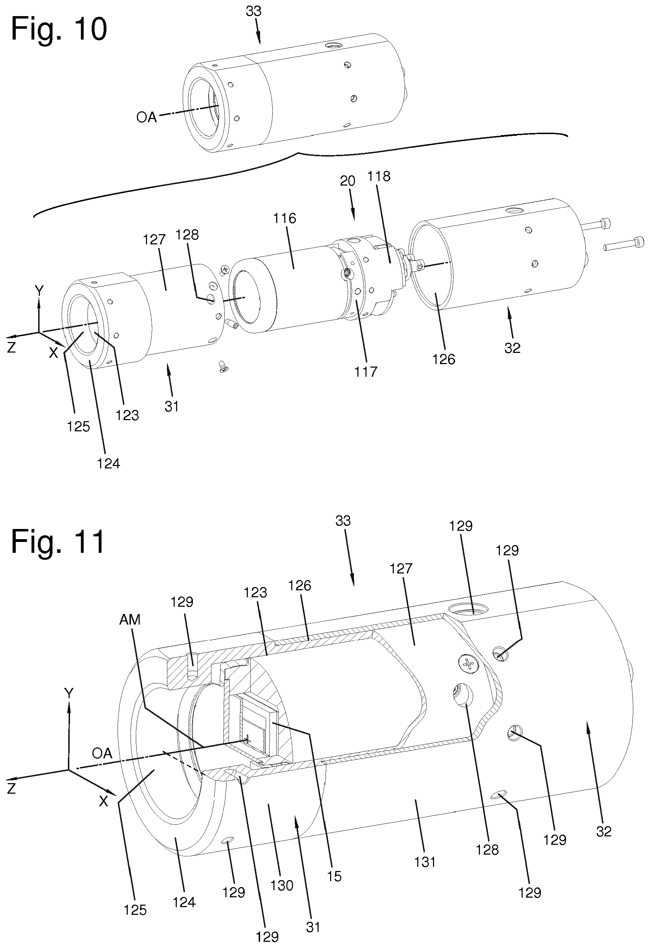

Im Hinblick auf die funktionale Optimierbarkeit des Gesamtsystems auf jeweilige unterschiedliche Anwendungsfälle ist außerdem vorgesehen, dass die Beobachtungstechnik 3 auch ohne (elektro-)mechanische Korrektureinheit zur Stabilisierung des Bildausschnittes und -Orientierung eingesetzt und mit zumindest einem adaptierbaren Schnittstellenelement 31 zur Montage eines optischen Abbildungsgeräts und zumindest einer äußeren Hüllstruktur 32 zu einem Beobachtungssystem 33 gemäß der Darstellung in Fig. 10 festgelegt werden kann.

Dabei ist vorgesehen, dass das Schnittstellenelement 31 analog über eine entsprechend der äußeren Führungs- und Montageflächen 1 16 bis 1 18 weitgehend konform umgebend ausgeführten inneren Geometrie 123 verfügt, die sowohl eine präzise ausgerichtete und zentrierte Montage im Bereich der Basis 20, als auch die mechanische Führung und justierende Verschiebung ZA der Beobachtungseinheit VU auf der optischen Achse OA ermöglicht.

Es versteht sich, dass bedingt durch eine in das Gesamtsystem strukturtief integrierte und zumindest an unterschiedliche bildtechnische Systeme und Objektive anpassbare Ausführung des Schnittstellenelements 31 eine sichere und leicht durchführbare Adaption des Beobachtungssystems an jeweilige Anwendungen ermöglicht wird. Es ist dabei vorgesehen, das Objektiv an einer Montagefläche 124 im Bereich einer Augenöffnung 125 zuverlässig festzulegen.

Wenngleich die Kombination eines adaptierbaren Schnittstellenelements 31 mit der Beobachtungstechnik 3 bereits ein System mit vollem Funktionsumfang eines Beobachtungsgerätes beschreibt, kann über die Festlegung einer weitgehend beliebigen Hüllstruktur 32 ein bedarfsweise zusätzlicher Schutz des Gesamtsystems gegen äußere Einflüsse erreicht werden. Dazu ist vorgesehen, dass insbesondere zumindest die innere Geometrie 126 der Hüllstruktur 32 derart ausgeführt ist, dass sowohl die Führungs- und Montageflächen 116 bis 118 als auch die äußere Form 127 des Schnittstellenelements 31 zumindest gleichsinnig koaxial ausgerichtet und zentriert sind und so eine zusätzliche Optimierung der Rigidität und Führungsprazision erreicht wird. Darüber hinaus kann hierdurch ein zusätzlicher Schutz des durch eine entsprechend ausgeführte Öffnung 128 freigegebenen Manipulators 25 des Antriebselements 27 zur Kalibrierung des Auflagemaßes AM vor unbeabsichtigter Verstellung erreicht werden. Das hieraus resultierende, sich im Betriebszustand befindende Beobachtungssystem 33, ist in einer isometrischen partiell geschnittenen Ansicht in Fig. 11 dargestellt. Als wesentlich hervorzuheben ist, dass durch die dargestellte Kombination von Modulen eine weitgehend beliebige Anpassbarkeit, bei gleichzeitiger Wahrung des vollen Funktionsumfangs, ermöglicht wird.

Der Aufbau der zumindest mechanischen Strukturen im gehäuseförmigen Bereich ist zusätzlich derart ausgeführt, dass einerseits zur Befestigung des Gesamtsystems an einem Trägersystem in einer weitgehend beliebigen Orientierung und andererseits zur Verbindung externer Bauteile, Geräte, Sensoren o. dgl. Anbauteile beispielsweise Montagegeometrien 129 vorgesehen sind. Denkbar ist außerdem, dass diese alternativ als Bajonett, Gewinde- oder Steckfläche ausgeführt werden können. Eine Montage des Gesamtsystems an einem Trägersystem in beliebiger Orientierung kann außerdem über an der äußeren Hüllgeometrie 130 bzw. 131 kraft- und/oder formschlüssig angreifenden Tragelemente (nicht dargestellt) erreicht werden.

Zweites Ausführungsbeispiel, das nicht Teil der Erfindung ist.

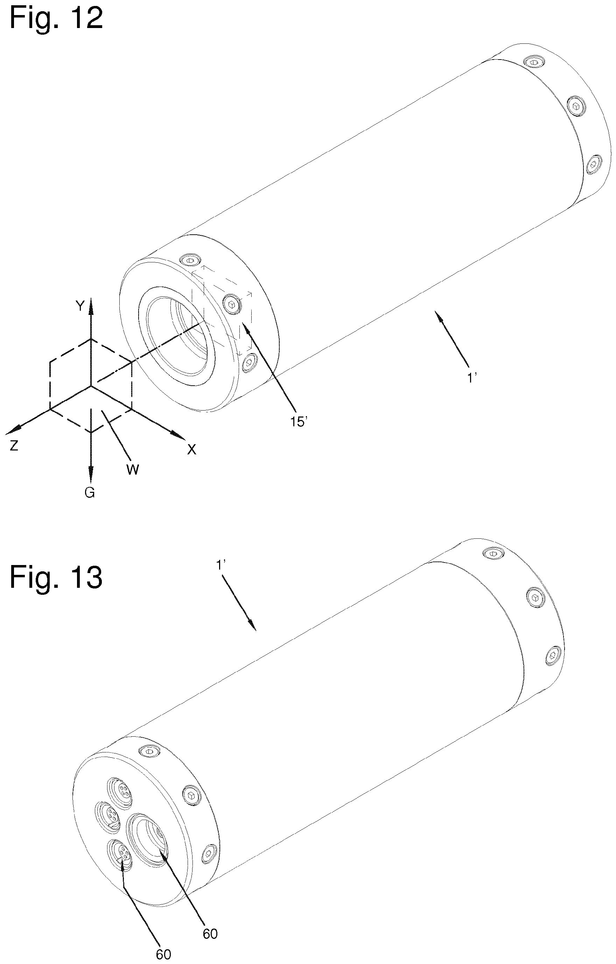

In Kombination mit der Funktionsstruktur gemäß Fig. 1 stellen die beiden isometrischen Perspektivdarstellungen entsprechend Fig. 12 und Fig. 13 eine mögliche weitere Ausführung in Form einer jeweils isometrischen Vorder- und Rückansicht des Gesamtsystems 1' dar.

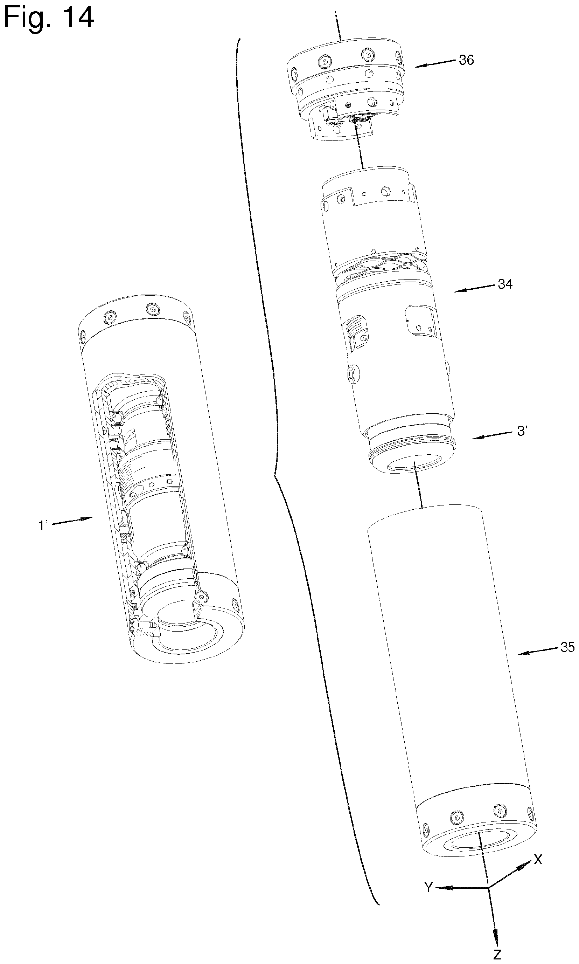

Die Umsetzung ist hierbei ebenso als eine mit Blick auf unterschiedliche Anwendungsfälle optimierbare Funktionseinheit vorgesehen, welche ebenfalls eine flexible Systemstruktur gemäß Fig. 14 aufweist, derart, dass ausgehend von einer zentralen Funktionseinheit 34 einerseits zumindest eine Beobachtungstechnik 3' mit einer bildaufnehmenden Einheit 15' festgelegt werden kann und andererseits diese Einheit mit zumindest einem äußeren Strukturmodul 35 und zumindest einer Schnittstelleneinheit 36 kombiniert werden kann. Diese Funktionseinheit ist außerdem so ausgebildet, dass die bildaufnehmende Einheit 15', bei in beliebiger Lage und/oder Orientierung gehaltenem Gesamtsystem, auf eine jeweilige horizontale Aufnahmeposition ausrichtbar ist. Als horizontale Referenzebene ist ebenfalls die, mit der Gravitationsrichtung G (Fig. 12) kongruente Flächennormalenrichtung, durch die jeweiligen Einheitsvektoren der Koordinatenachsen X und Z aufgespannte Ebene W heranzuziehen.

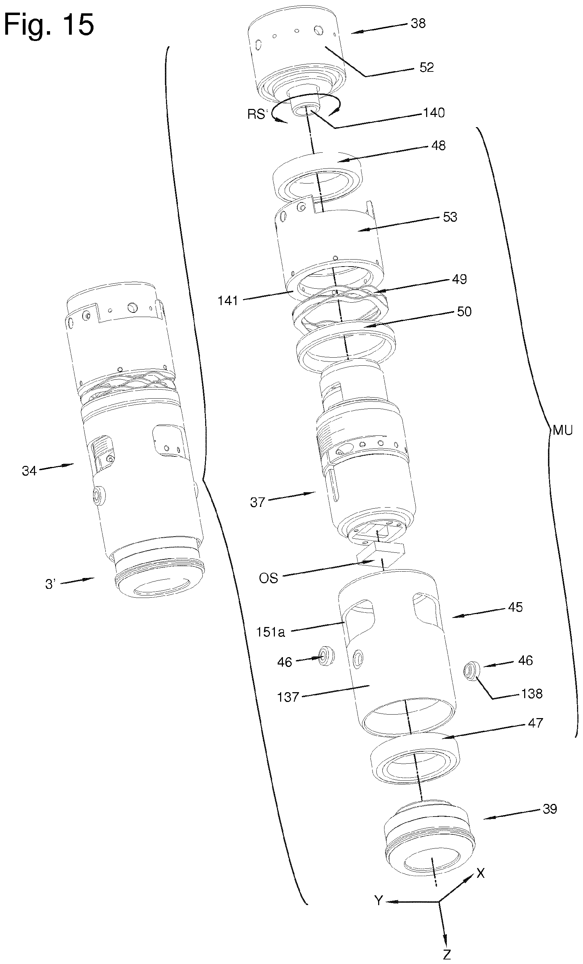

Die Explosivdarstellung gemäß Fig. 15 macht deutlich, dass zum effektiven Einsatz der Beobachtungstechnik 3' eine weitere Aufteilung der zentralen Funktionseinheit 34 in weitere Module vorgesehen ist, so dass eine weitgehend automatische Bedienung zumindest im Bereich einer Steuereinheit 37 möglich ist. In einfachster Ausführung ist dabei denkbar, dass dazu ein Sensor OS zur Erfassung der räumlichen Lage und Orientierung des Gesamtsystems integrierbar ist. Mittels eines von diesem Sensor erzeugten Ausgangssignals kann von zumindest einer Systemelektronik SE (Fig. 1) ein allgemein mit 38 bezeichnetes Stellorgan aktiviert und zur Bedienung der Baugruppen im Bereich der zentralen Funktionseinheit 34 genutzt werden. Darüber hinaus ist vorgesehen, dass die bildaufnehmende Einheit 15' der Beobachtungstechnik vorteilhaft im Bereich einer Kopfbaugruppe 39 festlegbar ist, welche einerseits über zumindest eine rigide Verbindung mit dem Stellorgan 38 zusammenwirkt und andererseits über zumindest eine vorgespannte und spielfreie mechanische Einheit MU präzise gelagert ist. Damit wird deutlich, dass zumindest die Kopfbaugruppe 39 insgesamt einen um zumindest die Z-Achse bzw. optische Achse schwenkbaren Teil der zentralen Funktionseinheit 34 bildet (variabler Schwenkwinkel, gemäß Pfeil RS', Fig. 15). Der Schwenkwinkel RS' kann dabei ebenso insbesondere mehr als ±360° betragen.

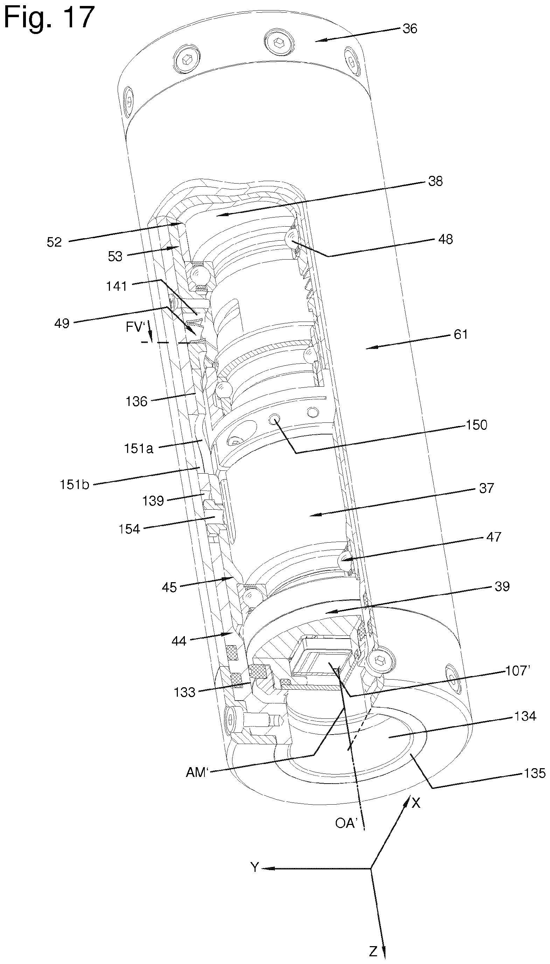

Zur Gewährleistung eines hochpräzisen und zuverlässigen Betriebs sowie der effektiven Aufnahme von optimalen Bilddaten werden Charakteristika vorgesehen, deren zumindest grundlegende Ausführungen in Fig. 17 in einem partiell geschnittenen und sich im Betriebszustand befindenden Gesamtsystem 1 ' dargestellt sind und im Folgenden detailliert beschrieben werden.

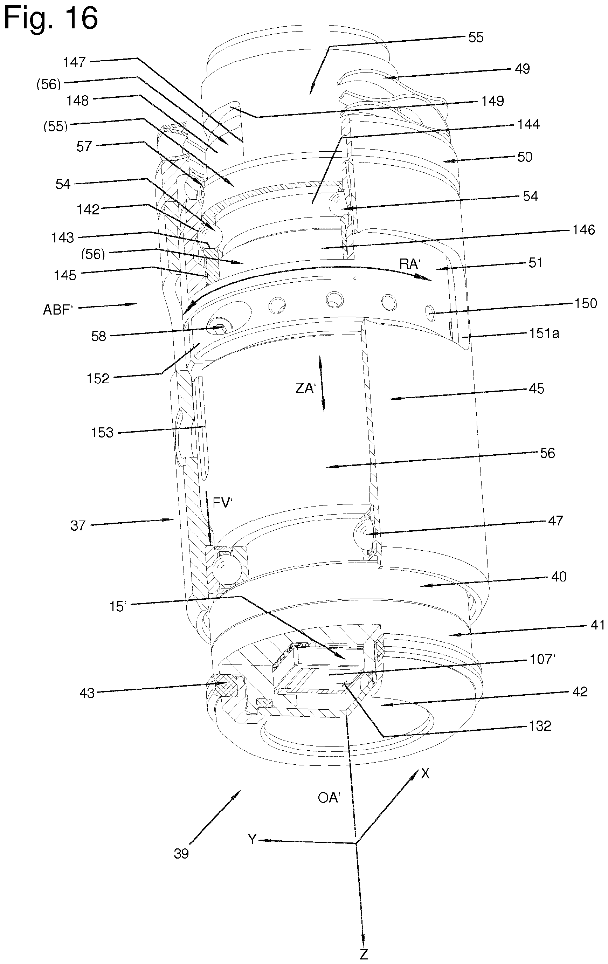

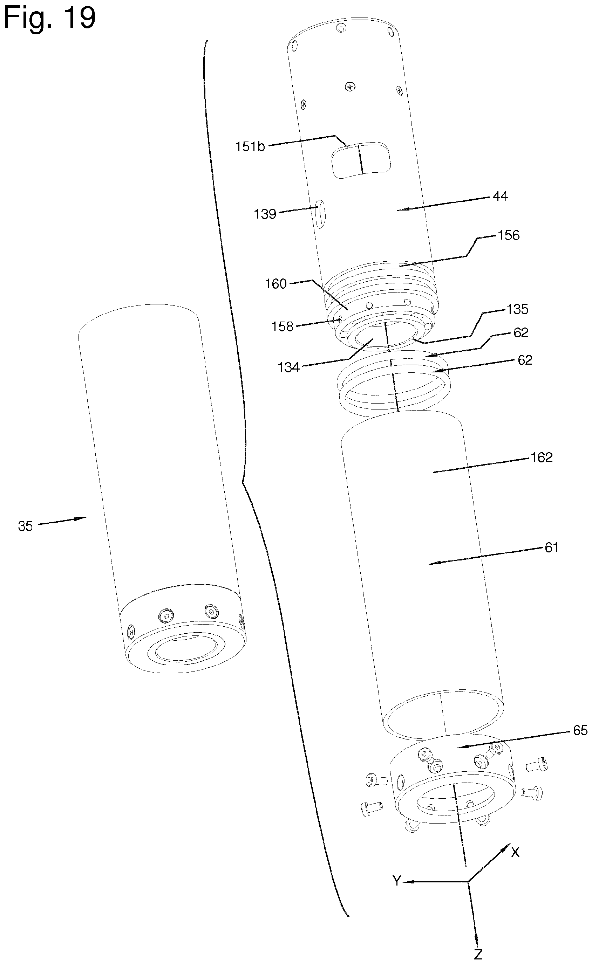

Gemäß Fig. 16 ist der Aufbau der Kopfbaugruppe 39 so vorgesehen, dass die bildaufnehmende Einheit 15' mittels einer zu einer Basisplatte 40 weitgehend konformen Gegenplatte 41 exakt festgelegt werden kann, derart, dass die Flächennormale der bildgebenden Oberfläche 107' im Zentrum 132 (optische Achse OA') koaxial mit dem Einheitsvektor der Achse Z ist. Zur Adaption an spezifische Anwendungsszenarien kann im optischen Strahlengang vor dem Auftreffen auf die bildgebende Oberfläche 107' zumindest ein weitgehend beliebiges optisches Element 42 festgelegt werden. Zum Schutz des Gesamtsystems 1' gegen äußere Einflüsse im Allgemeinen und der zentralen Funktionseinheit 34 gegen Verunreinigung im Speziellen ist zumindest ein Dichtelement 43 festlegbar, welches gegen eine entsprechende Kontaktfläche 133 einer zumindest bereichsweise umgebenden äußeren Struktur 44 (Fig. 17 bzw. Fig. 19) wirkt und in Form und Funktion derart ausgeführt sein kann, dass bei voller Dichtwirkung alle Funktionen des Gesamtsystems unbeeinträchtigt bleiben.

Zur Gewährleistung einer optimalen Abbildungsqualität der aufgenommenen Bilder ist eine vorteilhafte Kombination funktionaler Einheiten vorgesehen, so dass unter Anderem der Abstand und die Lage der bildgebenden Oberfläche 107' zur Montagefläche des abbildenden optischen Systems - wie beispielsweise eines Objektivs - exakt eingestellt und eingehalten werden kann. Es kann dieses Objektiv im Bereich einer Augenöffnung 134 freigegeben und an einer entsprechend zugeordneten Montagefläche 135 festgelegt werden. Die Form der äußeren Struktur 44 ist außerdem als eine, die zentrale Funktionseinheit 34 zumindest bereichsweise umgebende Hüllstruktur denkbar, derart, dass neben einer durch eine vorteilig ausgeführte Lauffläche 136 (Fig. 17) erreichbare koaxiale Führung und Lagerung der internen vorgespannten mechanischen Einheit MU mit der optischen Achse OA' eine Anpassbarkeit an unterschiedliche bildtechnische Systeme und/oder Objektive ermöglicht wird.

Außerdem ist vorgesehen, dass im Bereich eines gegen eine entsprechend ausgeführte Kontaktfläche 137 (Fig. 15) vorteilhaft geführten Lagerelements 45 zumindest ein Fixierungselement 46 festlegbar ist, dessen äußere Fläche 138 einerseits durch Führung in einer entsprechend geformten Gegenfläche 139 (Fig. 17) zumindest der äußeren Struktur 44 die Bewegungsfreiheit auf eine Translation in Z-Richtung bzw. entlang der optischen Achse reduziert und sowohl die Anfälligkeit gegen Vibrationen verringert als auch die Lebensdauer erhöht werden kann.

Für die Gestaltung eines Vibration- und spielkompensierenden intelligenten mechanischen Aufbaus ist gemäß Fig. 15 eine vorgespannte Lagerung ebenso wesentlich, wobei, ausgehend von der Steuereinheit 37, im Allgemeinen in den Bereichen der vorgesehenen Lagerelemente 47 und 48 einerseits die kompakte Kopfbaugruppe 39 und andererseits das Stellorgan 38 über eine vorzugsweise mit einem elektromechanischen Bauteil SR (Fig. 1) zur rotatorischen Signalübertragung zusammenwirkende Antriebsfläche 140 verbunden und gelagert werden können, derart, dass zumindest die Bewegungsachse der resultierenden zentralen Funktionseinheit 34 kongruent mit der optischen Achse Z ist und so beliebig viele Umdrehungen ausführbar sind. Die Vorspannung wird dazu gemäß Fig. 15 ausgehend von einem Federelement 49 über vorteilhaft geführte Elemente 45 und 50 auf einen Manipulator 51 (Fig. 16) induziert.

Das im Bereich des Stators 52 (Fig. 17 bzw. Fig. 15) festlegbare Anschlagselement 53 ist dabei so ausgeführt, dass sowohl ein Lagerelement 48 aufgenommen werden kann, als auch die in Form der Fläche 141 dargestellte geometrische Ausprägung als Gegendruckfläche für das die Vorspannung FV induzierende Federelement 49 dient. Außerdem ist vorgesehen, dass das Anschlagselement 53 spielfrei und rigide mit umgebenden gehäuseförmigen Strukturen verbunden werden und beispielsweise über ein geführtes Element 50 der Betrag der Vorspannung eingestellt werden kann.

Die partiell geschnittene perspektivische Darstellung nach Fig. 16 und Fig. 17 verdeutlicht, dass zur Einstellung des Abstandes AM' eine Funktionseinheit ABF' zur Einstellung des Auflagemaßes vorgesehen ist, derart, dass unter Wirkung der Vorspannung FV eine vom Benutzer eingebrachte Justagebewegung - beispielsweise eine Rotation RA' - des Manipulators 51 über eine Druckfläche 142 jeweils zumindest radial senkrecht zur optischen Achse gerichtete Bewegungen von Stellelementen 54 - beispielsweise Kugeln - induziert, die über eine Kontaktfläche 143 einer axial präzise beweglich geführten Stützstruktur 55 auf eine entsprechend ausgeführte Gegenfläche 144 einer rigide zumindest mit der bildaufnehmenden Einheit 15' verbundenen Trägereinheit 56 wirken und basierend auf einer zumindest kraft- und/oder formschlüssigen Verbindung - beispielsweise in Form einer Gewindeverbindung 145 - des Manipulators 51 mit der Stützstruktur 55 in eine vom Lagerelement 48 ausgehende Translation der bildgebenden Oberfläche 107' in Richtung ZA' relativ zur Objektivmontagefläche 135 transformiert werden und somit das Auflagemaß AM' präzise eingestellt werden kann.

Zur Unterstützung einer optimalen Funktion ist zusätzlich vorgesehen, dass die relativ zueinander beweglichen Bauteile 55 und 56 dabei sowohl über eine entsprechende Führungsfläche 146 als auch zumindest eine auf die in Z-Richtung bzw. entlang der optischen Achse beschränkte axiale Führung 147 einer geometrischen Ausprägung - beispielsweise in Form eines Führungszapfens 148 der Trägereinheit 56 -, die in einer weitgehend konformen Nut 149 der beweglichen Stützstruktur 55 geführt wird, zusammenwirken. Eine Einstellung und/oder Beschränkung des Stellweges ist über die Festlegung eines Endanschlagselementes 57 denkbar.

Der strukturelle Aufbau des Gesamtsystems ermöglicht es außerdem, die Funktionseinheit ABF' zur Einstellung des Auflagemaßes systemintern weitgehend beliebig positioniert festzulegen, beispielsweise in einem Bereich vom zumindest bereichsweise umgebenden äußeren Strukturmodul 35, derart, dass ein zusätzlicher Schutz vor äußeren Einflüssen, Blockaden oder unerwünschter Verstellung erreicht werden kann. Auf diese Weise wird zusätzlich die maximale Flexibilität und Modularität in der Gestaltung des Gesamtsystems sichergestellt.

Darüber hinaus ist denkbar, dass der Manipulator 51 Funktionsflächen 150 aufweist, die durch entsprechende Öffnungen 151a und 151b der umgebenden Bauteile freigegeben werden und ggfs. mit Hilfe entsprechender Bedienwerkzeuge (nicht dargestellt) eine Rotation des Manipulators 51 ermöglichen. Über eine entsprechende geometrische Gestaltung 152 kann eine Fixierung des eingestellten Abstandes AM' erreicht werden, die in der einfachsten Ausführung eine die Führungsfläche 146 zumindest teilweise umgebende Form aufweist, welche durch das Anziehen eines Sicherungselementes 58 zusammengezogen wird und somit eine blockierende Wirkung auf die Führungsfläche 146 ausübt.

Ebenso denkbar ist, dass im Bereich der Funktionseinheit ABF' zur Einstellung des Auflagemaßes zumindest eine Funktionsfläche 153 ausgeprägt ist, die einerseits während der rotatorischen Einstellbewegung des Manipulators 51 zur Fixierung der Trägereinheit 56 über eine Öffnung 154 gegen die äußere zumindest bereichsweise umgebende Struktur 44 vorgesehen ist und andererseits ebenso zur bedarfsweisen permanenten Arretierung der mechanischen Einheit genutzt werden kann.

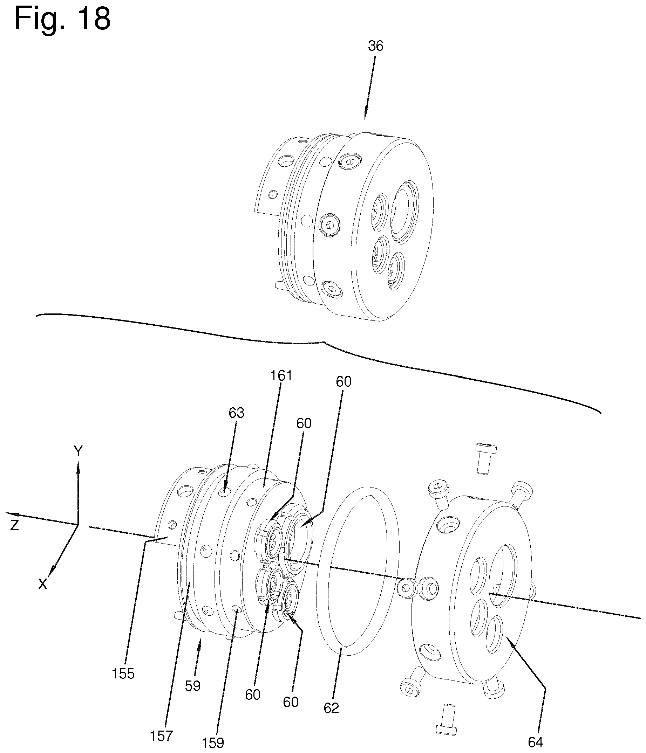

Der Aufbau der Schnittstelleneinheit 36 ist gemäß Fig. 18 so ausgeführt, dass im Bereich einer Basis 59 zumindest weitgehend beliebige, in vorteilhafter Ausführung jedoch jeweils gegen äußere Einflüsse und Medien geschützte, festlegbare Schnittstellen 60 Signale und Informationen der intern und extern angeschlossenen Funktionseinheiten des Gesamtsystems zur Weiterverarbeitung mit zusätzlichen Geräten sowohl ausgegeben als auch Benutzerbefehle eingegeben werden können. Die Basis 59 weist dabei außerdem eine entsprechende Form 155 auf, mit der eine rigide kraft- und/oder formschlüssige Verbindung mit umgebenden Strukturen bzw. Funktionseinheiten hergestellt werden kann.

Es versteht sich, dass zum Schutz des Gesamtsystems vor äußeren Einflüssen und Medien zumindest im Bereich der gehäuseförmigen Baugruppen ebenso einerseits gegen entsprechend konforme Nuten 156 und 157 (Fig. 18 bzw. Fig. 19) und andererseits gegen Kontaktflächen zumindest eines gegen äußere Einwirkungen schützenden und austauschbaren Hüllelements 61 wirkende Dichtelemente 62 vorgesehen sind.

Der Aufbau der zumindest mechanischen Strukturen im gehäuseförmigen Bereich ist zusätzlich derart ausgeführt, dass einerseits zur Befestigung des Gesamtsystems an einem Trägersystem in einer weitgehend beliebigen Orientierung und andererseits zur Verbindung externer Bauteile, Geräte, Sensoren o. dgl. Anbauteile neben den in den Ansichten gemäß Fig. 18 und Fig. 19 dargestellten Befestigungsstellen 158 und 159 sowohl über jeweilige allgemein mit 160 und 161 bezeichnete Funktionsflächen als auch an der äußeren Hüllgeometrie 162 kraft- und/oder formschlüssig angreifende Tragelemente (nicht dargestellt) vorgesehen sind. Denkbar ist außerdem, dass diese Montageflächen alternativ als Bajonett, Gewinde- oder Steckfläche ausgeführt werden. Zur optimalen Befestigung der Tragelemente bzw. bedarfsweisen Sicherung gegen Verdrehen kann das Hüllelement 61 über zumindest entsprechende Verriegelungselemente - beispielsweise Kugeln 63 - befestigt werden.

Zum Schutz der als Montageflächen verwendbaren Funktionsflächen 160 und 161 einerseits und andererseits der Fixierung zumindest des Hüllelementes 61 sind die zumindest teilweise abdeckenden Elemente 64 bzw. 65 (Fig. 18 bzw. Fig. 19) vorgesehen. Im Hinblick auf die funktionale Optimierbarkeit des Gesamtsystems auf jeweilige unterschiedliche Anwendungsfälle ist analog zum ersten Ausführungsbeispiel vorgesehen, dass sinngemäß beliebige Funktionseinheiten auch ohne (elektro-)mechanische Korrektureinheit zur Stabilisierung des Bildausschnitts und -läge kombiniert und alternativ mit zumindest einem Element zur Montage eines optischen Abbildungsgeräts und zumindest einer äußeren Hüllstruktur zu einem Beobachtungsgerät (analog zu Fig. 10) verbunden werden können.

Weitere für beide Ausführungsbeispiele gleichermaßen adaptier- bzw. anwendbare Charakteristika sind im Folgenden anhand des zweiten Ausführungsbeispiels detailliert beschrieben.

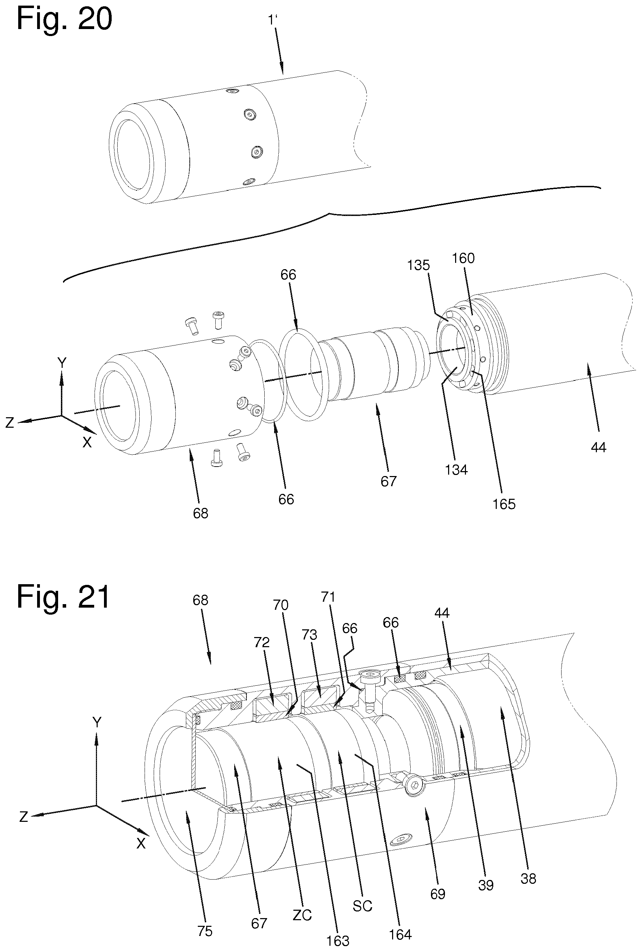

Gemäß der Explosivdarstellung in Fig. 20 ist ersichtlich, dass es denkbar ist, die äußere Hüllgeometrie der gehäuseförmigen Elemente bzw. Einheiten mit zumindest einer Funktionsfläche 160 zu versehen, der die Montage weitgehend beliebiger zusätzlicher Module zugeordnet werden kann. Durch Festlegung entsprechender Dichtelemente 66 kann ein vollständiger Schutz des mit einem externen Modul erweiterten Gesamtsystems gegen äußere Einflüsse erreicht werden.

Aus der Explosivdarstellung gemäß Fig. 20 ist außerdem eine denkbare Erweiterung mit einem Modul zur Steuerung zumindest der Stellsysteme eines weitgehend beliebigen Objektivs 67 ersichtlich. Dazu ist vorgesehen, den Aufbau des Moduls als eine ein an der Montagefläche 135 befestigtes Objektiv 67 zumindest teilweise umgebende und gegen unerwünschte Verstellung abgeschirmte Funktionseinheit 68 auszubilden, welche im Bereich der Funktionsfläche 160 festgelegt werden kann.

Die zumindest teilweise umgebende gehäuseartige Hüllgeometrie 69 der in Fig. 21 dargestellten Funktionseinheit 68 kann dabei im Wesentlichen so ausgeführt werden, dass zumindest jeweils eine den objektivseitigen Einheiten zur Einstellung der Aufnahmeparameter - insbesondere zum Steuern des Bildausschnittes ZC und zur Regulierung der Bildschärfe SC - entsprechend zugeordnete über zumindest ein Adapterelement 70 bzw. 71 auf ein korrelierendes Steuerorgan des Objektivs wirkende und zumindest gegen einen Bereich der gehäuseartigen Hüllgeometrie 69 gelagerte Stelleinheit 72 bzw. 73 festgelegt werden kann. Dazu ist denkbar die umgebende Hüllgeometrie 69 als eine sich während des Betriebs der Steuerorgane ZC und SC in Größe und Gestalt dem verwendeten Objektiv 67 automatisch anpassende Funktionseinheit auszubilden, so dass sowohl Objektive mit statischer als auch dynamischer äußerer Hüllgeometrie - beispielsweise auf Basis einer Innen- bzw. Außenfokussierung - betrieben werden können.

Zusätzlich ist denkbar, die Adapterelemente 70 und 71 einerseits als auf die geometrische Ausprägung der äußeren Wirkflächen 163 bzw. 164 der objektivseitigen Steuerorgane ZC bzw. SC zumindest in äußerer Form anpassbare Funktionselemente auszuführen und andererseits, bei einer mechanisch inhärent nutzbar ausgeprägten Oberfläche der äußeren Wirkflächen 163 und 164 - wie beispielsweise einer Verzahnung - eine Steuerung über eine entsprechend ausgeführte Gegenzahngeometrie der jeweiligen korrelierenden Stelleinheit 72 bzw. 73 direkt aufzuprägen. Zum zusätzlichen Schutz des Objektivs kann in einfachster Ausführung ein optisches Element 75 festgelegt werden.

Analog sind zusätzliche Stellorgane, wie beispielsweise ein der objektivseitigen Einheit IC zur Steuerung der Apertur bzw. Helligkeit zugeordnetes Stellorgan 74, denkbar. Es ist vorgesehen, über entsprechende Öffnungen 165 (Fig. 20) neben den Stelleinheiten 72 bis 74 und weitgehend beliebigen in das Objektiv 67 integrierten Funktionseinheiten auch zusätzliche extern montierte Bauelemente zumindest an die Systemelektronik SE (Fig. 1) anschließen und steuern zu können.

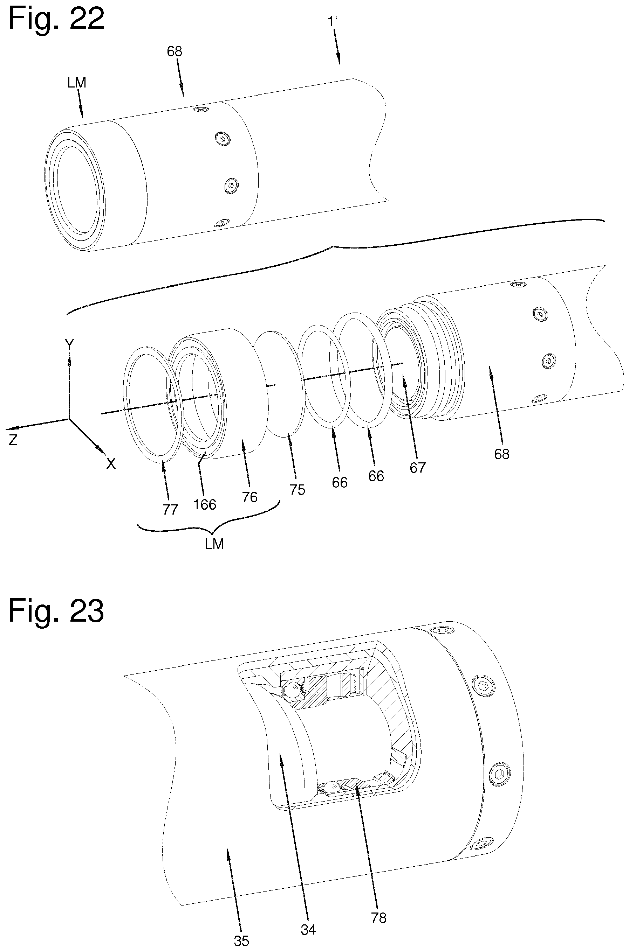

Die Explosivdarstellung gemäß Fig. 22 verdeutlicht, dass ebenso denkbar ist, in dem zu beobachtenden Objekt zugewandten Bereich der äußeren gehäuseartigen Hüllgeometrie eine das Objektiv zumindest bereichsweise umgebende Funktionseinheit LM zur Beleuchtung an einer entsprechenden weitgehend konformen Gegenfläche 166 einer Trägereinheit 76 festzulegen, derart, dass einerseits ein zumindest gegen äußere Einflüsse geschütztes Gesamtsystem erreicht wird und andererseits zumindest über eine vorgesehene Verbindung (nicht dargestellt) mit der Systemelektronik SE (Fig. 1) sowohl die Intensität und Farbe als auch die Art der Beleuchtung zumindest eines Leuchtelements 77 einstellbar ist und eine optimale Ausleuchtung des aufzunehmenden Objektes erreicht wird, so dass zusätzliche (teilweise komplexe) Beleuchtungssysteme ersetzt werden können. Darüber hinaus kann so eine Beleuchtung von Anwendungsumgebungen erreicht werden, in denen aktuelle Beleuchtungssysteme - beispielsweise aus Platzgründen - nicht eingesetzt werden können.

Das Konzept sieht zur Informationsverarbeitung und/oder -Übertragung (z.B. nach Fig. 1) zumindest eine entsprechende Systemelektronik SE vor, welche im Wesentlichen als eine die internen und externen Systemkomponenten steuernde Funktionseinheit ausgeführt sein kann, wobei insbesondere mindestens Steuereinheiten AI, AF, AZ und AL zur jeweiligen Steuerung eines Stellorgans der Bildhelligkeit, der Bildschärfe, des Bildausschnitts und eines Beleuchtungsmoduls vorgesehen sind und zusätzlich zumindest ein in das System integriertes Steuerprogramm aktivierbar ist. Dabei ist außerdem vorgesehen nach der Montage eines weitgehend beliebigen Objektivs eine automatische Initialisierung bzw. Abfrage und Erkennung der mechanischen und elektronischen Parameter durchzuführen. Im Rahmen dessen ist, neben einer manuellen Eingabe des Stellbereichs, insbesondere zumindest eine automatische Bestimmung der den Bewegungsbereich begrenzenden Endanschläge des jeweiligen Blendenantriebs vorgesehen, derart dass die Stelleinheit des Objektivs zur Blendenöffnung von einer entsprechend zugeordneten Funktionseinheit automatisiert bewegt wird bis der durch die synchronisiert aufgezeichneten Positionen der mechanischen Endanschläge bestimmte Stellbereich ermittelt ist. Zur Gewährleistung einer zuverlässigen und präzisen Bestimmung des Stellbereichs ist außerdem denkbar, zusätzlich den zumindest sensorbasiert gemessenen Helligkeitswert, beispielsweise von der bildaufnehmenden Einheit 15 bzw. 15', bei der Bestimmung der Endanschläge zu berücksichtigen, derart, dass im einfachsten Fall Endanschläge jeweils durch das Minimum (erste auftretende Stellposition ohne Lichteinfall bzw. Sensormessung) und das Maximum (erste auftretende Stellposition mit maximaler Helligkeit) des Helligkeitswertes festgelegt werden können. Eine exakte Zuordnung von Blendenwert bzw. mechanischer Stellposition zur Blendenöffnung ist damit unter Verwendung des jeweils bekannten Aperturbereiches präzise berechen- bzw. interpolierbar. Neben einer vorteilhaften manuellen Einstellung eines exakten Aperturwertes kann, in Kombination mit einer automatisierbaren Steuerung der elektronischen Bildparameter, eine präzise automatische Steuerung weitgehend beliebiger Objektive im Allgemeinen und zumindest der Blendenöffnung im Besonderen erreicht werden. Analog ist dieses Verfahren für alle weiteren Stellorgane eines montierten Objektivs vorgesehen.

Es ist vorgesehen, dass einerseits die zentrale Systemelektronik SE aus mehreren einzelnen unabhängig von den in Fig. 1 dargestellten Modulgrenzen beliebig im gesamten Systembereich festlegbaren Funktionseinheiten aufgebaut werden kann und andererseits die Einheit SR zur zumindest rotatorischen Verbindung der zentralen Steuereinheit SE mit mindestens einem Schnittstellenmodul ebenso unabhängig von den dargestellten Modulgrenzen beliebig im gesamten Systembereich festgelegt werden kann.

Es ist insbesondere denkbar, dass auf diese Weise eine intelligente Kommunikation mit weiteren Systemen erreicht werden kann. Unter Berücksichtigung der zuvor beschriebenen vorteilhaft einstellbaren und skalierbaren mechanischen und systematischen Ausführung des Gesamtsystems kann - beispielsweise durch eine Synchronisation mit zumindest einem weiteren (Kamera-) System - ein Multikamerasystem erreicht werden, derart, dass beispielsweise eine aus zwei in einem zumindest stufenlos einstellbaren Abstand zueinander positionierten Gesamtsystem ausgebildete Funktionseinheit erreicht werden kann, die in der Lage ist, intelligente, der realen Wahrnehmung äußerst präzise entsprechende dreidimensionale Aufnahmen zu machen. Infolge der systeminhärenten flexiblen Skalierbarkeit kann außerdem über ebenso eine zumindest geometrische Vergrößerung wie auch Verkleinerung des Gesamtsystems der minimal und maximal erreichbare Abstand der einzelnen synchronisierten (Kamera-) Systeme verringert bzw. vergrößert werden.

Außerdem kann zumindest ein im Bereich der zentralen Funktionseinheit vorgesehenes zusätzliches Speicherteil IFD und/oder ein bedarfsweise austauschbares Speicherteil EFD zur Aufzeichnung und späteren Auswertung von Aufnahmen genutzt werden. Auf diese Weise wird erreicht, dass das Gesamtsystem sowohl nahtlos in bestehende Systeme integriert werden kann als auch mit weitgehend beliebigen Geräten erweitert und gesteuert werden kann. Außerdem ist vorgesehen, dass beispielweise mittels ausgegebener sensorbasierter Steuersignale ASX, ASY für zusätzliche auf die X- und Y-Achse wirkende Aktoren entsprechende Stellorgane verbunden und aktiviert werden können, derart, dass eine vollständige Orientierungskorrektur des Bildsensors und des Gesamtsystems im dreidimensionalen Raum erreicht werden kann.

Es versteht sich, dass nicht näher dargestellte Bauteile einer Stromversorgung für die Steuerung des Systems vorgesehen sein können. Insbesondere ist dabei die Anwendung von Batterien oder Akkus vorgesehen. Ebenso ist denkbar, dass das Gesamtsystem an eine externe Stromversorgung anschließbar ist.

### Alternative Ausführungen

Neben den zuvor beschriebenen Stellorganen sind alternative Funktionseinheiten zum Antrieb bzw. der Steuerung der zumindest beweglich gelagerten Baugruppen denkbar, deren Aufbau als ein die anzutreibende Baugruppe zumindest teilweise umgebendes, auf der Z-Achse bzw. optischen Achse weitgehend beliebig festlegbares, Systemmodul ausgebildet sein kann. Neben einer (elektro-) magnetisch aufgeprägten Bewegung ist hierbei insbesondere die vorteilhafte Ausnutzung des sog. piezoelektrischen Wirkprinzips denkbar.

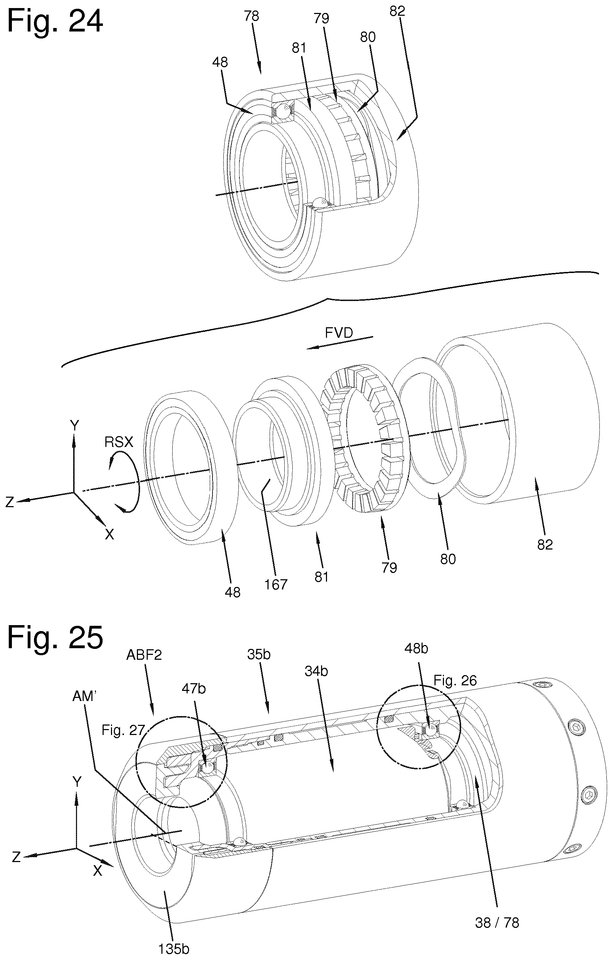

Während der Detailausbruch der perspektivischen Ansicht des Gesamtsystems 1' gemäß Fig. 23 hierzu eine mögliche alternative Stelleinheit 78 beschreibt, verdeutlicht Fig. 24 einen denkbaren detaillierten Aufbau dessen basierend auf einer intelligenten synchronisierten Anregung der in die Funktionseinheit 79 integrierbaren piezoelektrischen Aktorelemente, um eine auf dem Umfang wandernde Wellenform zu erzeugen, welche über die vom Federelement 80 wirkende Vorspannung FVD eine Rotationsbewegung RSX auf das Rotorelement 81 überträgt, das mittels eines Lagerelements 48b gegen eine äußere Geometrie 82 beweglich gelagert ist und über eine entsprechend ausgeführte Funktionsfläche 167 mit der zentralen Funktionseinheit 34 verbunden werden kann. Auf diese Weise kann eine optimale Leistungsdichte bei minimalem räumlichem Platzbedarf und gleichzeitig eine exakt steuerbare und wartungsfreie Stellbewegung erreicht werden.

Zur weiteren Optimierung der mechanischen Struktur ist außerdem denkbar, dass sowohl die Vorspannung als auch das zuvor mit 49 bzw. 1 8 bezeichnete induzierende Federelement durch den in Fig. 23 bzw. Fig. 24 dargestellten funktionalen Aufbau ersetzt werden kann, derart, dass mit der zur Übertragung der Rotationsbewegung RSX aufgeprägten Vorspannung FVD ein ebenso spielfreies Gesamtsystem, bei gleichzeitiger signifikanter Reduktion der mechanischen Komplexität, erreicht werden kann.

Vor dem Hintergrund einer möglichen anderweitigen Umsetzung des äußeren Strukturmoduls 35b ist in perspektivischer Darstellung gemäß Fig. 25 sowohl die alternative Ausführung einer Funktionseinheit ABF2 zur Einstellung des Abstandes der Objektiv-montagefläche 135b zur bildgebenden Oberfläche 107' der bildaufnehmenden Einheit 15' (bzw. zur Einstellung des Auflagemaßes) als auch ein möglicher weiterer mechanisch vorgespannter Aufbau ersichtlich.

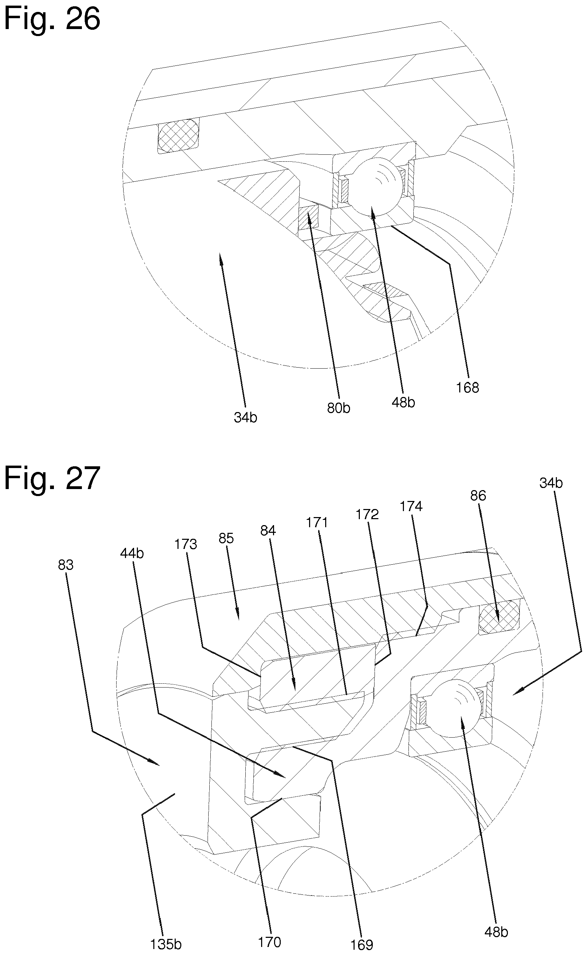

Bezugnehmend auf die perspektivische Darstellung nach Fig. 25 und die in Fig. 26 gezeigte Detailansicht einer weiteren denkbaren Ausgestaltung eines Lagerbereichs kann die Baugruppe 34b als eine im Allgemeinen eine auf einer entsprechenden Funktionsfläche 168 vorteilhaft geführten und über ein Federelement 80b zwischen zumindest zwei Lagerelementen 47b bzw. 48b vorgespannten rigiden sowohl zumindest eine Beobachtungstechnik als auch Systemelektronik aufnehmende zentrale Funktionseinheit ausgeführt werden.

Eine Objektivmontageeinheit 83 kann dazu gemäß der Detailansicht in Fig. 27 über eine Anschlussfläche 169 mit einer zumindest bereichsweise gehäuseartig umgebenden Struktur 44b kraft- und/oder formschlüssig verbunden und axial verstellt werden, wobei über eine als Zentrierung und Führung gestaltete Funktionsfläche 170 das Auflagemaß AM' (Fig. 25) präzise justiert werden kann.

Zum Schutz vor unbeabsichtigter Verstellung der bildgebenden Oberfläche 107` ist vorgesehen ein die Objektivmontageeinheit 83 zumindest teilweise umgebendes Stellelement 84 über eine kraft- und/oder formschlüssige Verbindung 171 gegen eine entsprechend ausgeführte Druckfläche 172 der äußeren Struktur 44b zu verspannen. Eine zusätzliche Sicherung der Funktionseinheit ABF2 zur Einstellung des Auflagemaßes vor unbeabsichtigter Dejustage oder Beschädigung kann über ein das Stellelement 84 zumindest teilweise umgebendes gegen zumindest eine Kontaktfläche 173 wirkendes Hüllelement 85 erreicht werden, das über eine entsprechend ausgeführte Wirkfläche 174 kraft- und oder formschlüssig und über zumindest ein Dichtelement 86 gegen äußere Einflüsse und Medien gesichert verbunden werden kann. Es versteht sich, dass neben der dargestellten Verschraubung auch hier alternative Ausführungen denkbar sind.

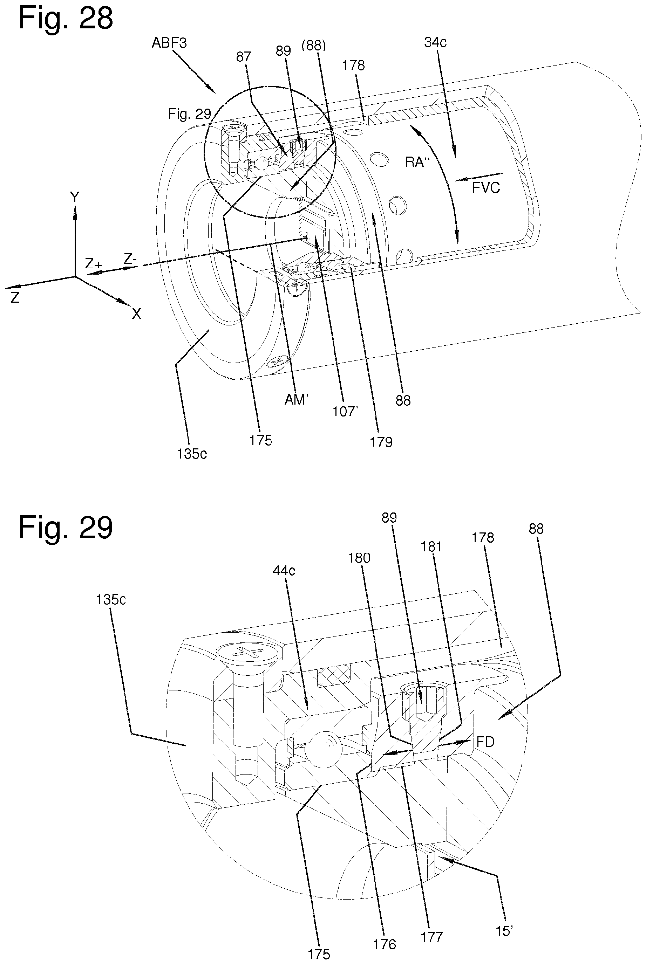

Die Ausführung einer weiteren alternativen Funktionseinheit ABF3 zum Einstellen des Abstandes der Objektivmontagefläche 135c zur bildgebenden Oberfläche 107` (bzw. zur Einstellung des Auflagemaßes) ist in der perspektivischen Darstellung nach Fig. 28 und einer vergrößerten Detailansicht gemäß Fig. 29 verdeutlicht. Durch die Ausbildung einer Führungsfläche 175 zumindest im Bereich der bildaufnehmenden Einheit 15' und des Stellelements 87 kann hierbei einerseits eine vorteilhafte Zentrierung und Führung der die bildaufnehmende Einheit 15' aufnehmenden, spielfrei gelagerten und mit der zumindest die Beobachtungstechnik versehenen zentralen Funktionseinheit 34c zusammenwirkenden Basisplatte 88 erreicht werden. Neben einem minimalen Platzbedarf ist andererseits nun eine präzise Einstellung des Auflagemaßes AM' über das Stellelement 87 möglich, derart, dass unter Wirkung der eingebrachten Vorspannung FVC, eine in Z-Richtung bzw. entlang der optischen Achse induzierte Verschiebung der Druckfläche 176 eine Abstandsänderung der bildgebenden Oberfläche 107` relativ zur Objektivmontagefläche 135c zur Folge hat. Dabei ist vorgesehen, dass die Ausführung des Stellelements 87 zumindest eine einstellbare kraft- und/oder formschlüssige Verbindung 177 - beispielsweise in Form einer Gewindeverbindung - im Bereich der Basisplatte 88 ermöglicht, so dass eine Transformation einer vom Benutzer in Richtung RA"eingebrachten Rotation des Stellelements 87 in eine Translation der Druckfläche 176 in Z-Richtung bzw. entlang der optischen Achse relativ zur Objektivmontagefläche 135c erreicht werden kann.

Ausgehend von einer Festlegung der Funktionseinheit ABF3 zur Einstellung des Auflagemaßes in der von zumindest bereichsweise umgebenden Struktur 44c zum zusätzlichen Schutz vor äußeren Einflüssen, Blockaden oder unerwünschter Verstellung kann dazu über durch eine entsprechende Öffnung 178 freigegebene Funktionsflächen 179 mit Hilfe entsprechender Bedienwerkzeuge (nicht dargestellt) eine Rotation des Stellelements 87 ermöglicht werden.

Zur sicheren Fixierung und dem Schutz der eingestellten Position des Stellelements 87 ist zumindest ein entsprechend ausgeführtes Klemmelement 89 vorgesehen, das beispielsweise über eine kraft- und/oder formschlüssige Verbindung in das Stellelement 87 eingetrieben werden kann, derart, dass mit den hieraus resultierenden auf entsprechend ausgeführte Kontaktflächen 180 bzw. 181 wirkende im Allgemeinen mit FD bezeichnete Kräfte eine steuerbare Blockade der kraft- und/oder formschlüssigen Verbindung zwischen Basisplatte 88 und Stellelement 87 erreicht wird. Die Gestaltung ist dabei vorteilhaft so ausgeführt, dass einerseits eine die Sicherung unterstützende Selbsthemmung des Klemmelements 89 erreicht wird und andererseits keine funktionsbeeinflussende plastische Verformung im Verbindungsbereich des Stellorgans auftritt.

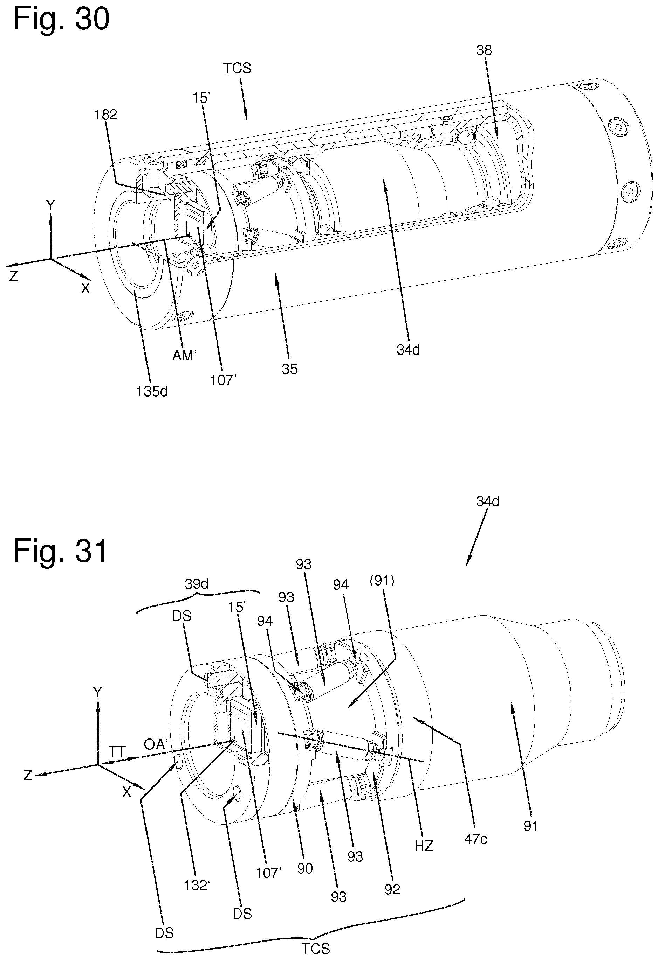

Der in Fig. 30 dargestellte Systemaufbau verdeutlicht einen in Betriebslage eingebauten alternativen Aufbau der zentralen Funktionseinheit 34d, welcher die Funktionseinheiten sowohl zur Einstellung des Auflagemaßes AM' als auch der Kompensation von Vibrationen und Verkippungen der bildaufnehmenden Einheit 15' relativ zur Objektivmontagefläche 135d ersetzt und in einer Funktionseinheit TCS vereint.

In der perspektivischen Darstellung der zentralen Funktionseinheit 34d gemäß Fig. 31 wird ein auf einer parallelkinematischen Mechanik basierender Aufbau ersichtlich, wodurch insbesondere eine gleichermaßen hochpräzise dreidimensionale Rotation der bildaufnehmenden Einheit 15' um das Zentrum 132' der bildgebenden Oberfläche 107` wie auch eine Translation TT relativ zur Objektivmontagefläche 135d (Fig. 30) ermöglicht wird. Mit zumindest einer im Bereich der Basis 90 der die bildgebende Oberfläche 107' enthaltenden Kopfbaugruppe 39d und an einem mit der gehäuseartigen Basisstruktur 91 der zentralen Funktionseinheit 34d rigide zusammenwirkenden mechanischen Abstützung 92 angreifenden und über ein Lagerelement 47c vorteilhaft gelagerten, in Form von zumindest über axiale Längenänderung auf jeweiligen Bewegungsachsen HZ wirkenden Stellelemente 93 kann eine funktionale Einheit zur weitgehend beliebigen Manipulation der räumlichen Orientierung der bildaufnehmenden Einheit 15' erreicht werden.

Die Stellelemente 93 sind dabei so zueinander angeordnet und gelagert, dass die beschriebene dreidimensionale Bewegung der Kopfbaugruppe 39d die von Sensoren DS überwachten relativen Differenzen der Abstände zur Referenzebene 182 (Fig. 30) zueinander minimiert werden bzw. im exakt korrigierten Zustand gleich Null sind und so hochfrequente Verkippungen zuverlässig kompensiert werden können. Dabei versteht sich, dass eine vorteilhafte Integration der zentralen Funktionseinheit 34d in das Gesamtsystem sowohl über die in Fig. 30 dargestellte Ausführung als auch eine der zuvor beschriebenen Umsetzungen denkbar ist.

Die exakte Einstellung des Auflagemaßes AM' (Fig. 30) wird hierbei über eine, aus weitgehend gleichmäßiger und vorteilhaft synchronisierter Aktivierung der Stellelemente 93, resultierende Translation TT der bildgebenden Oberfläche 107' erreicht. In vorteilhafter Ausführung ist dazu ebenfalls denkbar, dass zum Erreichen sowohl einer optimalen Positionierungsgenauigkeit als auch Steuergeschwindigkeit entsprechende Aktoren - beispielsweise auf Basis der Ausnutzung des piezoelektrischen Effektes - Verwendung finden. Mit der in Fig. 31 dargestellten zumindest die Basisstruktur 91 umgebenden Positionierung der Stellelemente 93 kann überdies eine optimale Ausnutzung des Bauraums erreicht werden. Ebenfalls ist denkbar, dass die Verbindung - beispielsweise zumindest über Kardangelenke 94 gemäß Fig. 31 - der jeweiligen Stellelemente 93 im Bereich der Basis 90 bzw. der mechanischen Abstützung 92 auch in vorteilhafter spielfreier Gestaltung durch Festkörpergelenke ausführbar ist.

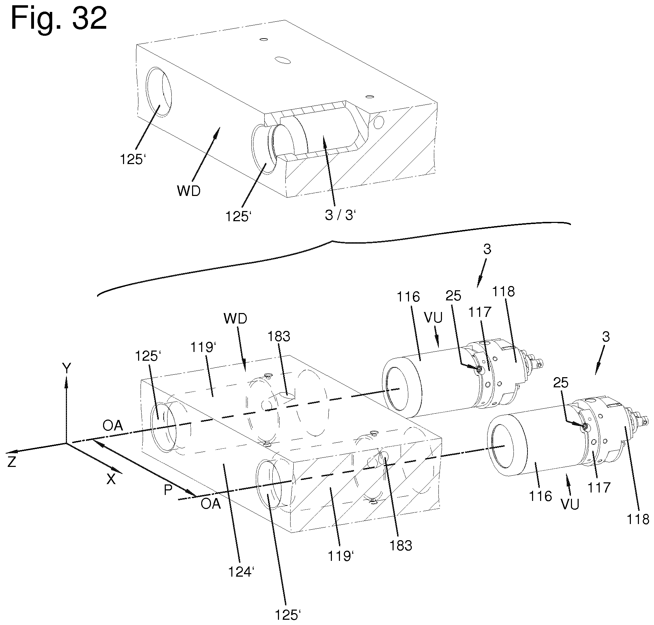

Wenngleich die äußere Systemgeometrie zuvor im Allgemeinen als zylindrische Form dargestellt und beschrieben wurde, versteht es sich, dass ebenso andere, weitgehend frei wählbare äußere Geometrien denkbar sind. So kann eine Adaption an beliebige Strukturen ermöglicht und das Gesamtsystem für einen Einbau in weitere Funktionseinheiten, Module oder Systeme erreicht werden, wie exemplarisch in Fig. 32 am Beispiel des Einbaus einer denkbaren Umsetzung des ersten Ausführungsbeispiels in eine zumindest dünnwandige weitgehend beliebige Haltegeometrie WD dargestellt ist.

Dazu ist vorgesehen, dass die Haltegeometrie WD, analog zur Kombination mit einem Schnittstellenelement 31 gemäß Fig. 10, mit einer entsprechend der äußeren Führungs- und Montageflächen 116 bis 118 weitgehend konform umgebend ausgeführten inneren Kontaktfläche, welche zumindest im Allgemeinen einer vorteilhaft einfachen Geometrie 119' entspricht, vorbereitet wird, derart, dass sowohl eine präzise ausgerichtete und zentrierte Montage ermöglicht als auch die mechanische Führung und Justage der Beobachtungseinheit VU auf der jeweiligen optischen Achse OA ermöglicht wird. Es ist dazu denkbar, die Funktionseinheit ABF zur Einstellung des Auflagemaßes zur Umsetzung der gewünschten Justagebewegung, sowohl über einen weitgehend beliebig ausgestalteten Zugang 183 anzusteuern, als auch über einen in das Antriebselement 27 integrierten Antrieb zugangslos durchzuführen. Abbildungssysteme - wie beispielsweise ein Objektiv - können sicher an einer entsprechend ausgeführten Montagefläche 124` - beispielsweise einer äußeren Wandungsgeometrie - im Bereich einer Augenöffnung 125' zuverlässig festgelegt werden. Bedingt durch die systeminhärente Skalierbarkeit der Funktionseinheiten können so, unter Gewährleistung maximaler Flexibilität und Modularität, hierbei weitgehend beliebige Kombinationen funktionaler Einheiten mit einer gegen äußere Einflüsse geschützten hohen Packungsdichte P integriert werden.

Neben der Bewegungserzeugung auf Basis eines (elektro-) magnetischen oder piezoelektrischen Wirkprinzips sind weitere Aktoren - beispielsweise fluid- oder druckluftgetriebene und konventionelle (wellen-) bzw. getriebebasierte (Schritt-)Motoren - ebenso denkbar wie eine Erweiterung weitgehend beliebiger funktionaler Einheiten zur Bewegungserzeugung mit entsprechenden elektronischen und/oder mechanischen Funktionseinheiten (z.B. Encoder) zur exakten Reproduktion von Stellbewegungen und/oder dem sicheren Anfahren von diskreten (gespeicherten) Positionen und Orientierungen. Zusätzlich ist denkbar, dass mit Hilfe einer Referenzsensorik - beispielsweise über einen zusätzlichen Sensor XS (Fig. 1) zum Orientierungssensor OS - die Steuerungspräzision der jeweils korrelierenden Aktorik steigerbar ist.

Es versteht sich, dass zum Aufbau einer vorgespannten Mechanik neben den beschriebenen Ausführungen sowohl alternative Federelemente wie beispielsweise Spiralfedern, Wellenfedern, Tellerfedern, Festkörperfedern oder Wasser-, Luft- und Öldruckaktivierte o.dgl. Vorspannung induzierende Funktionseinheiten - als auch Lagerungselemente - wie beispielsweise Wälzlager, magnetische Lager, Festkörperlagerungen o.dgl. Lager - denkbar sind.

Außerdem ist denkbar die funktionseinheit- und modulgrenzenübergreifenden (rotatorischen) Signalleitungen sowohl des Gesamtsystems nach außen als auch alternativ zur beschriebenen internen Übertragung mittels beschriebenem Bauteil SR (Fig. 1) entsprechend berührungslos, optisch, magnetisch oder funkgestützt - beispielsweise über eine entsprechende (Signalleitungs-)Funktionseinheit Wl - auszuführen.

Ebenso versteht es sich, dass der vollständig gegen äußere Einflüsse und Medien geschützter Systemaufbau sowohl elastomer- bzw. polymerbasiert als auch über metallische Dichtflächen erreicht werden kann. Entsprechende Dichtelemente können dabei ebenso mehrteilig ausgeführt sein. Darüber hinaus ist, z.B. zur Gewichtsreduktion, denkbar das Gesamtsystem zumindest bereichsweise ohne Dichtelemente auszuführen und die mechanische Struktur hierzu als eine rigide zumindest die innenliegenden Module und Funktionselemente teilweise umgebende Einheit vorzusehen. Insbesondere kann dabei die äußere Struktur beispielsweise sowohl die Steuerorgane eines angeschlossenen Objektivs über entsprechend ausgeführte Öffnungen freigeben und so eine manuelle Bedienung derer ermöglichen als auch einen Schutz der umgebenden Funktionselemente und Module vor äußeren Einflüssen und ungewollter Verstellung gewährleisten.

## Patentansprüche

1. Systemaufbau zur Bildaufnahme, -Stabilisierung und -korrektur, mit einem optischen Beobachtungsgerät, das im Bereich eines zylinderförmigen Gehäusekonzepts anzuordnen ist, wobei der Systemaufbau eine Beobachtungstechnik (3; 3') mit einer eine bildgebende Oberfläche (107; 107') umfassenden bildaufnehmenden Einheit (15; 15') hat, wobei die bildaufnehmende Einheit (15; 15') entlang einer optischen Achse (OA; OA') verschieblich und unter Wirkung einer von zumindest einem Federelement (29; 49; 80b) induzierten mechanischen Vorspannung (FV; FV; FVC) spielfrei gelagert ist und die Beobachtungstechnik (3; 3') mit zumindest einer Funktionseinheit (ABF; ABF'; ABF3; TCS) zur Einstellung des Auflagemaßes (AM; AM') zusammenwirkt, derart, dass durch eine axiale Verschiebung (ZA; ZA'; TT) der bildaufnehmenden Einheit (15; 15') entlang der optischen Achse (OA; OA') eine stufenlose Einstellbarkeit des Auflagemaßes (AM; AM') erreichbar ist, **dadurch gekennzeichnet, dass** der Systemaufbau zumindest ein adaptierbares zylinderförmiges Schnittstellenelement (31) zur Montage eines Abbildungsgerätes umfasst, das die zylinderförmige Beobachtungstechnik (3; 3') zumindest teilweise umgibt und in welchem die Beobachtungstechnik (3; 3') geführt gelagert ist, wobei das Schnittstellenelement (31) über eine innere Geometrie (123) verfügt, die den äußeren Führungs- und Montageflächen (116 bis 118) der Beobachtungstechnik (3, 3') entsprechend ausgebildet ist, und wobei sowohl die Führungs- und Montageflächen der Beobachtungstechnik (3, 3'), als auch die äußere Form des Schnittstellenelementes (31) gleichsinnig koaxial ausgerichtet und zentriert sind, um die Beobachtungstechnik (3, 3') mit der äußeren Führungsfläche (116) durch die weitgehend konform umgebend ausgeführte innere Geometrie (123) des Schnittstellenelementes (31) mechanisch zu führen und auf der optischen Achse (OA, OA') justierend verschiebbar zu lagern, und dass die Beobachtungstechnik (3) eine mechanische Basis (20) sowie eine die bildaufnehmende Einheit (15) aufnehmende Beobachtungseinheit (VU) umfasst, wobei die Beobachtungseinheit (VU) relativ zur mechanischen Basis (20) entlang der optischen Achse (OA) verschieblich und unter Wirkung der von dem Federelement (29) induzierten mechanischen Vorspannung (FV) spielfrei gelagert ist und die Bewegungsfreiheit der Beobachtungseinheit (VU) durch einen räumlich parallelen Versatz (E) einer Bewegungsachse (ZV) eines Stellglieds der Funktionseinheit (ABF) zur Einstellung des Auflagemaßes (AM) relativ zur optischen Achse (OA) auf eine Translation parallel zur optischen Achse (OA) beschränkt ist.

2. Systemaufbau nach Anspruch 1 , **dadurch gekennzeichnet, dass** die bildaufnehmende Einheit (15; 15') um die optische Achse (OA; OA') drehbar sowie unter Wirkung einer von zumindest einem Federelement (18; 49; 80) induzierten mechanischen Vorspannung (FV; FV; FVC; FVD) spielfrei gelagert ist und die Beobachtungstechnik (3; 3') mit einem Stellorgan (8; 38) oder einer Stelleinheit (78) zusammenwirkt, derart, dass die bildaufnehmende Einheit (15; 15') bei in beliebiger Lage gehaltenem Gesamtsystem durch Rotation um die optische Achse (OA; OA') auf eine jeweilige Aufnahmeposition ausrichtbar ist, wobei durch das Stellorgan (8; 38) oder die Stelleinheit (78) ein Schwenkwinkel (RS; RS'; RSX) von mehr als ±360° ausgeglichen werden kann.

3. Systemaufbau nach Anspruch 2, **dadurch gekennzeichnet, dass** das die zur spielfreien, drehbaren Lagerung der bildaufnehmenden Einheit (15; 15') benötigte mechanische Vorspannung (FV; FV; FVC; FVD) induzierende Federelement (18; 49; 80; 80b) sich um die optische Achse (OA; OA') in Umfangsrichtung vollumfänglich erstreckend ausgebildet ist.

4. Systemaufbau nach Anspruch 2 oder 3, **dadurch gekennzeichnet, dass** der Systemaufbau ein einziges Federelement (49) umfasst, welches eine mechanische Vorspannung (FV) zur spielfreien Lagerung der bildaufnehmenden Einheit (15') sowohl bezüglich ihrer Verschieblichkeit entlang der optischen Achse (OA') als auch bezüglich ihrer Drehbarkeit um die optische Achse (OA') induziert.

5. Systemaufbau nach einem der Ansprüche 1 bis 4, **gekennzeichnet durch** Ausführung entsprechender Funktionsflächen der Funktionseinheit (ABF; ABF'; ABF3; TCS) zur Einstellung des Auflagemaßes (AM; AM'), derart, dass ein unbeabsichtigtes Verstellen des Auflagemaßes (AM; AM') verhindert wird.

6. Systemaufbau nach Anspruch 5, **dadurch gekennzeichnet, dass** die Funktionseinheit (ABF) zur Einstellung des Auflagemaßes (AM) in die Beobachtungstechnik (3) integriert und zumindest teilweise relativ zur mechanischen Basis (20) festgelegt ist.

7. Systemaufbau nach einem der vorhergehenden Ansprüche, **dadurch gekennzeichnet, dass** eine vom Benutzer eingebrachte - beispielsweise rotatorische - Justagebewegung (RA; RA'; RA") mittels der Funktionseinheit (ABF; ABF'; ABF3) zur Einstellung des Auflagemaßes (AM; AM') in eine translatorische Verschiebung (ZA; ZA') der bildaufnehmenden Einheit (15; 15') entlang der optischen Achse (OA; OA') transformiert wird und somit eine Kalibrierung des Auflagemaßes (AM; AM') erreicht werden kann.

8. Systemaufbau nach einem der vorhergehenden Ansprüche, **dadurch gekennzeichnet, dass** das Gesamtsystem eine Funktionseinheit (1; 1') bildet, die aus mehreren im Benutzungszustand durch mechanische Vorspannung spielfrei verbundenen sowie auf vorbestimmbare Aufnahmepositionen ausrichtbaren Funktionsmodulen (2, 4, 5; 34, 35, 36) mit integrierter Beobachtungstechnik (3; 3') besteht, wobei in einem zentralen Modul der Funktionseinheit (1; 1') die bildaufnehmende Einheit (15; 15') steuerbar gelagert und in Relation zu einer systemfest im Bereich eines äußeren Strukturmoduls (5; 35) vorgesehenen Objektivmontagefläche (97; 135; 135b; 135c; 135d) zumindest axial einstellbar ist, derart, dass unabhängig von der in Betriebsstellung gebrachten Funktionseinheit (1; 1') die bildaufnehmende Einheit (15; 15') in ihrer jeweiligen Lage auf die jeweilige Aufnahmeposition ausrichtbar ist.

9. Systemaufbau nach Anspruch 8, **dadurch gekennzeichnet, dass** das Beobachtungsgerät mittels des zumindest je eines Stellorgans (8; 38) bzw. je einer Stelleinheit (72, 73) im Bereich des inneren Moduls (4) bzw. der zentralen Funktionseinheit (34) sowohl in seiner Lage zum Horizont als auch seinen jeweiligen Aufnahmeparametern einstellbar ist.

10. Systemaufbau nach einem der vorhergehenden Ansprüche, **dadurch gekennzeichnet, dass** der Systemaufbau zumindest einen mit dem Stellorgan (8; 38) oder mit der Stelleinheit (78) verbindbaren, integrierten Sensor (OS) zur Ausrichtung der Lage der bildaufnehmenden Einheit (15; 15') umfasst, wobei mittels eines Ausgangssignals des zumindest einen Sensors (OS) die Lage der bildaufnehmenden Einheit (15; 15') unmittelbar bedient bzw. gesteuert werden kann.

11. Systemaufbau nach einem der vorhergehenden Ansprüche, **dadurch gekennzeichnet, dass** die Beobachtungstechnik (3; 3') zumindest über eine mechanische Aufnahme (9) mit dem Stellorgan (8; 38) oder mit der Stelleinheit (78) zusammenwirkt, derart, dass das die bildaufnehmende Einheit (15; 15') als resultierende Funktionseinheit (2; 34) enthaltende Modul einen um zumindest die optische Achse (OA; OA') schwenkbaren und von der Objektivmontagefläche (97; 135; 135b; 135c; 135d) zumindest in Lage unabhängigen Teil des Gesamtsystems (1; 1') bildet.

12. Systemaufbau nach einem der vorhergehenden Ansprüche, **dadurch gekennzeichnet, dass** die Beobachtungstechnik (3; 3') mit dem zumindest einen adaptierbaren Schnittstellenelement (31) und einer äußeren Hüllstruktur (32) eine als vollständiges Beobachtungssystem (33) ausgebildete Funktionseinheit ausbildet.

13. Systemaufbau nach einem der vorhergehenden Ansprüche, **dadurch gekennzeichnet, dass** die die bildaufnehmende Einheit (15; 15') enthaltende Beobachtungstechnik (3; 3') über zumindest ein entsprechendes Federelement (18; 49) gegen zumindest die Objektivmontagefläche (97; 135, 135b, 135c, 135d) spielfrei gelagert ist.

14. Systemaufbau nach einem der vorhergehenden Ansprüche, **dadurch gekennzeichnet, dass** der Aufbau der elektronischen Komponenten der Funktionseinheit (1; 1') aus einer zumindest singulären gefalteten Systemplatine (SP) mit bereichsweise flexiblen Verbindungen (F1 bis FN) ausführbar ist.

15. Systemaufbau nach einem der vorhergehenden Ansprüche, **dadurch gekennzeichnet, dass** die Lagerung der bildaufnehmenden Einheit (15; 15') eine Funktionseinheit (TCS) zur Korrektur von Verkippungen relativ zur optischen Achse (OA; OA') hat.

16. Systemaufbau nach einem der vorhergehenden Ansprüche, **dadurch gekennzeichnet, dass** die insgesamt gehäuseförmige Hüllstruktur (4 bis 6; 35 bis 36) im Bereich einer der bildaufnehmenden Einheit (15; 15') zugeordneten Augenöffnung (98; 134) die Festlegung eines Objektivs (67) erlaubt.

17. Systemaufbau nach Anspruch 16, **dadurch gekennzeichnet, dass** zur Beleuchtung des aufzunehmenden Motivs an der gehäuseförmigen Hüllstruktur (4 bis 6; 35 bis 36) zumindest eine das Objektiv (67) zumindest bereichsweise umgebende Funktionseinheit (LM) zur Beleuchtung vorgesehen ist.

18. Systemaufbau nach einem der vorhergehenden Ansprüche, **dadurch gekennzeichnet, dass** in die durch den Systemaufbau gebildete Funktionseinheit (1; 1') eine ein Sender-Empfänger-System bildende Funksteuerung (WI) integriert ist, mittels der das Beobachtungsgerät und / oder weitere funktionale Einheiten bedienbar ist / sind.

19. Systemaufbau nach Anspruch 18, **dadurch gekennzeichnet, dass** die Sendeeinheit eine Verbindungsleitung zu zumindest vorzugsweise im Bereich der zentralen Funktionseinheit (2; 34) angeordneten Speicherteilen (IFD) aufweist, derart, dass auch bei unbegrenzten Rotationsbewegungen von mehr als 360° der bildaufnehmenden Einheit (15; 15') eine Informationsübertragung durchführbar ist.

20. Systemaufbau nach Anspruch 1, **dadurch gekennzeichnet, dass** die Funktionseinheit zur Einstellung des Auflagemaßes ein mit einer rotatorischen Justagebewegung (RA) beaufschlagbares Schneckengetriebe (27) hat, das relativ zur mechanischen Basis (20) festgelegt ist und mit einer verschieblichen Stelleinheit zur translatorischen Verschiebung (ZA) der die bildaufnehmende Einheit (15) aufnehmende Beobachtungseinheit (VU) zusammenwirkt, wobei eine Zahngeometrie (110) des Schneckengetriebes (27) mit einer Gegenzahlgeometrie (112) einer in der mechanischen Basis (20) gelagerten Stelleinheit (28) zur Übertragung der rotatorischen Justagebewegung (RA) über ein Gewinde (113) auf die durch das Federelement 29 über die Stelleinheit 28 gegen einen Anschlag (114) der mechanischen Basis (20) mit der Kraft FV vorgespannte Lagerung einer Druckplatte (23) der Beobachtungseinheit VU wirkt und so eine Verschiebung der bildgebenden Oberfläche (107) der bildaufnehmenden Einheit (15) auf der optischen Achse OA induziert, und wobei die Bewegungsachse (ZV) des Gewindes (113) relativ zur optischen Achse (OA) mit einem räumlich parallelen Versatz (E) angeordnet ist.

## Claims

1. System structure for image acquisition, stabilisation and correction, comprising an optical observation device to be arranged in the region of a cylindrical housing concept, the system structure having an observation technique (3; 3') with an image-receiving unit (15; 15') comprising an imaging surface (107; 107'), the image-receiving unit (15; 15') being displaceable along an optical axis (OA; OA') and being mounted free of play under the action of a mechanical preload (FV; FV; FVC) induced by at least one spring element (29; 49; 80b), and the observation technique (3; 3') co-operates with at least one functional unit (ABF; ABF'; ABF3; TCS) for adjusting the flange focal distance (AM; AM') in such a way that by means of an axial displacement (ZA; ZA'; TT) of the image-receiving unit (15; 15') along the optical axis (OA; OA') a stepless adjustability of the flange focal distance (AM; AM') can be achieved, **characterised in that** the system structure comprises at least one adaptable cylindrical interface element (31) for mounting an imaging device, which at least partially surrounds the cylindrical observation technique (3; 3') and in which the observation technique (3; 3') is mounted in a guided manner, wherein the interface element (31) has an inner geometry (123) which is designed to correspond to the outer guide and mounting surfaces (116 to 118) of the observation technique (3, 3'), and wherein both the guide and mounting surfaces of the observation technique (3, 3') and the outer shape of the interface element (31) are coaxially aligned and centred in the same direction in order to mechanically guide the observation technique (3, 3') with the outer guide surface (116) through the largely conformally surrounding inner geometry (123) of the interface element (31) and to adjustably displace it on the optical axis (OA, OA'), and **in that** the observation technique (3) comprises a mechanical base (20) and an observation unit (VU) receiving the image-receiving unit (15), wherein the observation unit (VU) is mounted displaceably relative to the mechanical base (20) along the optical axis (OA) and free of play under the action of the mechanical preload (FV) induced by the spring element (29), and the freedom of movement of the observation unit (VU) is limited to a translation parallel to the optical axis (OA) by a spatially parallel offset (E) of a movement axis (ZV) of an actuator of the functional unit (ABF) for setting the back focal distance (AM) relative to the optical axis (OA).

2. System structure according to claim 1 , **characterised in that** the image receiving unit (15; 15') is mounted rotatably about the optical axis (OA; OA') and free of play under the action of a mechanical preload (FV; FV; FVC; FVD) induced by at least one spring element (18; 49; 80), and the observation technique (3; 3') is connected to an actuator (8; 38) or a positioning unit (78) in such a way that the image-recording unit (15; 15') can be aligned to a respective recording position by rotation about the optical axis (OA; OA') when the overall system is held in any position, wherein a swivelling angle (RS; RS'; RSX) of more than ±360° can be compensated by the positioning element (8; 38) or the positioning unit (78).

3. System structure according to claim 2, **characterised in that** the spring element (18; 49; 80; 80b) inducing the mechanical pretension (FV; FV; FVC; FVD) required for the free of play and rotatable mounting of the image-receiving unit (15; 15') is designed to extend fully circumferentially around the optical axis (OA; OA').

4. System structure according to claim 2 or 3, **characterised in that** the system structure comprises a single spring element (49) which induces a mechanical preload (FV) for the free of play mounting of the image-receiving unit (15') both with respect to its displaceability along the optical axis (OA') and with respect to its rotatability about the optical axis (OA').

5. System structure according to one of claims 1 to 4, **characterised by** the design of corresponding functional surfaces of the functional unit (ABF; ABF'; ABF3; TCS) for adjusting the flange focal distance (AM; AM') in such a way that unintentional adjustment of the flange focal distance (AM; AM') is prevented.

6. System structure according to claim 5, **characterised in that** the functional unit (ABF) for setting the back focal distance (AM) is integrated into the monitoring technology (3) and is at least partially fixed relative to the mechanical base (20).

7. System structure according to one of the preceding claims, **characterised in that** an adjustment movement (RA; RA'; RA") - for example rotational - introduced by the user is transformed by means of the functional unit (ABF; ABF'; ABF3) for setting the back focus (AM; AM') into a translational displacement (ZA; ZA') of the image-receiving unit (15; 15') along the optical axis (OA; OA') and thus a calibration of the back focus (AM; AM') can be achieved.

8. System structure according to one of the preceding claims, **characterised in that** the overall system forms a functional unit (1; 1') which consists of several functional modules (2, 4, 5; 34, 35, 36) with integrated observation technology (3; 3') which are connected free of play in the state of use by mechanical prestressing and can be aligned to predeterminable recording positions, wherein in a central module of the functional unit (1; 1'), the image-receiving unit (15; 15') being controllably mounted and at least axially adjustable in relation to a lens mounting surface (97; 135; 135b; 135c; 135d) provided in the region of an outer structural module (5; 35) in a manner such that the image-receiving unit (15; 15') can be aligned in its respective position to the respective recording position independently of the functional unit (1; 1') brought into the operating position.

9. System structure according to claim 8, **characterised in that** the observation device can be adjusted both in its position relative to the horizon and in its respective recording parameters by means of at least one adjusting element (8; 38) or one adjusting unit (72, 73) in each case in the region of the inner module (4) or the central functional unit (34).

10. System structure according to one of the preceding claims, **characterised in that** the system structure comprises at least one integrated sensor (OS), which can be connected to the adjusting element (8; 38) or to the adjusting unit (78), for aligning the position of the image-receiving unit (15; 15'), wherein the position of the image-receiving unit (15; 15') can be directly operated or controlled by means of an output signal of the at least one sensor (OS).

11. System structure according to one of the preceding claims, **characterised in that** the observation technology (3; 3') interacts at least via a mechanical receptacle (9) with the actuating element (8; 38) or with the actuating unit (78) in such a way that the module comprising the image-recording unit (15; 15') as the resulting functional unit (2; 34) forms a part of the overall system (1; 1') which can be swivelled about at least the optical axis (OA; OA') and is independent of the lens mounting surface (97; 135; 135b; 135c; 135d) at least in position.

12. System structure according to one of the preceding claims, **characterised in that** the observation technology (3; 3') with the at least one adaptable interface element (31) and an outer envelope structure (32) forms a functional unit designed as a complete observation system (33).

13. System structure according to one of the preceding claims, **characterised in that** the observation technology (3; 3') containing the image-receiving unit (15; 15') is mounted free of play against at least the lens mounting surface (97; 135, 135b, 135c, 135d) via at least one corresponding spring element (18; 49).

14. System structure according to one of the preceding claims, **characterised in that** the structure of the electronic components of the functional unit (1; 1') can be implemented from an at least singular folded system board (SP) with flexible connections (F1 to FN) in some areas.

15. System structure according to one of the preceding claims, **characterised in that** the mounting of the image-receiving unit (15; 15') has a functional unit (TCS) for correcting tilting relative to the optical axis (OA; OA').

16. System structure according to one of the preceding claims, **characterised in that** the overall housing-shaped envelope structure (4 to 6; 35 to 36) in the region of an eye opening (98; 134) associated with the image-receiving unit (15; 15') permits the fixing of an objective lens (67).

17. System structure according to claim 16, **characterised in that** at least one functional unit (LM) surrounding the lens (67) at least in certain areas is provided for illuminating the subject to be recorded on the housing-shaped envelope structure (4 to 6; 35 to 36).

18. System structure according to one of the preceding claims, **characterised in that** a radio control (WI) forming a transmitter-receiver system is integrated into the functional unit (1; 1') formed by the system structure, by means of which the observation device and/or further functional units can be operated.

19. System structure according to claim 18, **characterised in that** the transmitter unit has a connecting line to storage parts (IFD) arranged at least preferably in the region of the central functional unit (2; 34), in such a way that information transmission can be carried out even with unlimited rotational movements of more than 360° of the image-receiving unit (15; 15').

20. System structure according to claim 1, **characterised in that** the functional unit for setting the flange focal distance has a worm gear (27) which can be subjected to a rotational adjustment movement (RA), is fixed relative to the mechanical base (20) and interacts with a displaceable adjusting unit for translational displacement (ZA) of the observation unit (VU) receiving the image-receiving unit (15), wherein a tooth geometry (110) of the worm gear (27) co-operates with a counter-number geometry (112) of an adjusting unit (28) mounted in the mechanical base (20) for transmitting the rotational adjustment movement (RA) via a thread (113) to the adjusting unit (28), which is pressed by the spring element (29) against a stop (113) via the spring element (29). the adjusting unit 28 against a stop (114) of the mechanical base (20) with the force FV and thus induces a displacement of the imaging surface (107) of the image-receiving unit (15) on the optical axis OA, and wherein the axis of movement (ZV) of the thread (113) is arranged with a spatially parallel offset (E) relative to the optical axis (OA).

## Revendications

1. Structure de système pour la prise de vue, la stabilisation et la correction d'images, comprenant un appareil d'observation optique à disposer au niveau d'un concept de boîtier de forme cylindrique,
dans laquelle
la structure de système comprend une technique d'observation (3 ; 3') avec une unité de prise de vue (15 ; 15') présentant une surface d'imagerie (107 ; 107'),
l'unité de prise de vue (15 ; 15') est montée de façon mobile en translation le long d'un axe optique (OA ; OA') et sans jeu sous l'effet d'une précontrainte mécanique (FV ; FV ; FVC) induite par au moins un élément à ressort (29 ; 49 ; 80b), et
la technique d'observation (3 ; 3') coopère avec au moins une unité fonctionnelle (ABF ; ABF' ; ABF3 ; TCS) destinée à régler le tirage mécanique (AM ; AM'), de telle sorte qu'une translation axiale (ZA ; ZA' ; TT) de l'unité de prise de vue (15 ; 15') le long de l'axe optique (OA ; OA') permet d'obtenir une possibilité de réglage en continu du tirage mécanique (AM ; AM'),
**caractérisée en ce que**
la structure de système comprend au moins un élément d'interface (31) de forme cylindrique, adaptable, destiné à monter un appareil d'imagerie, qui entoure au moins partiellement la technique d'observation (3 ; 3') de forme cylindrique et dans lequel la technique d'observation (3 ; 3') est montée de façon guidée, l'élément d'interface (31) disposant d'une géométrie intérieure (123) qui est réalisée de manière à correspondre aux surfaces extérieures de guidage et de montage (116 à 18) de la technique d'observation (3, 3'), et aussi bien les surfaces de guidage et de montage de la technique d'observation (3, 3') que la forme extérieure de l'élément d'interface (31) sont orientées coaxialement dans le même sens et sont centrées, afin de guider mécaniquement la technique d'observation (3, 3') avec la surface de guidage extérieure (116) grâce à la géométrie intérieure (123) de l'élément d'interface (31), réalisée de manière à l'entourer largement de manière conforme, et de la monter sur l'axe optique (OA, OA') de façon mobile en translation avec ajustement, et
**en ce que** la technique d'observation (3) comprend une base mécanique (20) ainsi qu'une unité d'observation (VU) recevant l'unité de prise de vue (15), l'unité d'observation (VU) étant montée de façon mobile en translation par rapport à la base mécanique (20) le long de l'axe optique (OA) et sans jeu sous l'effet de la précontrainte mécanique (FV) induite par l'élément à ressort (29), et la liberté de mouvement de l'unité d'observation (VU) étant limitée à une translation parallèle à l'axe optique (OA) par un décalage (E) parallèle dans l'espace d'un axe de mouvement (ZV) d'un organe de réglage de l'unité fonctionnelle (ABF), destinée à régler le tirage mécanique (AM), par rapport à l'axe optique (OA).

2. Structure de système selon la revendication 1,
**caractérisée en ce que** l'unité de prise de vue (15 ; 15') est montée de manière mobile en rotation autour de l'axe optique (OA ; OA') et sans jeu sous l'effet d'une précontrainte mécanique (FV ; FV ; FVC ; FVD) induite par au moins un élément à ressort (18 ; 49 ; 80), et la technique d'observation (3 ; 3') coopère avec un organe de réglage (8 ; 38) ou avec une unité de réglage (78), de telle sorte que l'unité de prise de vue (15 ; 15') peut être orientée vers une position de prise de vue respective par une rotation autour de l'axe optique (OA ; OA'), l'ensemble du système étant maintenu dans un emplacement quelconque, et un angle de pivotement (RS ; RS' ; RSX) de plus de ± 360° peut être compensé par l'organe de réglage (8 ; 38) ou par l'unité de réglage (78).

3. Structure de système selon la revendication 2,
**caractérisée en ce que** l'élément à ressort (18 ; 49 ; 80 ; 80b) induisant la précontrainte mécanique (FV ; FV ; FVC ; FVD) nécessaire pour le montage rotatif sans jeu de l'unité de prise de vue (15 ; 15') est réalisé de manière à s'étendre complètement autour de l'axe optique (OA ; OA') dans la direction circonférentielle.

4. Structure de système selon la revendication 2 ou 3,
**caractérisée en ce que** la structure de système comprend un seul élément à ressort (49) induisant une précontrainte mécanique (FV) pour le montage sans jeu de l'unité de prise de vue (15'), tant en ce qui concerne sa capacité de translation le long de l'axe optique (OA') que sa capacité de rotation autour de l'axe optique (OA').

5. Structure de système selon l'une des revendications 1 à 4,
**caractérisée par** la réalisation de surfaces fonctionnelles correspondantes de l'unité fonctionnelle (ABF ; ABF' ; ABF3 ; TCS) destinée à régler le tirage mécanique (AM ; AM'), de manière à empêcher un déréglage involontaire du tirage mécanique (AM ; AM').

6. Structure de système selon la revendication 5,
**caractérisée en ce que** l'unité fonctionnelle (ABF) destinée à régler le tirage mécanique (AM) est intégrée dans la technique d'observation (3) et est fixée au moins partiellement par rapport à la base mécanique (20).

7. Structure de système selon l'une des revendications précédentes,
**caractérisée en ce qu'**un mouvement d'ajustement (RA ; RA' ; RA") - par exemple rotatif - provoqué par l'utilisateur est transformé, au moyen de l'unité fonctionnelle (ABF ; ABF' ; ABF3) destinée à régler le tirage mécanique (AM ; AM'), en un déplacement en translation (ZA ; ZA') de l'unité de prise de vue (15 ; 15') le long de l'axe optique (OA ; OA'), de manière à permettre d'obtenir un calibrage du tirage mécanique (AM ; AM').

8. Structure de système selon l'une des revendications précédentes,
**caractérisée en ce que** l'ensemble du système constitue une unité fonctionnelle (1 ; 1') qui se compose de plusieurs modules fonctionnels (2, 4, 5 ; 34, 35, 36) avec une technique d'observation intégrée (3 ; 3'), qui, à l'état d'utilisation, sont reliés sans jeu par une précontrainte mécanique et qui peuvent être orientés vers des positions de prise de vue prédéfinissables, et
dans un module central de l'unité fonctionnelle (1 ; 1'), l'unité de prise de vue (15 ; 15') est montée de manière à pouvoir être commandée et peut être réglée au moins axialement par rapport à une surface de montage d'objectif (97 ; 135 ; 135b ; 135c ; 135d) prévue de manière fixe dans le système au niveau d'un module de structure extérieur (5 ; 35), de telle sorte que, indépendamment de l'unité fonctionnelle (1 ; 1 `) mise en position de fonctionnement, l'unité de prise de vue (15 ; 15'), dans son emplacement respectif, peut être orientée vers la position de prise de vue respective.

9. Structure de système selon la revendication 8,
**caractérisée en ce que** l'appareil d'observation peut être réglé au moyen dudit au moins un organe de réglage (8 ; 38) respectif ou de ladite au moins une unité de réglage (72, 73) respective au niveau du module intérieur (4) ou de l'unité fonctionnelle centrale (34), tant en ce qui concerne son emplacement par rapport à l'horizon que ses paramètres de prise de vue respectifs.

10. Structure de système selon l'une des revendications précédentes,
**caractérisée en ce que** la structure de système comprend au moins un capteur intégré (OS) pouvant être relié à l'organe de réglage (8 ; 38) ou à l'unité de réglage (78) et destiné à orienter l'emplacement de l'unité de prise de vue (15 ; 15'), l'emplacement de l'unité de prise de vue (15 ; 15') pouvant être contrôlé ou commandé directement au moyen d'un signal de sortie dudit au moins un capteur (OS).

11. Structure de système selon l'une des revendications précédentes,
**caractérisée en ce que** la technique d'observation (3 ; 3') coopère avec l'organe de réglage (8 ; 38) ou avec l'unité de réglage (78) au moins par l'intermédiaire d'un logement mécanique (9), de telle sorte que le module comprenant l'unité de prise de vue (15 ; 15') en tant qu'unité fonctionnelle résultante (2 ; 34) constitue une partie de l'ensemble du système (1 ; 1'), laquelle peut pivoter autour d'au moins l'axe optique (OA ; OA') et qui, au moins en ce qui concerne son emplacement, est indépendante de la surface de montage d'objectif (97 ; 135 ; 135b ; 135c ; 135d).

12. Structure de système selon l'une des revendications précédentes,
**caractérisée en ce que** la technique d'observation (3 ; 3') constitue, avec ledit au moins un élément d'interface adaptable (31) et avec une structure enveloppe extérieure (32), une unité fonctionnelle conçue comme un système d'observation complet (33).

13. Structure de système selon l'une des revendications précédentes,
**caractérisée en ce que** la technique d'observation (3 ; 3') comprenant l'unité de prise de vue (15 ; 15') est montée sans jeu contre au moins la surface de montage d'objectif (97 ; 135, 135b, 135c, 135d) par l'intermédiaire d'au moins un élément à ressort (18 ; 49) correspondant.

14. Structure de système selon l'une des revendications précédentes,
**caractérisée en ce que** la structure des composants électroniques de l'unité fonctionnelle (1 ; 1') peut être réalisée à partir d'une platine de système (SP) pliée au moins singulière avec des liaisons (F1 à FN) localement flexibles.

15. Structure de système selon l'une des revendications précédentes,
**caractérisée en ce que** la monture de l'unité de prise de vue (15 ; 15') comporte une unité fonctionnelle (TCS) destinée à corriger les défauts d'alignement angulaires par rapport à l'axe optique (OA ; OA').

16. Structure de système selon l'une des revendications précédentes,
**caractérisée en ce que** la structure enveloppe (4 à 6 ; 35 à 36) globalement en forme de boîtier permet la fixation d'un objectif (67) au niveau d'une ouverture d'oeil (98 ; 134) associée à l'unité de prise de vue (15 ; 15').

17. Structure de système selon la revendication 16,
**caractérisée en ce que**, pour éclairer le motif à enregistrer, il est prévu au moins une unité fonctionnelle (LM) d'éclairage, entourant au moins localement l'objectif (67), sur la structure enveloppe en forme de boîtier (4 à 6 ; 35 à 36).

18. Structure de système selon l'une des revendications précédentes,
**caractérisée en ce qu'**une radiocommande (WI) constituant un système émetteur-récepteur est intégrée dans l'unité fonctionnelle (1 ; 1') constituée par la structure de système, laquelle permet de contrôler l'appareil d'observation et/ou d'autres unités fonctionnelles.

19. Structure de système selon la revendication 18,
**caractérisée en ce que** l'unité d'émission présente une ligne de liaison vers des éléments de mémoire (IFD) disposés au moins de préférence au niveau de l'unité fonctionnelle centrale (2 ; 34), de telle sorte qu'une transmission d'informations est réalisable même en cas de mouvements de rotation illimités de plus de 360° de l'unité de prise de vue (15 ; 15').

20. Structure de système selon la revendication 1,
**caractérisée en ce que** l'unité fonctionnelle destinée à régler le tirage mécanique comprend un engrenage à vis sans fin (27) susceptible d'être soumis à un mouvement d'ajustement rotatif (RA), qui est fixé par rapport à la base mécanique (20) et qui coopère avec une unité de réglage déplaçable pour le déplacement en translation (ZA) de l'unité d'observation (VU) recevant l'unité de prise de vue (15), et
une géométrie de dent (110) de l'engrenage à vis sans fin (27) coopère avec une géométrie de dent antagoniste (112) d'une unité de réglage (28) montée dans la base mécanique (20) pour transmettre le mouvement d'ajustement rotatif (RA), par l'intermédiaire d'un filetage (113), à la monture d'une plaque de pression (23) de l'unité d'observation (VU), monture qui est précontrainte avec la force (FV) par l'élément à ressort (29) via l'unité de réglage (28) contre une butée (114) de la base mécanique (20), et induit ainsi une translation de la surface d'imagerie (107) de l'unité de prise de vue (15) sur l'axe optique OA, et
l'axe de mouvement (ZV) du filetage (113) est disposé avec un décalage (E) parallèle dans l'espace par rapport à l'axe optique (OA).
